# EUROPEAN PATENT APPLICATION

(11) **EP 4 841 926 A1**
(43) Date of publication of application: **18.11.2026**
(21) Application number: 25749198.5
(22) Date of filing: 31.01.2025
(51) Int. Cl.: H04L 5/00, H04W 72/21, H04W 72/232, H04B 7/0404

(54) **METHOD AND APPARATUS FOR TRANSMITTING UPLINK PHASE TRACKING REFERENCE SIGNAL IN WIRELESS COMMUNICATION SYSTEM**

(30) Priority: 02.02.2024 KR 20240016944
(71) Applicant: Samsung Electronics Co., Ltd., Suwon-si, Gyeonggi-do 16677 (KR)
(72) Inventor: LIM, Seongmok, Suwon-si, Gyeonggi-do 16677 (KR); ABEBE, Ameha Tsegaye, Suwon-si, Gyeonggi-do 16677 (KR); JANG, Youngrok, Suwon-si, Gyeonggi-do 16677 (KR); JI, Hyoungju, Suwon-si, Gyeonggi-do 16677 (KR)
(74) Representative: HGF
(86) International application number: PCT/KR2025/001597
(87) International publication number: WO 2025/165157

(57) **Abstract**

The present disclosure relates to a 5G or 6G communication system for supporting higher data transmission rates. Specifically, the disclosure relates to a method performed by a terminal in a wireless communication system, the method being capable of receiving, from a base station, first RRC message including information related to the number of PTRS ports and a second RRC message including configuration information for supporting three transmission antennas. The method can: receive, from the base station, a DCI message including information related to the association of PTRS ports and DMRS ports; and transmit a PTRS to the base station through a DMRS port corresponding to a PTRS port determined on the basis of the number of PTRS ports and the information related to the association of the PTRS ports and the DMRS ports.

## Description

### Technical Field

The present disclosure relates to operations of a terminal and a base station in a wireless communication system (or a mobile communication system). More particularly, the present disclosure relates to a method of performing uplink transmission by using a plurality of (for example, three) antennas in a wireless communication system, a method of configuring a reference signal for phase tracking when transmitting a reference signal for the operations, a method of transmitting the configured reference signal together with a scheduled uplink channel, and an apparatus for performing the methods.

### Background Art

5th generation (5G) mobile communication technology defines a wide frequency band to enable a fast transmission speed and a new service, and is implemented not only in a sub 6 gigahertz (GHz) frequency band, such as 3.5 GHz, but also in an above 6 GHz ultra-high frequency band referred to as millimeter wave (mmWave), such as 28 GHz and 39 GHz. Also, in 6th generation (6G) mobile communication technology also referred to as a beyond 5G system, implementation in a terahertz (THz) band (e.g., a 3 THz in 95 GHz) is considered to achieve a transmission speed 50 times faster than 5G mobile communication technology and an ultra-low latency time reduced to 1/10 of 5G mobile communication technology.

In early stages of 5G mobile communication technology, standardization has been performed on beamforming and massive multiple-input multiple-output (MIMO) for alleviating a pass loss of radio waves and increasing a transmission distance of radio waves in an ultra-high frequency band, numerology (an operation of a plurality of subcarrier intervals) and a dynamic operation of slot formats for efficient use of ultra-high frequency resources, initial access technology for supporting multi-bean transmission and wideband, definition and operation of a bandwidth part (BWP), a new channel coding method, such as polar code, for highly reliable transmission of control information and low density parity check (LDPC) code for massive data transmission, L2 pre-processing, and network slicing providing a dedicated network specialized for a specific service, targeting at service support and performance requirement satisfaction for enhanced mobile broadband (eMBB), ultra-reliable low-latency communications (URLLC), and massive machine-type communications (mMTC).

Currently, discussions are underway for improvement and performance enhancement of early 5G mobile communication technology in consideration of services that were to be supported by 5G mobile communication technology, and physical layer standardization is in progress for technologies, such as vehicle-to-everything (V2X) for assisting driving decision of an autonomous vehicle based on the location and state information transmitted by the vehicle and increasing user convenience, new radio unlicensed (NR-U) aimed at system operations that meet various regulatory requirements in an unlicensed band, NR user equipment (UE) power saving technology, non terrestrial network (NTN) that is direct UE-satellite communication for securing coverage in areas where communication with a terrestrial network is impossible, and positioning.

In addition, standardization of wireless interface architectures/protocols is being performed for industrial Internet of things (IIoT) for supporting new services through linkage and convergence with other industries, integrated access and backhaul (IAB) providing nodes for expanding network service areas by integrally supporting wireless backhaul links and access links, mobility enhancement including conditional handover and dual active protocol stack (DAPS) handover, and 2-step random access channel (RACH) for NR for simplifying random access procedures, and standardization of system architectures/services is also being performed for 5G baseline architectures (e.g., service-based architectures and service-based interfaces) for grafting network functions virtualization (NFV) onto software-defined network (SDN) technology, and mobile edge computing (MEC) for receiving services based on locations of UEs.

When such a 5G mobile communication system is commercialized, connected devices that have been explosively increased may be connected to a communication network and accordingly, it is anticipated that functions and performance of the 5G mobile communication system need to be reinforced and the connected devices need to be integrally operated. To this end, new research is to be conducted on extended reality (XR) for efficiently supporting augmented reality and virtual reality, 5G performance improvement and complexity reduction utilizing artificial intelligence (AI) and machine learning (ML), Al service support, metaverse service support, and drone communication.

Such development of a 5G mobile communication system may serve as the basis for development of not only multi-antenna transmission technology, such as new waveform, full dimensional (FD)-MIMO, array antenna, and large scale antenna, for coverage securement in THz band of 6G mobile communication technology, higherdimensional space multiplexing technology using metamaterial-based lens and antenna and orbital angular momentum (OAM) for improving coverage of a THz band signal, and reconfigurable intelligent surface (RIS) technology, but also full duplex technology for improving frequency efficiency and enhancing a system network of 6G mobile communication technology, Al-based communication technology that uses a satellite and Al from a design stage and realizes system optimization by internalizing end-to-end Al support function, and next-generation distributed computing technology that realizes a service with complexity exceeding limits of UE computing capability by using ultra-high performance communication and computing resources.

With the development of communication systems, research is being conducted on uplink transmission and reception processes using a plurality of panels, and in particular, there is an increasing demand for embodying simultaneous uplink transmission using a plurality of panels.

### Disclosure of Invention

### Technical Problem

Various embodiments of the present disclosure are intended to provide an apparatus and method capable of effectively providing a service in a mobile communication system. Various embodiments of the present disclosure are intended to provide a specific method of configuring a phase tracking reference signal for simultaneously transmitting a plurality of uplink channels by using a plurality of panels in a wireless communication system and transmitting the phase tracking reference signal together when transmitting the uplink channels.

### Solution to Problem

According to various embodiments of the present disclosure, an apparatus and method capable of effectively providing a service in a mobile communication system may be provided.

According to various embodiments of the present disclosure, a method of configuring a plurality of uplink channels together with a phase tracking reference signal and simultaneously transmitting the plurality of uplink channels through a plurality of panels in a wireless communication system, and an apparatus for performing the same may be provided.

According to an embodiment of the present disclosure, provided is a method performed by a terminal in a wireless communication system. The method may include receiving, from a base station, a first radio resource control (RRC) message including information related to a number of phase tracking reference signal (PTRS) ports and a second RRC message including configuration information for supporting three transmission antennas. The method may include receiving, from the base station, a downlink control information (DCI) message including information related to an association between the PTRS ports and demodulation reference signal (DMRS) ports. The method may include transmitting, to the base station, a PTRS through a DMRS port corresponding to a PTRS port that is determined based on the number of PTRS ports and the information related to the association between the PTRS ports and the DMRS ports.

According to an embodiment of the present disclosure, provided is a base station for performing communication in a wireless communication system, the terminal including a transceiver and at least one processor coupled to the transceiver. The at least one processor may be configured to transmit, to the terminal, a first radio resource control (RRC) message including information related to a number of phase tracking reference signal (PTRS) ports and a second RRC message including configuration information for supporting three transmission antennas. The at least one processor may be configured to transmit, to the terminal, a downlink control information (DCI) message including information related to an association between the PTRS ports and demodulation reference signal (DMRS) ports. The at least one processor may be configured to receive, from the terminal, a PTRS through a DMRS port corresponding to a PTRS port that is determined based on the number of PTRS ports and the information related to the association between the PTRS ports and the DMRS ports.

### Brief Description of Drawings

FIG. 1 is a diagram illustrating an example of a physical uplink shared channel (PUSCH) repetitive transmission type B in a wireless communication system, according to an embodiment of the present disclosure.
FIG. 2 is a diagram illustrating a method of allocating a comb offset and a cyclic shift during sounding reference signal (SRS) transmission, according to an embodiment of the present disclosure.
FIG. 3 is a diagram illustrating a structure of a terminal in a wireless communication system, according to an embodiment of the present disclosure.
FIG. 4 is a diagram illustrating a structure of a base station in a wireless communication system, according to an embodiment of the present disclosure.

### Mode for the Invention

Hereinafter, embodiments of the present disclosure will be described with reference to accompanying drawings.

In describing the embodiments, descriptions of technical contents that are well known in the technical field to which the present disclosure pertains and that are not directly related to the present disclosure will be omitted. By omitting the unnecessary description, the gist of the present disclosure may be more clearly conveyed without obscuring the subject matter.

For the same reasons, some elements are exaggerated, omitted, or schematically illustrated in drawings. Also, the size of each element does not completely reflect the actual size. In the drawings, like elements are denoted by like reference numerals.

The advantages and features of the present disclosure and methods of achieving the same will become apparent with reference to embodiments described in detail below with reference to the accompanying drawings. In this regard, the embodiments of the present disclosure may have different forms and should not be construed as being limited to the descriptions set forth herein. Rather, these embodiments are provided so that the present disclosure will be thorough and complete and will fully convey the concept of the present disclosure to one of ordinary skill in the art, and the present disclosure will only be defined by the appended claims. Throughout the specification, like reference numerals denote like elements. While describing the present disclosure, detailed description of related well-known functions or configurations may be omitted when it is deemed that they may unnecessarily obscure the essence of the present disclosure. Also, terms used below are defined in consideration of functions in the present disclosure, and may have different meanings according to an intention of a user or operator, customs, or the like. Therefore, the terms used herein have to be defined based on the meaning of the terms together with the description throughout the specification.

It will be understood that blocks in flowcharts or combinations of the flowcharts may be performed by computer program instructions. Because these computer program instructions may be loaded into a processor of a general-purpose computer, special purpose computer, or other programmable data processing apparatus, the instructions, which are executed via the processor of the computer or other programmable data processing apparatus generate means for implementing the functions specified in the flowchart block(s). The computer program instructions may be stored in a computer-executable or computer-readable memory capable of directing a computer or another programmable data processing apparatus to implement a function in a particular manner, and thus the instructions stored in the computer-executable or computer-readable memory may also be capable of producing manufacturing items containing instruction units for performing the functions described in the flowchart block(s). The computer program instructions may also be loaded into a computer or another programmable data processing apparatus, and thus, instructions for operating the computer or the other programmable data processing apparatus by generating a computer-executed process when a series of operations are performed in the computer or the other programmable data processing apparatus may provide operations for performing the functions described in the flowchart block(s).

In addition, each block may represent a portion of a module, segment, or code that includes one or more executable instructions for executing specified logical function(s). It should also be noted that in some alternative implementations, functions mentioned in blocks may occur out of order. For example, two blocks illustrated successively may actually be executed substantially concurrently, or the blocks may sometimes be performed in a reverse order according to the corresponding function.

As used herein, the term "unit" or "-er/or" denotes a software component or a hardware component such as a field-programmable gate array (FPGA) or an applicationspecific integrated circuit (ASIC), and performs a certain function. However, the term "unit" or "-er/or" is not limited to software or hardware. The "unit" or "-er/or" may be formed so as to be in an addressable storage medium, or may be formed so as to operate one or more processors. Thus, for example, the term "unit" or "-er/or" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. A function provided by the components and "units" or "-ers/ors" may be associated with the smaller number of components and "units" or "-ers/ors", or may be divided into additional components and "units" "-ers/ors". Furthermore, the components and "units" or "-ers/ors" may be embodied to reproduce one or more central processing units (CPUs) in a device or security multimedia card. Also, in an embodiment, the "unit" or "-er/or" may include at least one processor.

Wireless communication systems have been developed from wireless communication systems providing voice centered services in the early stage toward broadband wireless communication systems providing high-speed, high-quality packet data services, like communication standards of high speed packet access (HSPA), long term evolution (LTE or evolved universal terrestrial radio access (E-UTRA)), LTE-advanced (LTE-A), and LTE-Pro of the 3GPP, high rate packet data (HRPD) and ultra mobile broadband (UMB) of 3GPP2, IEEE 802.16e or the like.

As a representative example of the broadband wireless communication system, an LTE system has adopted an orthogonal frequency division multiplexing (OFDM) scheme in a downlink (DL) and has adopted a single carrier frequency division multiple access (SC-FDMA) scheme in an uplink (UL). The UL refers to a radio link through which a terminal (a UE or a mobile station (MS)) transmits data or a control signal to a base station (BS) (e.g., eNode B), and the DL refers to a radio link through which a BS transmits data or a control signal to a terminal. In such a multiple access scheme, data or control information of each user is classified by generally allocating and managing the data or control information such that time-frequency resources for transmitting data or control information for each user do not overlap each other, that is, such that orthogonality is established.

As a future communication system after the LTE system, that is, a 5G communication system, has to be able to freely reflect various requirements of a user and a service provider, and thus, services satisfying various requirements at the same time need to be supported. The services considered for the 5G communication system include enhanced mobile broadband (eMBB), massive machine type communication (mMTC), ultra reliability low latency communication (hereinafter, URLLC), etc.

The eMBB aims to provide a higher data rate than a data rate supported by the LTE, LTE-A, or LTE-Pro system. For example, in the 5G communication system, the eMBB should be able to provide a peak data rate of 20 Gbps in a downlink and a peak data rate of 10 Gbps in an uplink from the viewpoint of one base station. In addition, the 5G communication system needs to provide an increased user perceived data rate of the terminal simultaneously with providing the peak data rate. In order to satisfy such requirements, improvement of various transmitting/receiving technologies including a further improved multiple-input and multiple-output (MIMO) transmission technology may be demanded. In addition, signals are transmitted using a transmission bandwidth of up to 20 MHz in a 2 GHz band used by the current LTE system, but the 5G communication system uses a bandwidth wider than 20 MHz in a frequency band of 3 to 6 GHz or more than 6 GHz, thereby satisfying a data rate required in the 5G communication system.

At the same time, the mMTC is being considered to support application services such as Internet of things (IoT) in the 5G communication system. The mMTC is required for an access support of a large-scale terminal in a cell, coverage enhancement of a terminal, improved battery time, and cost reduction of a terminal in order to efficiently provide the loT. The loT needs to be able to support a large number of terminals (e.g., 1,000,000 terminals/km²) in a cell because it is attached to various sensors and various devices to provide communication functions. In addition, the terminals supporting the mMTC are more likely to be positioned in shaded areas not covered by a cell, such as the underground of a building due to nature of services, and thus, the terminal may require a wider coverage than other services provided by the 5G communication system. The terminals that support the mMTC should be configured as inexpensive terminals and require very long battery lifetime, such as 10 to 15 years, because it is difficult to frequently replace batteries of the terminals.

Lastly, the URLLC is a cellular-based wireless communication system used for a specific purpose (mission-critical). For example, a service used in remote control for a robot or machinery, industrial automation, unmanned aerial vehicle, remote health care, or emergency alert may be considered. Accordingly, communication provided by the URLLC should provide very low latency and very high reliability. For example, a service supporting the URLLC should satisfy air interface latency smaller than 0.5 milliseconds and at the same time, has a packet error rate of 10⁻⁵ or less. Accordingly, for URLLC-supportive services, the 5G communication system may be required to provide a transmit time interval (TTI) shorter than those for other services while securing reliable communication links by allocating a broad resource in a frequency band.

The three services, that is, eMBB, URLLC, and mMTC, of the 5G system may be multiplexed in one system and may be transmitted. In this case, the services may use different transmission and reception methods and transmission and reception parameters in order to meet their different requirements. Obviously, the 5G system are not limited by the above three services.

Hereinafter, a base station is an entity that allocates resources to a terminal, and may be at least one of a gNode B (gNB), an eNode B (eNB), a Node B (NB), a base station (BS), a wireless access unit, a BS controller, or a node on a network. Examples of a terminal may include user equipment (UE), a mobile station (MS), a cellular phone, a smartphone, a computer, and a multimedia system capable of performing a communication function. In the present disclosure, a downlink (DL) is a wireless transmission path of a signal transmitted from a base station to a terminal, and an uplink (UL) is a wireless transmission path of a signal transmitted from a terminal to a base station. Also, hereinbelow, a long-term evolution (LTE) or long-term evolution advanced (LTE-A) system may be described as an example, but an embodiment of the present disclosure may also be applied to other communication systems having a similar technical background or channel form. An example of the other communication may include a 5G mobile communication technology (5G or new radio (NR)) developed after LTE-A, and hereinafter, 5G may have a concept including existing LTE, LTE-A, and another similar service. Also, it will be understood by one of ordinary skill in the art that the present disclosure may be applied to other communication systems through some modifications without departing from the scope of the present disclosure.

Hereinafter, a/b may be understood as at least one of a or b.

### [PDCCH: Regarding DCI]

Next, downlink control information (DCI) in a 5th generation (5G) system will be described in detail.

In the 5G system, scheduling information for uplink data (or physical uplink shared channel (PUSCH)) or downlink data (or physical downlink shared channel (PDSCH)) is transmitted from the base station to a terminal via DCI. The terminal may monitor a fallback DCI format and a non-fallback DCI format for the PUSCH or PDSCH. The fallback DCI format may include a fixed field pre-defined between the base station and the terminal, and the non-fallback DCI format may include a configurable field.

The DCI may be transmitted through a physical downlink control channel (PDCCH) through channel coding and modulating processes. A cyclic redundancy check (CRC) is attached to a DCI message payload, and the CRC may be scrambled to a radio network temporary identifier (RNTI) corresponding to an identity of the terminal. Different RNTIs may be used depending on a purpose of a DCI message, for example, terminal (UE)-specific data transmission, a power control command, or a random access response. In other words, the RNTI is not explicitly transmitted, but is transmitted by being included in a CRC calculation process. Upon receiving the DCI message transmitted on the PDCCH, the terminal may check the CRC by using an allocated RNTI, and when a result of checking the CRC is correct, the terminal may determine that the corresponding message is transmitted to the terminal.

For example, the DCI scheduling the PDSCH for system information (SI) may be scrambled with an SI-RNTI. The DCI scheduling the PDSCH for a random access response (RAR) message may be scrambled with an RA-RNTI. The DCI scheduling the PDSCH for a paging message may be scrambled with a P-RNTI. The DCI notifying a slot format indicator (SFI) may be scrambled with an SFI-RNTI. The DCI notifying transmit power control (TPC) may be scrambled with a TPC-RNTI. The DCI for scheduling a terminal-specific PDSCH or PUSCH may be scrambled with a cell RNTI (C-RNTI).

A DCI format 0_0 may be used as fallback DCI for scheduling the PUSCH and at this time, the CRC may be scrambled with the C-RNTI. The DCI format 0_0 of which the CRC is scrambled with the C-RNTI may include pieces of information as below.

**[Table 1]**

| |
|---|
| -Identifier for DCI formats - [1] bit |
| -Frequency domain resource assignment - $\left[\left⌈{log}_{2}\left({N}_{RB}^{UL , BWP}\left({N}_{RB}^{UL , BWP}+1\right)/2\right)\right⌉\right]$ bits |
| -Time domain resource assignment - X bits |
| -Frequency hopping flag - 1 bit. |
| -Modulation and coding scheme - 5 bits |
| -New data indicator - 1 bit |
| -Redundancy version - 2 bits |
| -HARQ process number - 4 bits |
| -TPC command for scheduled - [2] bits |
| -UL/SUL indicator - 0 or 1 bit |

A DCI format 0_1 may be used as non-fallback DCI for scheduling the PUSCH and at this time, the CRC may be scrambled with the C-RNTI. The DCI format 0_1 of which the CRC is scrambled with the C-RNTI may include pieces of information as below.

**[Table 2]**

| |
|---|
| -Carrier indicator - 0 or 3 bits |
| -UL/SUL indicator - 0 or 1 bit |
| -Identifier for DCI formats - [1] bits |
| -Bandwidth part indicator - 0, 1 or 2 bits |
| -Frequency domain resource assignment |
| For resource allocation type 0, $\left⌈{N}_{RB}^{UL , BWP}/P\right⌉$ bits |
| For resource allocation type 1, $\left⌈{log}_{2}\left({N}_{RB}^{UL , BWP}\left({N}_{RB}^{UL . BWP}+1\right)/2\right)\right⌉$ bits |
| -Time domain resource assignment - 1, 2, 3, or 4 bits |
| -VRB-to-PRB mapping - 0 or 1 bit, only for resource allocation type 1. |
| 0 bit if only resource allocation type 0 is configured; |
| 1 bit otherwise. |
| -Frequency hopping flag - 0 or 1 bit, only for resource allocation type 1. |
| 0 bit if only resource allocation type 0 is configured; |
| 1 bit otherwise. |
| -Modulation and coding scheme - 5 bits |
| -New data indicator - 1 bit |
| -Redundancy version - 2 bits |
| -HARQ process number - 4 bits |
| -1st downlink assignment index- 1 or 2 bits |
| 1 bit for semi-static HARQ-ACK codebook; |
| 2 bits for dynamic HARQ-ACK codebook with single HARQ-ACK codebook. |
| -2nd downlink assignment index - 0 or 2 bits |
| 2 bits for dynamic HARQ-ACK codebook with two HARQ-ACK subcodebooks; |
| 0 bit otherwise. |
| -TPC command for scheduled PUSCH - 2 bits |
| - SRS resource indicator - $\left⌈{log}_{2}\left({\sum }_{k = 1}^{{L}_{max}} \left(\begin{matrix}{N}_{SRS} \\ k\end{matrix}\right)\right)\right⌉$ or $\left⌈{log}_{2}\left({N}_{SRS}\right)\right⌉$ bits $\left⌈{log}_{2}\left({\sum }_{k = 1}^{{L}_{max}} \left(\begin{matrix}{N}_{SRS} \\ k\end{matrix}\right)\right)\right⌉$ bits for non-codebook based PUSCH transmission; $\left⌈{log}_{2}\left({N}_{SRS}\right)\right⌉$ |
| bits for codebook based PUSCH transmission. |
| -Precoding information and number of layers-up to 6 bits |
| -Antenna ports- up to 5 bits |
| -SRS request - 2 bits |
| -CSI request - 0, 1, 2, 3, 4, 5, or 6 bits |
| - CBG transmission information - 0, 2, 4, 6, or 8 bits |
| -PTRS-DMRS association - 0 or 2 bits. |
| -beta_offset indicator - 0 or 2 bits |
| -DMRS sequence initialization - 0 or 1 bit |

A DCI format 1_0 may be used as fallback DCI for scheduling the PDSCH and at this time, the CRC may be scrambled with the C-RNTI. The DCI format 1_0 of which the CRC is scrambled with the C-RNTI may include pieces of information as below.

**[Table 3]**

| |
|---|
| -Identifier for DCI formats - [1] bit |
| -Frequency domain resource assignment - $\left[\left⌈{log}_{2}\left({N}_{RB}^{DL , BWP}\left({N}_{RB}^{DL , BWP}+1\right)/2\right)\right⌉\right]$ bits |
| -Time domain resource assignment - X bits |
| -VRB-to-PRB mapping - 1 bit. |
| -Modulation and coding scheme - 5 bits |
| -New data indicator - 1 bit |
| -Redundancy version - 2 bits |
| -HARQ process number - 4 bits |
| -Downlink assignment index - 2 bits |
| -TPC command for scheduled PUCCH - [2] bits |
| -PUCCH resource indicator - 3 bits |
| -PDSCH-to-HARQ feedback timing indicator - [3] bits |

A DCI format 1_1 may be used as non-fallback DCI for scheduling the PDSCH and at this time, the CRC may be scrambled with the C-RNTI. The DCI format 1_1 of which the CRC is scrambled with the C-RNTI may include pieces of information as below.

**[Table 4]**

| |
|---|
| -Carrier indicator 0 or 3 bits |
| -Identifier for DCI formats - [1] bits |
| -Bandwidth part indicator - 0, 1 or 2 bits |
| -Frequency domain resource assignment |
| DLBWP For resource allocation type 0, $\left⌈{N}_{RB}^{DL , BWP}/P\right⌉$ bits |
| For resource allocation type 1, $\left⌈{log}_{2}\left({N}_{RB}^{DL , BWP}\left({N}_{RB}^{DL , BWP}+1\right)/2\right)\right⌉$ bits |
| -Time domain resource assignment -1, 2, 3, or 4 bits |
| -VRB-to-PRB mapping - 0 or 1 bit, only for resource allocation type 1. |
| 0 bit if only resource allocation type 0 is configured; |
| 1 bit otherwise. |
| -PRB bundling size indicator - 0 or 1 bit |
| -Rate matching indicator - 0, 1, or 2 bits |
| -ZP CSI-RS trigger - 0, 1, or 2 bits |
| For transport block 1 |
| -Modulation and coding scheme - 5 bits |
| -New data indicator - 1 bit |
| -Redundancy version - 2 bits |
| For transport block 2: |
| -Modulation and coding scheme - 5 bits |
| -New data indicator - 1 bit |
| -Redundancy version - 2 bits |
| -HARQ process number - 4 bits |
| -Downlink assignment index - 0 or 2 or 4 bits |
| -TPC command for scheduled PUCCH - 2 bits |
| -PUCCH resource indicator - 3 bits |
| - PDSCH-to-HARQ_feedback timing indicator - 3 bits |
| -Antenna ports - 4, 5 or 6 bits |
| - Transmission configuration indication - 0 or 3 bits |
| -SRS request - 2 bits |
| - CBG transmission information - 0, 2, 4, 6, or 8 bits |
| - CBG flushing out information - 0 or 1 bit |
| -DMRS sequence initialization - 1 bit |

### [PUSCH: Regarding Transmission Scheme]

Next, a scheduling scheme of PUSCH transmission will be described. The PUSCH transmission may be dynamically scheduled by UL grant in DCI or may operate by configured grant Type 1 or Type 2. A dynamic scheduling indication regarding the PUSCH transmission is enabled by a DCI format 0_0 or 0_1.

The configured grant Type 1 PUSCH transmission may be quasi-statically configured through reception of configuredGrantConfig including rrc-ConfiguredUplinkGrant of Table 5 via higher signaling, without receiving the UL grant in the DCI. The configured grant Type 2 PUSCH transmission may be semi-persistently scheduled by the UL grant in the DCI after reception of configuredGrantConfig not including rrc-ConfiguredUplinkGrant of Table 5, through higher layer signaling. When the PUSCH transmission operates by configured grant, parameters applied to the PUSCH transmission are applied through configuredGrantConfig that is higher signaling of Table 5, except for dataScramblingldentityPUSCH, txConfig, codebookSubset, maxRank, and scaling of UCI-OnPUSCH provided via pusch-Config of Table 6 that is higher signaling. When the terminal is provided with transformPrecoder in configuredGrantConfig that is higher signaling of Table 5, the terminal applies tp-pi2BPSK in pusch-Config of Table 5 with respect to the PUSCH transmission operating by the configured grant.

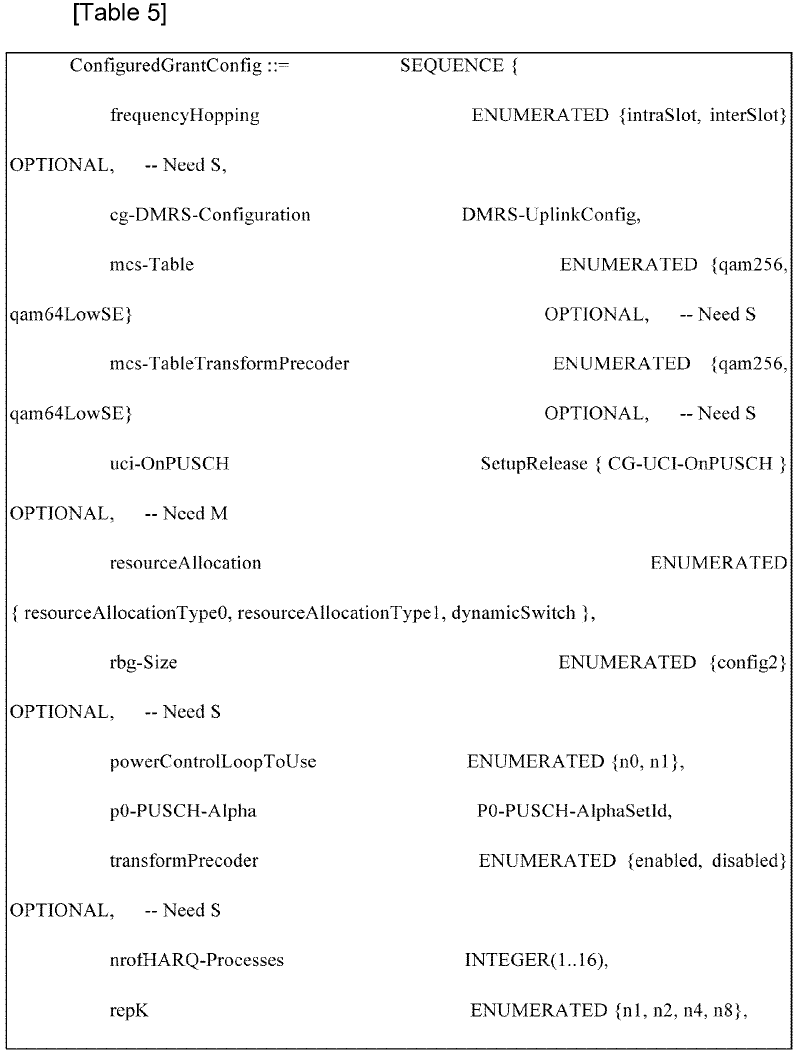

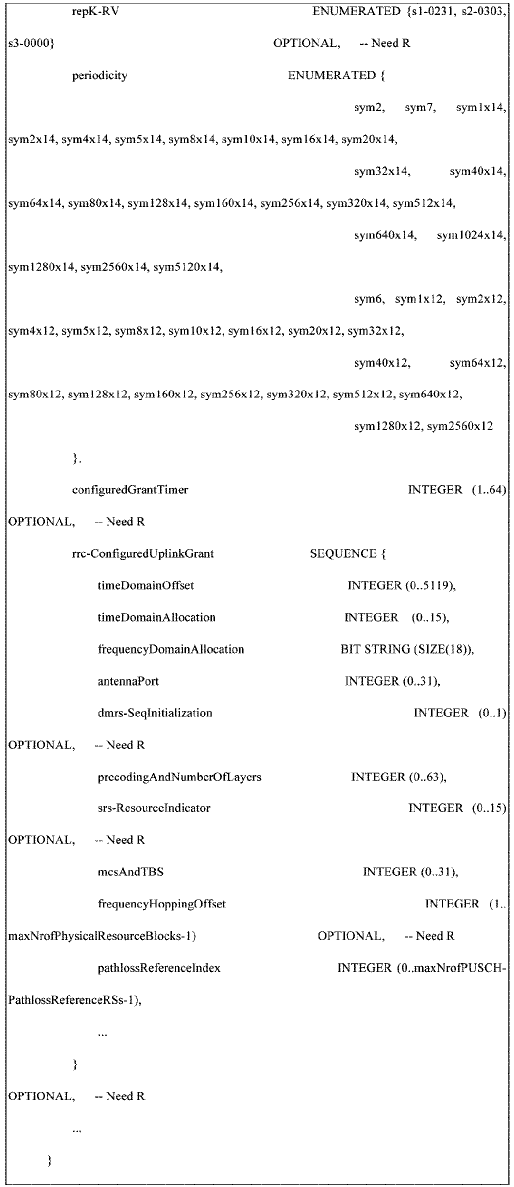

Next, a PUSCH transmission method will be described. A demodulation reference signal (DMRS) antenna port for PUSCH transmission is the same as an antenna port for sounding reference signal (SRS) transmission. The PUSCH transmission may follow a codebook-based transmission method or a non-codebook-based transmission method, depending on whether a value of txConfig in pusch-Config of Table 6, which is higher signaling, is "codebook" or "nonCodebook".

As described above, the PUSCH transmission may be dynamically scheduled through the DCI format 0_0 or 0_1, and may be configured quasi-statically by the configured grant. When scheduling regarding the PUSCH transmission is indicated to the terminal through the DCI format 0_0, the terminal may perform beam configuration for the PUSCH transmission by using pucch-spatialRelationlnfolD corresponding to a terminal-specific physical uplink control channel (PUCCH) resource corresponding to a minimum ID in an uplink bandwidth part (BWP) activated in a serving cell, and in this case, the PUSCH transmission is based on a single antenna port. The terminal does not expect the scheduling regarding the PUSCH transmission through the DCI format 0_0, in a BWP in which a PUCCH resource including pucch-spatialRelationlnfo is not configured. When the terminal is not configured with txConfig in pusch-Config of Table 6, the terminal does not expect scheduling through the DCI format 0_1.

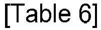

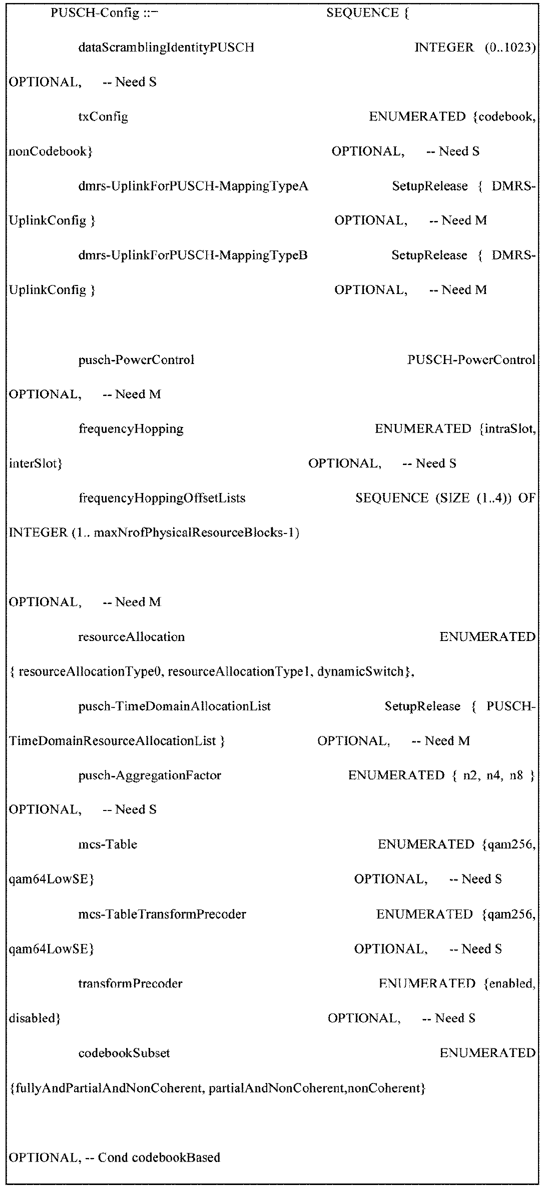

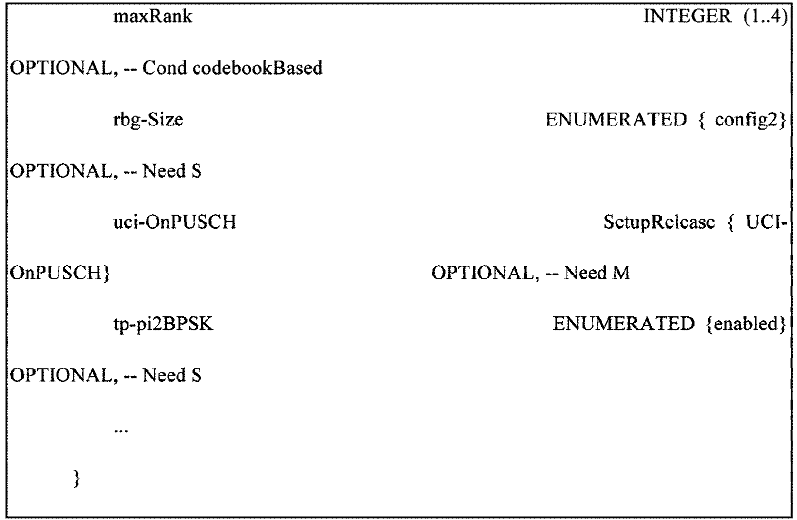

Next, codebook-based PUSCH transmission will be described. The codebook-based PUSCH transmission may be dynamically scheduled through the DCI format 0_0 or 0_1, or may quasi-statically operate by the configured grant. When the codebook-based PUSCH transmission is dynamically scheduled by the DCI format 0_1 or quasi-statically configured by the configured grant, the terminal determines a precoder for the PUSCH transmission, based on an SRS resource indicator (SRI), a transmission precoding matrix indicator (TPMI), and a transmission rank (the number of PUSCH transmission layers).

Here, the SRI may be provided via a field SRS resource indicator in the DCI or via srs-Resourcelndicator that is higher signaling. The terminal is configured with at least one SRS resource, and may be configured up to two SRS resources, during the codebook-based PUSCH transmission. When the terminal is provided with the SRI through the DCI, an SRS resource indicated by the SRI denotes an SRS resource corresponding to the SRI, from among SRS resources transmitted before a PDCCH including the SRI. Also, the TPMI and transmission rank may be provided through field precoding information and number of layers in the DCI or may be configured through precodingAndNumberOfLayers that is higher signaling. The TPMI is used to indicate a precoder applied to the PUSCH transmission. When the terminal is configured with one SRS resource, the TPMI is used to indicate the precoder to be applied to the one configured SRS resource. When the terminal is configured with a plurality of SRS resources, the TPMI is used to indicate the precoder to be applied to the SRS resource indicated through the SRI.

The precoder to be used for the PUSCH transmission is selected from an uplink codebook having the number of antenna ports equal to a value of nrofSRS-Ports in SRS-Config that is higher signaling. In the codebook-based PUSCH transmission, the terminal determines a codebook subset, based on the TPMI and the codebookSubset in the pusch-Config that is higher signaling. The codebookSubset in the pusch-Config that is higher signaling may be configured to be one of "fullyAndPartialAndNonCoherent", "partialAndNonCoherent", or "nonCoherent", based on UE capability reported by the terminal to the base station. When the terminal reported "partialAndNonCoherent" as the UE capability, the terminal does not expect a value of codebookSubset that is higher signaling to be configured to "fullyAndPartialAndNonCoherent". Also, when the terminal reported "nonCoherent" as the UE capability, the terminal does not expect the value of codebookSubset that is higher signaling to be configured to "fullyAndPartialAndNonCoherent" or "partialAndNonCoherent". When nrofSRS-Ports in SRS-ResourceSet that is higher signaling indicates two SRS antenna ports, the terminal does not expect the value of codebookSubset that is higher signaling to be configured to "partialAndNonCoherent".

The terminal may be configured with one SRS resource set in which a value of usage in SRS-ResourceSet that is higher signaling is configured to "codebook", and one SRS resource in the SRS resource set may be indicated via SRI. When several SRS resources are configured in the SRS resource set in which the value of usage in SRS-ResourceSet that is higher signaling is configured to "codebook", the terminal expects a value of nrofSRS-Ports in SRS-Resource that is higher signaling to be the same for all SRS resources.

The terminal transmits, to the base station, one or a plurality of SRS resources included in the SRS resource set in which the value of usage is configured to "codebook" according to higher signaling, and the base station selects one of the SRS resources transmitted by the terminal and instructs the terminal to perform the PUSCH transmission, by using transmission beam information of the selected SRS resource. Here, in the codebook-based PUSCH transmission, SRI is used as information for selecting an index of one SRS resource, and is included in the DCI. In addition, the base station includes, to the DCI, information indicating the TPMI and rank to be used by the terminal for the PUSCH transmission. The terminal performs the PUSCH transmission by applying the precoder indicated by the rank and TPMI indicated based on a transmission beam of the SRS resource, by using the SRS resource indicated by the SRI.

Next, non-codebook-based PUSCH transmission will be described. The noncodebook-based PUSCH transmission may be dynamically scheduled through the DCI format 0_0 or 0_1, or may quasi-statically operate by the configured grant. When at least one SRS resource is configured in the SRS resource set in which a value of usage in SRS-ResourceSet that is higher signaling is configured to "nonCodebook", the terminal may receive scheduling of the non-codebook-based PUSCH transmission through the DCI format 0_1.

Regarding the SRS resource set in which the value of usage in SRS-ResourceSet that is higher signaling is configured to "nonCodebook", the terminal may receive configuration of one connected non-zero power (NZP) CSI-RS resource. The terminal may perform calculation regarding a precoder for SRS transmission through measurement on the NZP CSI-RS resource connected to the SRS resource set. When a difference between a last reception symbol of an aperiodic NZP CSI-RS resource connected to the SRS resource set and a first symbol of aperiodic SRS transmission is less than 42 symbols, the terminal does not expect information regarding the precoder for SRS transmission to be updated.

When a value of resourceType in SRS-ResourceSet that is higher signaling is configured to be "aperiodic", the connected NZP CSI-RS is indicated by an SRS request that is a field in the DCI format 0_1 or 1_1. Here, when the connected NZP CSI-RS resource is an aperiodic NZP CSI-RS resource, it is indicated that the connected NZP CSI-RS is present regarding a case where a value of SRS request that is the field in the DCI format 0_1 or 1_1 is not "00". In this case, corresponding DCI does not indicate cross carrier or cross BWP scheduling. Also, when the value of SRS request indicates the presence of NZP CSI-RS, the NZP CSI-RS is located at a slot on which PDCCH including an SRS request field is transmitted. Here, TCI states configured in a scheduled subcarrier are not configured to be QCL-TypeD.

When a periodic or semi-persistent SRS resource set is configured, the connected NZP CSI-RS may be indicated through associatedCSI-RS in the SRS-ResourceSet that is higher signaling. Regarding the non-codebook-based transmission, the terminal does not expect spatialRelationlnfo that is higher signaling for the SRS resource and associatedCSI-RS in SRS-ResourceSet that is higher signaling to be configured together.

When a plurality of SRS resources are configured, the terminal may determine the precoder and a transmission rank to be applied to the PUSCH transmission, based on SRI indicated by the base station. Here, the SRI may be indicated through a field SRS resource indicator in the DCI or configured through srs-Resourcelndicator that is higher signaling. Like the codebook-based PUSCH transmission, when the terminal receives the SRI through the DCI, the SRS resource indicated by the SRI denotes an SRS resource corresponding to the SRI from among SRS resources transmitted prior to the PDCCH including the SRI. The terminal may use one or a plurality of SRS resources for SRS transmission, and the maximum number of SRS resources capable of being simultaneously transmitted from a same symbol in one SRS resource set is determined by UE capability reported by the terminal to the base station. Here, the SRS resources simultaneously transmitted by the terminal occupy a same resource block (RB). The terminal configures one SRS port for each SRS resource. Only one SRS resource set, in which the value of usage in SRS-ResourceSet that is higher signaling is configured to be "nonCodebook", may be configured, and up to 4 SRS resources for the non-codebook-based PUSCH transmission may be configured.

The base station transmits, to the terminal, one NZP-CSI-RS connected to an SRS resource set, and the terminal calculates a precoder to be used to transmit one or a plurality of SRS resources in the SRS resource set, based on a result measured when receiving the NZP-CSI-RS. The terminal applies the calculated precoder when transmitting, to the base station, one or plurality of SRS resources in the SRS resource set, in which the usage is configured to be "nonCodebook", and the base station selects one or plurality of SRS resources from among the received one or plurality of SRS resources. Here, in the non-codebook-based PUSCH transmission, the SRI denotes an index capable of representing one SRS resource or a combination of a plurality of SRS resources, and the SRI is included in the DCI. At this time, the number of SRS resources indicated by the SRI transmitted by the base station may be the number of transmission layers of the PUSCH, and the terminal transmits the PUSCH by applying, to each layer, the precoder applied for the SRS resource transmission.

### [PUSCH: Regarding Repetitive Transmission]

Hereinafter, repetitive transmission of an uplink data channel in a 5G system will be described in detail. The 5G system supports, as a repetitive transmission method of the uplink data channel, two types, i.e., a PUSCH repetitive transmission type A and a PUSCH repetitive transmission type B. The terminal may be configured with one of the PUSCH repetitive transmission type A or B via higher layer signaling.

### 1. PUSCH Repetitive Transmission Type A

As described above, a position of a start symbol and a symbol length of an uplink data channel may be determined via a time domain resource allocation method in one slot, and the base station may notify the terminal about the number of repetitive transmissions via higher layer signaling (for example, RRC signaling) or L1 signaling (for example, DCI).

Based on the number of repetitive transmissions received from the base station, the terminal may repetitively transmit, on consecutive slots, the uplink data channel having a start symbol and length identical to a start symbol and length of the configured uplink data channel. Here, when a slot configured to be downlink by the base station to the terminal or at least one symbol among symbols of the uplink data channel configured to the terminal is configured to be downlink, the terminal omits uplink data channel transmission but counts the number of repetitive transmissions of the uplink data channel.

### 2. PUSCH Repetitive Transmission Type B

As described above, the start symbol and length of the uplink data channel may be determined via the time domain resource allocation method in one slot, and the base station may notify the terminal about the number of repetitive transmissions (numberofrepetitions) via higher signaling (for example, RRC signaling) or L1 signaling (for example, DCI).

First, based on the start symbol and length of the configured uplink data channel, nominal repetition of the uplink data channel is determined as below. A slot on which n-th nominal repetition starts is provided by ${K}_{s} + \left⌊\frac{S + n ⋅ L}{{N}_{symb}^{slot}}\right⌋$ and a symbol starting from the slot is provided by $mod \left(S+n⋅L,{N}_{symb}^{slot}\right.$*.* A slot on which the n-th nominal repetition ends is provided by ${K}_{s} + \left⌊\frac{S + \left(n+1\right) ⋅ L - 1}{{N}_{symb}^{slot}}\right⌋$ and a symbol ending at the slot is provided by $mod \left(S+\left(n+1\right)⋅L-1,{N}_{symb}^{slot}\right.$. Here, n=0, ..., numberofrepetitions-1, and S denotes a start symbol of a configured uplink data channel, and L denotes a symbol length of the configured uplink data channel. *Kₛ* denotes a slot on which PUSCH transmission starts, and ${N}_{symb}^{slot}$ denotes the number of symbols per slot.

The terminal determines an invalid symbol for the PUSCH repetitive transmission type B. The symbol configured to be downlink by tdd-UL-DL-ConfigurationCommon or tdd-UL-DL-ConfigurationDedicated is determined to be the invalid symbol for the PUSCH repetitive transmission type B. In addition, the invalid symbol may be configured by a higher layer parameter (for example, InvalidSymbolPattern). The higher layer parameter (for example, InvalidSymbolPattern) may provide a symbol level bitmap over one slot or two slots to configure the invalid symbol. In the bitmap, 1 denotes the invalid symbol. In addition, a periodicity and pattern of the bitmap may be configured through a higher layer parameter (for example, periodicityAndPattern). When the higher layer parameter (for example, InvalidSymbolPattern) is configured and a InvalidSymbolPatternlndicator-ForDCIFormat0_1 or InvalidSymboIPatternIndicator-ForDCIFormat0_2 parameter indicates 1, the terminal may apply an invalid symbol pattern, and when the InvalidSymbolPatternIndicator-ForDCIFormat0_1 or InvalidSymbolPatternlndicator-ForDCIFormat0_2 parameter indicates 0, the terminal does not apply the invalid symbol pattern. When the higher layer parameter (for example, InvalidSymbolPattern) is configured and the InvalidSymbolPatternIndicator-ForDCIFormat0_1 or InvalidSymbolPatternIndicator-ForDCIFormat0_2 parameter is not configured, the terminal applies the invalid symbol pattern.

After the invalid symbol is determined, the terminal may consider symbols other than the invalid symbol as valid symbols, for each nominal repetition. When each nominal repetition includes at least one valid symbol, the nominal repetition may include one or more actual repetitions. Here, each actual repetition may include consecutive sets of valid symbols that may be used for the PUSCH repetitive transmission type B in one slot.

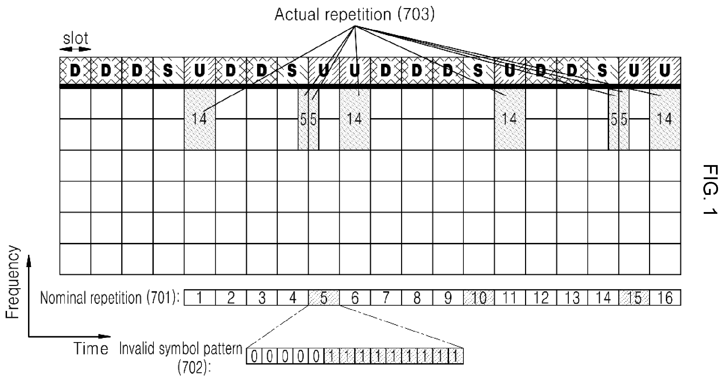

FIG. 1 is a diagram illustrating an example of a PUSCH repetitive transmission type B in a wireless communication system, according to an embodiment of the present disclosure.

The terminal may be configured with 0 for a start symbol S of the uplink data channel and 14 for a length L of the uplink data channel, and configured with 16 for the number of repetitive transmissions. In this case, a nominal repetition 701 is indicated in 16 consecutive slots. Then, the terminal may determine, as the invalid symbol, a symbol configured to be a downlink symbol in each nominal repetition 701. Also, the terminal determines, as the invalid symbols, symbols configured to be 1 in an invalid symbol pattern 702. When valid symbols, rather than the invalid symbols, are configured to be one or more consecutive symbols in one slot in each nominal repetition, the valid symbols are transmitted via actual repetition 703.

Also, regarding PUSCH repetitive transmission, NR Release 16 may define following additional methods for configured grant-based PUSCH transmission and UL grant-based PUSCH transmission exceeding a slot boundary.
- Method 1 (mini-slot level repetition): At least two PUSCH repetitive transmissions in one slot or exceeding a boundary of consecutive slots are scheduled via one UL grant. Also, regarding Method 1, time domain resource allocation information in DCI indicates a resource of first repetitive transmission. Time domain resource information of remaining repetitive transmissions may be determined according to time domain resource information of the first repetitive transmission and an uplink or downlink direction determined for each symbol of each slot. Each repetitive transmission occupies consecutive symbols.
- Method 2 (multi-segment transmission): At least two PUSCH repetitive transmissions in consecutive slots are scheduled through one UL grant. Here, one transmission is allocated for each slot, and starting points or repeated lengths may be different for each transmission. In Method 2, the time domain resource allocation information in the DCI indicates the starting points and repeated lengths of all repetitive transmissions. Also, in a case where the repetitive transmission is performed in a single slot through Method 2, when there are several sets of consecutive uplink symbols in the slot, each repetitive transmission is performed for each set of uplink symbols. When there is only one set of consecutive uplink symbols in the slot, one PUSCH repetitive transmission is performed according to a method of NR Release 15.

- Method 3: At least two PUSCH repetitive transmissions in consecutive slots are scheduled through at least two UL grants. Here, one transmission is allocated for each slot, and an (n)th UL grant may be received before PUSCH transmission scheduled by an (n-1)th UL grant is over.
- Method 4: One or more PUSCH repetitive transmissions in a single slot or two or more PUSCH repetitive transmissions over a boundary of consecutive slots may be supported through one UL grant or one configured grant. The number of repetitions indicated by the base station to the terminal is only a nominal value, and the number of PUSCH repetitive transmissions actually performed by the terminal may be greater than the nominal number of repetitions. The time domain resource allocation information in the DCI or configured grant denotes a resource of a first repetitive transmission indicated by the base station. The time domain resource information of the remaining repetitive transmissions may be determined by referring to resource information of the first repetitive transmission and an uplink or downlink direction of symbols. When the time domain resource information of the repetitive transmission indicated by the base station spans a slot boundary or includes an uplink/downlink switching point, the repetitive transmission may be divided into a plurality of repetitive transmissions. Here, one repetitive transmission may be included for each uplink period in one slot.

### [Regarding SRS]

Next, an uplink channel estimation method using SRS transmission of the terminal will be described. The base station may configure the terminal with at least one SRS configuration for each uplink BWP and at least one SRS resource set for each SRS configuration, so as to transmit configuration information for the SRS transmission. For example, the base station and the terminal may exchange higher signaling information as below so as to transfer information about the SRS resource set.
- srs-ResourceSetld: An SRS resource set index
- srs-ResourceldList: A group of SRS resource indexes referred to by an SRS resource set
- resourceType: A time axis transmission configuration of an SRS resource referred to by an SRS resource set, and may be configured to be one of "periodic", "semi-persistent", and "aperiodic". When configured to be "periodic" or "semi-persistent", associated CSI-RS information may be provided depending on where the SRS resource set is used. When configured to be "aperiodic", an aperiodic SRS resource trigger list and slot offset information may be provided, and the associated CSI-RS information may be provided depending on where the SRS resource set is used.
- usage: A configuration regarding where an SRS resource referred to by an SRS resource set is used, and may be configured to be one of "beamManagement", "codebook", "nonCodebook", and "antennaSwitching".
- alpha, p0, pathlossReferenceRS, srs-PowerControlAdjustmentStates: Provides a parameter configuration for transmit power control of an SRS resource referred to by an SRS resource set.

The terminal may interpret that an SRS resource included in a group of SRS resource indexes referred to by an SRS resource set follows information configured in the SRS resource set.

Also, the base station and the terminal may transmit and receive higher layer signaling information to transfer individual configuration information regarding the SRS resource. For example, the individual configuration information regarding the SRS resource may include time-frequency axis mapping information in a slot of the SRS resource, and the time-frequency axis mapping information may include information about frequency hopping within a slot or between slots of the SRS resource. Also, the individual configuration information regarding the SRS resource may include a time axis transmission configuration of the SRS resource, and may be configured to be one of "periodic", "semi-persistent", and "aperiodic". The individual configuration information may be limited to have a same time axis transmission configuration as the SRS resource set including the SRS resource. When the time axis transmission configuration of the SRS resource is configured to be "periodic" or "semi-persistent", an SRS resource transmission periodicity and a slot offset (for example, periodicityAndOffset) may be additionally included in the time axis transmission configuration.

The base station may activate, deactivate, or trigger the SRS transmission in the terminal via higher layer signaling including RRC signaling or MAC CE signaling, or via L1 signaling (for example, DCI). For example, the base station may activate or deactivate periodic SRS transmission in the terminal through higher layer signaling. The base station may indicate an SRS resource set in which resource Type is configured to be periodic to be activated via higher layer signaling, and the terminal may transmit an SRS resource referred to by the activated SRS resource set. Time-frequency axis resource mapping in a slot of the transmitted SRS resource follows resource mapping information configured in the SRS resource, and slot mapping including a transmission period and slot offset follows periodicityAndOffset configured in the SRS resource. Also, a spatial domain transmission filter applied to the transmitted SRS resource may refer to spatial relation information configured in the SRS resource or to associated CSI-RS information configured in the SRS resource set including the SRS resource. The terminal may transmit the SRS resource in an uplink BWP activated regarding the periodic SRS resource activated through the higher layer signaling.

For example, the base station may activate or deactivate semi-persistent SRS transmission in the terminal via higher layer signaling. The base station may indicate an SRS resource set to be activated through MAC CE signaling, and the terminal may transmit an SRS resource referred to by the activated SRS resource set. The SRS resource set activated through the MAC CE signaling may be limited to an SRS resource set in which resourceType is configured to be semi-persistent. Time-frequency axis resource mapping in a slot of the transmitted SRS resource follows resource mapping information configured in the SRS resource, and slot mapping including a transmission period and slot offset follows periodicityAndOffset configured in the SRS resource. Also, a spatial domain transmission filter applied to the transmitted SRS resource may refer to spatial relation information configured in the SRS resource or to associated CSI-RS information configured in the SRS resource set including the SRS resource. When the spatial relation information is configured in the SRS resource, the spatial domain transmission filter may be determined by referring to configuration information regarding the spatial relation information transmitted through MAC CE signaling for activating semi-persistent SRS transmission, without following the spatial relation information configured in the SRS resource. The terminal may transmit the SRS resource in an uplink BWP activated regarding the semi-persistent SRS resource activated through the higher layer signaling.

For example, the base station may trigger aperiodic SRS transmission in the terminal through DCI. The base station may indicate one of aperiodic SRS resource triggers (aperiodicSRS-ResourceTrigger) through an SRS request field of the DCI. The terminal may interpret that an SRS resource set including an aperiodic SRS resource trigger indicated by the DCI has been triggered from an aperiodic SRS resource trigger list from among configuration information of the SRS resource set. The terminal may transmit an SRS resource referred to by the triggered SRS resource set. A time-frequency axis resource mapping in a slot of the transmitted SRS resource may follow resource mapping information configured in the SRS resource. Also, slot mapping of the transmitted SRS resource may be determined through a slot offset between the SRS resource and a PDCCH including the DCI, which may refer to a value (or values) included in a slot offset group configured in the SRS resource set.

In detail, the slot offset between the SRS resource and the PDCCH including the DCI may apply a value indicated by a time domain resource assignment field of the DCI among an offset value (or offset values) included in the slot offset set configured in the SRS resource set. Also, a spatial domain transmission filter applied to the transmitted SRS resource may refer to spatial relation information configured in the SRS resource or to associated CSI-RS information configured in the SRS resource set including the SRS resource. The terminal may transmit the SRS resource in an uplink BWP activated regarding the aperiodic SRS resource triggered through the DCI.

When the base station triggers aperiodic SRS transmission in the terminal through DCI, a minimum time interval between a PDCCH including the DCI triggering the aperiodic SRS transmission and a transmitted SRS may be required for the terminal to transmit the SRS by applying configuration information regarding the SRS resource. A time interval for SRS transmission of the terminal may be defined by the number of symbols between a last symbol of the PDCCH including the DCI triggering the aperiodic SRS transmission and a first symbol to which an SRS resource transmitted the earliest from among transmitted SRS resource(s) is mapped. The minimum time interval may be determined by referring to a PUSCH preparation procedure time required for the terminal to prepare for PUSCH transmission. Also, the minimum time interval may have different values according to where an SRS resource set including the transmitted SRS resource is used. For example, the minimum time interval may refer to the PUSCH preparation procedure time of the time interval and may be determined to be N2 symbols defined in consideration of terminal processing capability according to capability of the terminal. Also, when the SRS resource set is configured to be used for "codebook" or "antennaSwitching", considering the usage of the SRS resource set including the transmitted SRS resource, the minimum time interval may be determined to be N2 symbols, and when the SRS resource set is configured to be used for "nonCodebook" or "beamManagement", the minimum time interval may be determined to be N2+14 symbols. When the time interval for aperiodic SRS transmission is equal to or greater than the minimum time interval, the terminal may transmit aperiodic SRS, and when the time interval for aperiodic SRS transmission is smaller than the minimum time interval, the terminal may ignore the DCI triggering the aperiodic SRS transmission.

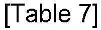

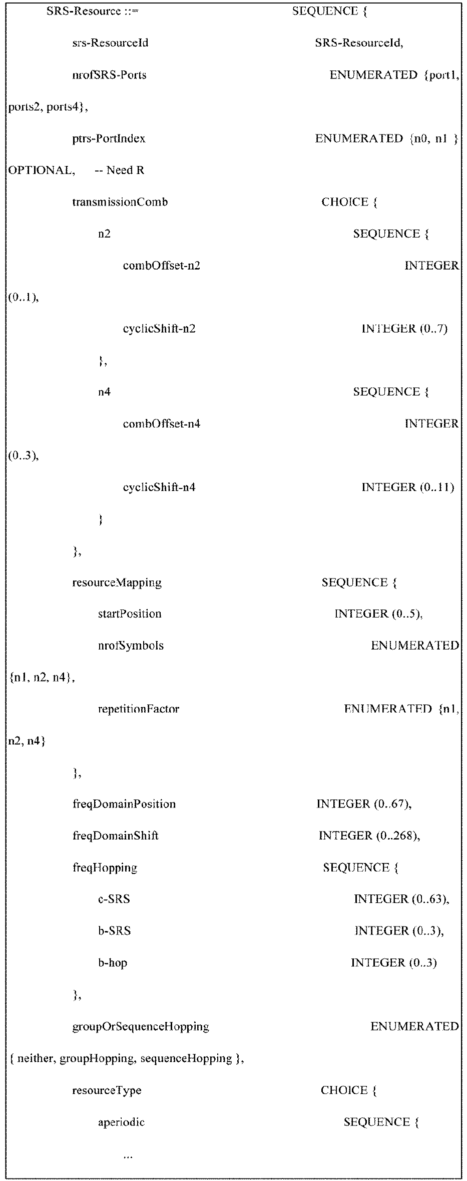

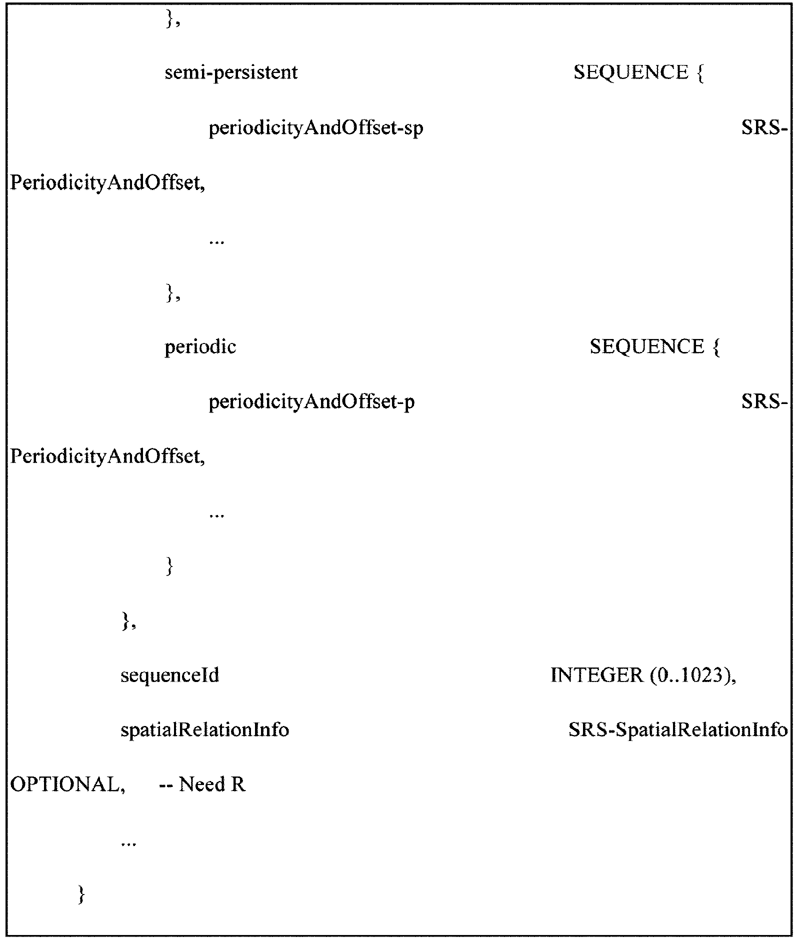

spatialRelationlnfo configuration information in Table 7 above may apply, by referring to one reference signal, beam information of the reference signal to a beam used for SRS transmission . For example, a spatialRelationlnfo configuration may include information as in Table 8 below.

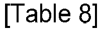

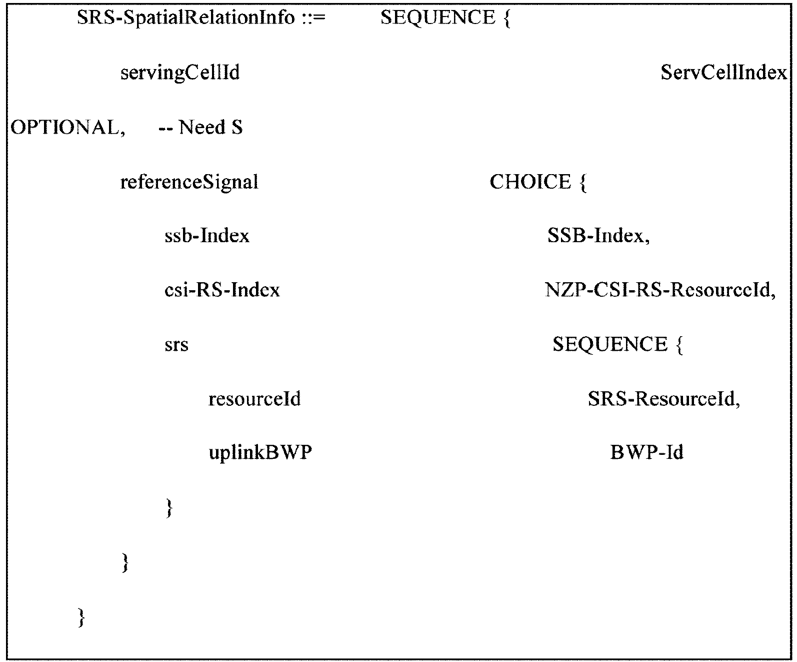

Referring to the spatialRelationInfo configuration, an SS/PBCH block index, a CSI-RS index, or an SRS index may be configured as an index of a reference signal to be referred to, so as to use beam information of a specific reference signal. Higher signaling referenceSignal is configuration information indicating beam information of which reference signal is to be referred to for SRS transmission, and ssb-Index denotes an index of a SS/PBCH block, csi-RS-Index denotes an index of CSI-RS, and srs denotes an index of SRS. When a value of the higher signaling referenceSignal is configured to be "ssb-Index", the terminal may apply a reception beam used when an SS/PBCH block corresponding to the ssb-Index is received, as a transmission beam of the SRS transmission. When the value of the higher signaling referenceSignal is configured to be "csi-RS-Index", the terminal may apply a reception beam used when CSI-RS corresponding to the csi-RS-Index is received, as a transmission beam of the SRS transmission. When the value of the higher signaling referenceSignal is configured to be "srs", the terminal may apply a transmission beam used when SRS corresponding to the srs is transmitted, as a transmission beam of the SRS transmission.

### [Regarding Uplink PTRS]

The terminal may be configured with phaseTrackingRS, which is a higher layer parameter for a phase tracking reference signal (PTRS), on a higher layer parameter DMRS-UplinkConfig. When the terminal transmits a PUSCH to the base station, the terminal may transmit the a PTRS for phase tracking of an uplink channel. A procedure by which the terminal transmits an uplink (UL) PTRS may be determined based on whether transform precoding is performed during PUSCH transmission. In a case where transform precoding is performed and a transformPrecoderEnabled field is configured within a higher layer parameter PTRS-UplinkConfig, sampleDensity in the transformPrecoderEnabled field may indicate sample density thresholds represented by NRBO to NRB4 in a table below. In a case where the transform precoding is performed and the transformPrecoderEnabled field is configured within the higher layer parameter PTRS-UplinkConfig, the terminal may determine a PT-RS group pattern for a scheduled resource NRB according to Table 9. In addition, when a transform precoder is applied to the PUSCH transmission, the number of bits in a PTRS-DMRS association field for indicating an association between PTRS and DMRS is 0 in DCI format 0_1 or 0_2 may be 0.

**[Table 9]**

| Scheduled bandwidth | Number of PT-RS groups | Number of samples per PT-RS group |
|---|---|---|
| NRBO ≤ NRB < NRB1 | 2 | 2 |
| NRB1 ≤ NRB < NRB2 | 2 | 4 |
| NRB2 ≤ NRB < NRB3 | 4 | 2 |
| NRB3 ≤ NRB < NRB4 | 4 | 4 |
| NRB4 ≤ NRB | 8 | 4 |

In a case where the transform precoding is not applied to the PUSCH transmission and phaseTrackingRS that is a higher layer parameter is configured, the terminal may indicate NRB0 to NRB1 as frequencyDensity in a transformPrecoderDisabled field in the higher layer parameter PTRS-UplinkConfig, and indicate ptrs-MCS1 to ptrs-MCS3 as timeDensity. The terminal may determine PT-RS density (LPT-RS) of a time domain and PT-RS density (KPT-RS) of a frequency domain according to Table 10 and Table 11, respectively, according to MCS (IMCS) and RB (NRB) of the scheduled PUSCH. In Table 10, although ptrs-MCS4 is not explicitly stated as a higher layer parameter, but the base station and the terminal are aware that ptrs-MCS4 is 29 or 28 according to a configured MCS table.

**[Table 10]**

| Scheduled MCS | Time Density (LPT-RS) |
|---|---|
| IMCS < ptrs-MCS1 | PT-RS is not present |
| ptrs-MCS1 ≤ IMCS < ptrs-MCS2 | 4 |
| ptrs-MCS2 ≤ IMCS < ptrs-MCS3 | 2 |
| ptrs-MCS3 ≤ IMCS < ptrs-MCS4 | 1 |

**[Table 11]**

| Scheduled bandwidth | Frequnecy density (KPT-RS) |
|---|---|
| NRB < NRB0 | PT-RS is not present |
| NRB0 ≤ NRB < NRB1 | 2 |
| NRB1 ≤ NRB | 4 |

In a case where the transform precoder is not applied to the PUSCH transmission and PTRS-UplinkConfig is configured, the base station may indicate the terminal of the "PTRS-DMRS association" field of 2 bits so as to indicate the association between the DMRS and the PTRS in the DCI format 0_1 or 0_2. The indicated PTRS-DMRS association field of 2 bits may be applied to Table 12 or 13 below according to the maximum number of ports of PTRS configured by maxNrofPorts in the higher layer parameter PTRS-UplinkConfig. When the maximum number of PTRS ports is 1, the terminal may determine the association between the PTRS and DMRS according to Table 12 and the 2 bits indicated by the PTRS-DMRS association field, and transmit the PTRS according to the determined association. In a case where the maximum number of PTRS ports is 2, the terminal may determine the association between the PTRS and the DMRS according to Table 13 and the 2 bits indicated by the PTRS-DMRS association field, and transmit the PTRS according to the determined association.

**[Table 12]**

| Value | DMRS port |
|---|---|
| 0 | 1st scheduled DMRS port |
| 1 | 2nd scheduled DMRS port |
| 2 | 3rd scheduled DMRS port |
| 3 | 4th scheduled DMRS port |

**[Table 13]**

| Value of MSB | DMRS port | Value of LSB | DMRS port |
|---|---|---|---|
| 0 | 1st DMRS port which shares PTRS port 0 | 0 | 1st DMRS port which shares PTRS port 1 |
| 1 | 2nd DMRS port which shares PTRS port 0 | 1 | 2nd DMRS port which shares PTRS port 1 |

A DMRS port of Table 12 and Table 13 may be determined by a table determined by a higher layer parameter configuration and "Antenna ports" field indicated by same DCI as DCI indicating PTRS-DMRS association. In a case where the transform precoder is not configured via higher configuration of the PUSCH, dmrs-Type is configured to 1 and maxLength is configured to 2 for the DMRS, and a rank of PUSCH is configured to 2, the terminal may determine the DMRS port via a bit indicated by the Antenna ports field and a table regarding "Antenna port(s)" as Table 14 below. In a case where noncodebook-based PUSCH is supported, the terminal may determine a value of the rank with reference to the SRI field indicated by same DCI as DCI including the 'Antenna ports' field (that is, in a case where the SRI field does not exist, the rank may be regarded as 1). In a case where codebook-based PUSCH is supported, the terminal may determine the value of the rank with reference to the TPMI field indicated by same DCI as the DCI including the 'Antenna ports' field. Table 14 is an example of the Antenna port table being referred to during the PUSCH configuration described above, and when the PUSCH has been configured by another parameter, the DMRS port may be determined according to a bit of the Antenna ports field indicated by the DCI and the Antenna port table according to the configuration.

**[Table 14]**

| Value | Number of DMRS CDM group(s) without data | DMRS port(s) | Number of front-load symbols |
|---|---|---|---|
| 0 | 1 | 0,1 | 1 |
| 1 | 2 | 0,1 | 1 |
| 2 | 2 | 2,3 | 1 |
| 3 | 2 | 0,2 | 1 |
| 4 | 2 | 0,1 | 2 |
| 5 | 2 | 2,3 | 2 |
| 6 | 2 | 4,5 | 2 |
| 7 | 2 | 6,7 | 2 |
| 8 | 2 | 0,4 | 2 |
| 9 | 2 | 2,6 | 2 |
| 10-15 | Reserved | Reserved | Reserved |

1st scheduled DMRS to 4th scheduled DMRS of Table 14 may be defined to be values sequentially mapping DMRS ports indicated by the antenna port table according to the higher layer configuration and the bit of the Antenna ports field of DCI. For example, when the bits of the Antenna ports field of DCI is 0001 and the DMRS ports are determined by referring to Table 14, the scheduled DMRS ports may be 0 and 1, wherein the DMRS port 0 may be defined as the 1st scheduled DMRS and the DMRS port 1 may be defined as the 2nd scheduled DMRS. This may be similarly applied to a DMRS port determined by a bit of another Antenna ports field and an antenna port table according to another higher layer configuration. Among the DMRS ports defined as such, the terminal may determine one DMRS port to be associated with a PTRS port by referring to a bit indicated by the PTRS-DMRS association in the DCI, and transmit the PTRS according to the determined DMRS port.

In Table 13, a DMRS port sharing a PTRS port 0 and a DMRS port sharing a PTRS port 1 may be defined according to the codebook-based PUSCH transmission or non-codebook-based PUSCH transmission. When the terminal transmits the PUSCH based on a partial-coherent or non-coherent codebook, an uplink layer transmitted by PUSCH antenna ports 1000 and 1002 is associated with the PTRS port 0, and an uplink layer transmitted by PUSCH antenna ports 1001 and 1003 is associated with the PTRS port 1. In detail, when layer 3: TPMI = 2 is selected for the codebook-based PUSCH transmission, a first layer is associated with the PTRS port 0 because the first layer is transmitted by the PUSCH antenna ports 1000 and 1002, a second layer and a third layer are associated with the PTRS port 1 because the second layer is transmitted by the PUSCH antenna port 1001 and the third layer is transmitted by the PUSCH antenna port 1002. The three layers each denote a DMRS port, and the DMRS port regarding the first layer corresponds to "1st DMRS port which shares PTRS port 0" in Table 13, the DMRS port regarding the second layer corresponds to "1st DMRS port which shares PTRS port 1" in Table 13, and the DMRS port regarding the third layer corresponds to "2nd DMRS port which shares PTRS port 1" in Table 13. Similarly, the DMRS port associated with the PTRS port 0 and the DMRS port associated with the PTRS port 1 may be determined according to TPMI and the different numbers of layers.

When the terminal transmits the PUSCH based on a non-codebook, the DMRS port associated with the PTRS port 0 and the DMRS port associated with the PTRS port 1 may be distinguished according to Antenna ports and SRI indicated by the DCI. In detail, the SRS resource included in the SRS resource set in which the usage is "nonCodebook" is configured whether the SRS resource is associated with the PTRS port 0 or the PTRS port 1 by a higher layer parameter ptrs-Portlndex. The base station indicates the SRS resource for non-codebook-based PUSCH transmission by the SRI. Here, ports of indicated SRS resources are mapped to PUSCH DMRS ports on a one-on-one manner. An association between a PUSCH DMRS port and a PTRS port is determined according to the higher layer parameter ptrs-Portindex of the SRS resource mapped to the DMRS port. For example, it is assumed that ptrs-Portindex has been configured to be n0, n0, n1, and n1 respectively for SRS resources 1 to 4 included in the SRS resource set in which the usage is nonCodebook. Also, it is assumed that the PUSCH has been indicated to be transmitted through the SRS resources 1, 2, and 4 by SRI and the DMRS ports 0, 1, and 2 are indicated as the Antenna ports field. Ports of the SRS resources 1, 2, and 4 are mapped to the DMRS ports 0, 1, and 2, respectively. Also, the DMRS ports 0 and 1 are associated with the PTRS port 0 and the DMRS port 2 is associated with the PTRS port 1, according to ptrs-Portindex in the SRS resource. Accordingly, in Table 13, the DMRS port 0 corresponds to "1st DMRS port which shares PTRS port 0", the DMRS port 1 corresponds to "2nd DMRS port which shares PTRS port 0", and the DMRS port 2 corresponds to "1st DMRS port which shares PTRS port 1". Similarly, the DMRS port associated with the PTRS port 0 and the DMRS port associated with the PTRS port 1 may be determined according to different SRI values and a ptrs-PortIndex configuration method in the SRS resources of different patterns. The terminal determines the association between the DMRS port and the PTRS port as described above for two PTRS ports. Then, among a plurality of DMRS ports associated with respective PTRS ports, the terminal may determine the DMRS port to be associated with the PTRS port 0 by referring to a most significant bit (MSB) of PTRS-DMRS association, and determine the DMRS port to be associated with the PTRS port 1 by referring to a least significant bit (LSB), and transmit the PTRS.

### [SRS: Comb Offset/Cyclic Shift Configuration Method]

Next, a method of configuring a comb offset and cyclic shift when the terminal transmits an SRS will be described.

The terminal may be configured with the SRS resource from the base station through SRS-Resource or SRS-PosResource, which is higher layer signaling, and may consist of following features.

In a case of SRS-Resource, the terminal may be configured with the number of antenna ports for each SRS resource, and a value thereof may be defined as ${N}_{ap}^{SRS} ∈ \left\{1, 2, 4, 8\right\}$ and may be configured through nrofSRS-Ports or nrofSRS-Ports-n8, which is higher layer signaling. When a usage, which is higher layer signaling within SRS-ResourceSet, is configured to a value other than nonCodebook, *pᵢ =* 1000 *+ i* may denote a number of an (i)th antenna port, and i may be an integer from 0 to ${N}_{ap}^{SRS} - 1$. When the usage, which is higher layer signaling within SRS-ResourceSet, is configured to nonCodebook, each SRS resource may be configured with ${N}_{ap}^{SRS} = 1$ antenna ports, and an antenna port of a (i+1)th SRS resource within SRS-ResourceSet may be defined as *pᵢ* = 1000 + *i*. In a case of SRS-PosResource, ${N}_{ap}^{SRS} = 1$ may be defined.

The terminal may be configured by the base station with the number of consecutive symbols over which the SRS is transmitted through nrofSymbols within resourceMapping that is higher layer signaling, and a value thereof may be defined as ${N}_{symb}^{SRS} ∈ \left\{1, 2, 4, 8, 10, 12, 14\right\}$.

The terminal may be configured by the base station with the position of a start symbol over which the SRS is transmitted within a slot through startPosition within resourceMapping that is higher layer signaling, and a value thereof may be defined as ${l}_{0} = {N}_{symb}^{slot} - 1 - {l}_{offset}$. In this case, ${N}_{symb}^{slot}$ may denote the number of symbols within a slot, and a value thereof may be 14 in a case of a normal cyclic prefix and 12 in a case of an extended cyclic prefix. *l*_{offset} ∈ {0,1, ... ,13} may denote an offset value that counts the number of symbols in reverse starting from a symbol located at the very end of the slot. In this case, ${l}_{offset} \geq {N}_{symb}^{SRS} - 1$ may be satisfied.

*k*₀ may denote a starting position of a frequency resource over which the SRS is transmitted.

An SRS sequence that may be generated through the SRS resource defined based on the above information may be defined as in Equation 1 below. [Equation 1] $\begin{matrix}{r}^{\left({p}_{i}\right)} \left(n,l′\right) = {w}_{TDM}^{\left(pi\right)} \left(l′\right) {r}_{u , v}^{\left({α}_{i}, δ\right)} \left(n\right) \\ 0 \leq n \leq {M}_{sc , b}^{SRS} - 1 \\ l ′ ∈ \left\{0,1,…,{N}_{symb}^{SRS}-1\right\}\end{matrix}$

Here, ${M}_{sc , b}^{SRS} = {m}_{SRS , b} {N}_{sc}^{RB} / \left({K}_{TC}{P}_{F}\right)$ denotes a length of an SRS sequence. *m*_{SRS,*b*} is determined through Table 16 below and may be determined through b-SRS and c-SRS, which are higher layer signaling. When b-SRS is configured, a value of *B*_{SRS} ∈ {0,1,2,3}*B*_{SRS} = 0 in Table 16 below may be determined, and a value of b, which is the subscript of *m*_{SRS,*b*}, may be determined, and when b-SRS is not configured, *B_{SRS}=*0*.* c-SRS may determine a value of *C*_{SRS} ∈ {0,1, ... ,63} in Table 16 below. *P*_{F} ∈ {2,4} may be determined through FreqScalingFactor that is higher layer signaling, and when a corresponding parameter is not configured, *P_{F}=*1*.* When FreqScalingFactor that is higher layer signaling is configured, the terminal may expect the length of the SRS sequence to be a multiple of 6.

*δ* = log₂(*K*_{TC}) may be defined and *K*_{TC} ∈ {2,4,8} may determine the size of a comb. Here, the size of the comb may denote an interval between REs over which the SRS is transmitted on frequency resources, and for example, when the size of the comb is *K*_{TC} = 2, the interval between REs over which the SRS is transmitted may be 2 REs. The terminal may be configured with the size of the comb through transmissionComb that is higher layer signaling. $l ′ ∈ \left\{0,1,…,{N}_{symb}^{SRS}-1\right\}$ may denote a symbol index within the symbols over which the SRS resource is transmitted. The terminal may determine ${n}_{SRS}^{cs , max}$, which is a maximum cyclic shift value, according to a value of *K_{TC},* as shown in Table 15 below.

**[Table 15]**

| *K*_{TC} | ${n}_{SRS}^{cs , max}$ |
|---|---|
| 2 | 8 |
| 4 | 12 |
| 8 | 6 |

${r}_{u , v}^{\left({α}_{i}, δ\right)} \left(n\right)$ may be defined as follows using *αᵢ*, which denotes a cyclic shift of the (i)th antenna port, and a base sequence *r̅_{u,v}*(*n*).${r}_{u , v}^{\left({α}_{i}, δ\right)} \left(n\right) = {e}^{{jα}_{i} n} {\overline{r}}_{u , v} \left(n\right) , 0 \leq n < {M}_{ZC}$

Here, ${M}_{ZC} = {mN}_{sc}^{RB} / {2}^{δ}$ may denote a length of an SRS sequence. For one base sequence, a plurality of SRS sequences may be generated according to different values of *αᵢ* and *δ*.

A plurality of base sequences may be divided into groups, an index of a group may be defined as *u ∈* {0,1,...,29}, and v may denote an index of a base sequence within the group. When 1/2 ≤ *m*/2*^{δ}* ≤ 5, each group may include one base sequence, and in this case, *v* = 0. When 6 ≤ *m*/2*^{δ}*, each group may include two base sequences, and in this case, *v* = 0,1. The definition of *r̅_{u,v}*(*n*) may vary according to a value of *M*_{ZC}, which is the length of a sequence.

When the length of the base sequence is 36 or more, that is, when ${M}_{ZC} \geq 3 {N}_{sc}^{RB}$, the base sequence *r̅_{u,v}*(*n*) may be defined as follows. Here, *N*_{ZC} may be a largest prime number that is smaller than *M*_{ZC}. ${\overline{r}}_{u , v} \left(n\right) = {x}_{q} \left(n mod {N}_{ZC}\right)$ ${x}_{q} \left(m\right) = {e}^{- j \frac{πqm \left(m+1\right)}{{N}_{ZC}}}$ $q = \left⌊\overline{q}+1/2\right⌋ + v ⋅ {\left(-1\right)}^{\left⌊2\overline{q}\right⌋}$ $\overline{q} = {N}_{ZC} ⋅ \left(u+1\right) / 31$

When the length of the base sequence is 6, 12, 18, or 24, that is, when the length of the base sequence *M*_{ZC} ∈ {6,12,18,24} is 6, 12, 18, or 24, i.e., *r̅_{u,v}*(*n*) may be defined as follows. ${\overline{r}}_{u , v} \left(n\right) = {e}^{jφ \left(n\right) π / 4} , 0 \leq n \leq {M}_{ZC} - 1$

Here, a value of *φ*(*n*) may be defined through Table 17 to Table 20 below. When the length of the base sequence is 30, that is, when *M*_{ZC} = 30, the base sequence *r_{u,v}*(*n*) may be defined as follows. ${\overline{r}}_{u , v} \left(n\right) = {e}^{- j \frac{π \left(u+1\right) \left(n+1\right) \left(n+2\right)}{31}} , 0 \leq n \leq {M}_{ZC} - 1$

When the terminal is configured with nrofSRS-Ports-n8, which is higher layer signaling, as ports8tdm, ${w}_{TDM}^{\left({p}_{i}\right)} \left(l′\right)$ may be defined as follows, and otherwise, ${w}_{TDM}^{\left({p}_{i}\right)} \left(l′\right) = 1$ may be defined.

In a case of $l ′ ∈ \left\{0,2,…,{N}_{symb}^{SRS}-2\right\}$ and *pᵢ* ∈ {1000,1001,1004,1005} ${w}_{TDM}^{\left({p}_{i}\right)} \left(l′\right) = 1$ may be defined.

In a case of $l ′ ∈ \left\{1,3,…,{N}_{symb}^{SRS}-1\right\}$ and *pᵢ* ∈ {1002,1003,1006,1007} ${w}_{TDM}^{\left({p}_{i}\right)} \left(l′\right) = 1$ may be defined.

When neither of the above two cases applies, ${w}_{TDM}^{\left({p}_{i}\right)} \left(l′\right) = 0$ may be defined.

*αᵢ,* which denotes a cyclic shift corresponding to an antenna port Pi, may be defined as follows. ${α}_{i} = 2 π \frac{{n}_{SRS}^{cs , i}}{{n}_{SRS}^{cs , max}}$

Here, ${n}_{SRS}^{cs , i}$ may be defined as follows.

When ${\overline{N}}_{ap}^{SRS} = 8$ and ${n}_{SRS}^{cs , max} = 6$, ${n}_{SRS}^{cs , i} = \left({n}_{SRS}^{cs}+\frac{{n}_{SRS}^{cs , max} \left⌊\left({\overline{p}}_{i}-1000\right)/4\right⌋}{{\overline{N}}_{ap}^{SRS} / 4}\right) mod {n}_{SRS}^{cs , max}$ may be defined.

When ${\overline{N}}_{ap}^{SRS} = 4$ and ${n}_{SRS}^{cs , max} = 6$, or ${\overline{N}}_{ap}^{SRS} = 8 {n}_{SRS}^{cs , max} = 12$, ${n}_{SRS}^{cs , i} = \left({n}_{SRS}^{cs}+\frac{{n}_{SRS}^{cs , max} \left⌊\left({\overline{p}}_{i}-1000\right)/2\right⌋}{{\overline{N}}_{ap}^{SRS} / 2}\right) mod {n}_{SRS}^{cs , max}$ may be defined.

When neither of the above two cases applies, ${n}_{SRS}^{cs , i} = \left({n}_{SRS}^{cs}+\frac{{n}_{SRS}^{cs , max} \left({\overline{p}}_{i}-1000\right)}{{\overline{N}}_{ap}^{SRS}}\right) mod {n}_{SRS}^{cs , max}$ may be defined.

At this time, ${n}_{SRS}^{cs} ∈ \left\{0,1,…,{n}_{SRS}^{cs , max}-1\right\}$ is a parameter that determines a cyclic shift value, and may be configured through cyclicShift-n2, cyclicShift-n4, or cyclicShift-n8 within transmissionComb, which is higher layer signaling, and ${n}_{SRS}^{cs , max}$ may be determined through Table 15 above.${\overline{N}}_{ap}^{SRS}$ and *p̅ᵢ* may be determined as follows.

When nrofSRS-Ports-n8, which is higher layer signaling, is configured as ports8tdm, ${\overline{N}}_{ap}^{SRS} = 4$ may be defined, and in a case of *p̅ᵢ*, when *pᵢ -* 1000 < 4 , *p̅ᵢ* = 1000 + *pᵢ* mod 2 may be defined, and when *pᵢ* - 1000 ≥ 4, *p̅ᵢ* = 1000 *+ pᵢ* mod 2 + 2 may be defined. In other words, when the terminal transmits an SRS resource configured with 8 antenna ports in a TDM manner, for each of the antenna ports *p̅ᵢ* =1000, 1001, 1004, 1005 to be transmitted in a first symbol, *p̅ᵢ* = *8tdmorts* - *n*8 1000, 1001, 1002, 1003 is defined, and for each of the antenna ports *p̅ᵢ* =1002, 1003, 1006, 1007 to be transmitted in a second symbol, *p̅ᵢ* = 8*tdmorts* -*n*8 1000, 1001, 1002, 1003 is defined such that, when allocating resources for four different antenna ports transmitted in each symbol, a resource allocation scheme for an SRS resource configured with 4 antenna ports may be applied as is.

For cases other than the above, that is, for a case where nrofSRS-Ports-n8, which is higher layer signaling, is not configured as ports8tdm, ${\overline{N}}_{ap}^{SRS} = {N}_{ap}^{SRS}$ and *p̅ᵢ = pᵢ* may be defined.${k}_{0}^{\left({p}_{i}\right)}$, which denotes a starting position in a frequency domain of an SRS corresponding to the (i)th antenna port, may be defined as follows. ${k}_{0}^{\left({p}_{i}\right)} = {\overline{k}}_{0}^{\left({p}_{i}\right)} + {n}_{offset}^{FH} + {n}_{offset}^{RPFS}$

Here, ${\overline{k}}_{0}^{\left({p}_{i}\right)}$ may be defined as follows. ${\overline{k}}_{0}^{\left({p}_{i}\right)} = {n}_{shift} {N}_{sc}^{RB} + \left({k}_{TC}^{\left({p}_{i}\right)}+{k}_{offset}^{l ′}\right)$

Here, ${k}_{TC}^{\left({p}_{i}\right)}$ may be defined as follows.

When ${\overline{N}}_{ap}^{SRS} = 8$, *pᵢ* ∈ {1003,1007}, ${k}_{TC}^{\left({p}_{i}\right)} = \left({\overline{k}}_{TC}+3{K}_{TC}/4\right) mod {K}_{TC}$ may be defined.

When ${\overline{N}}_{ap}^{SRS} = 8$, *p̅ᵢ* ∈ {1002,1006}, ${\overline{p}}_{i} ∈ \left\{1002, 1006\right\} , {n}_{SRS}^{cs , max} = 6 , {k}_{TC}^{\left({p}_{i}\right)} = \left({\overline{k}}_{TC}+{K}_{TC}/2\right) mod {K}_{TC}$ may be defined.

When ${\overline{N}}_{ap}^{SRS} = 8$, *pᵢ* ∈ {1001,1005}, ${n}_{SRS}^{cs , max} = 6 , {k}_{TC}^{\left({p}_{i}\right)} = \left({\overline{k}}_{TC}+{K}_{TC}/4\right) mod {K}_{TC}$ may be defined.

When ${\overline{N}}_{ap}^{SRS} = 8$, *pᵢ* ∈ {1001,1003,1005,1007}, ${n}_{SRS}^{cs , max} = 12 , {k}_{TC}^{\left({p}_{i}\right)} = \left({\overline{k}}_{TC}+{K}_{TC}/2\right) mod {K}_{TC}$ may be defined.

When ${\overline{N}}_{ap}^{SRS} = 8$, *pᵢ* ∈ {1001,1003,1005,1007}, ${n}_{SRS}^{cs , max} = 8 , {n}_{SRS}^{cs} \geq {n}_{SRS}^{cs , max} / 2 , {k}_{TC}^{\left({p}_{i}\right)} = \left({\overline{k}}_{TC}+{K}_{TC}/2\right) mod {K}_{TC}$ may be defined.

When ${\overline{N}}_{ap}^{SRS} = 4$, *p̅ᵢ* ∈ {1001,1003}, ${n}_{SRS}^{cs , max} = 6 , {k}_{TC}^{\left({p}_{i}\right)} = \left({\overline{k}}_{TC}+{K}_{TC}/2\right) mod {K}_{TC}$ may be defined.

When ${\overline{N}}_{ap}^{SRS} = 4$, *p̅ᵢ* ∈ {1001,1003}, ${n}_{SRS}^{cs , max} ∈ \left\{8, 12\right\} , {n}_{SRS}^{cs} \geq {n}_{SRS}^{cs , max} / 2 , {k}_{TC}^{\left({p}_{i}\right)} = \left({\overline{k}}_{TC}+{K}_{TC}/2\right) mod {K}_{TC}$ may be defined.

For the remaining cases other than the cases described above, ${k}_{TC}^{\left({p}_{i}\right)} = {\overline{k}}_{TC}$ may be defined.

Here, ${n}_{offset}^{FH}$ may be defined as follows. ${n}_{offset}^{FH} = {\sum }_{b = 0}^{{B}_{SRS}} {m}_{SRS , b} {N}_{sc}^{RB} {n}_{b}$

Here, ${n}_{offset}^{RPFS}$ may be defined as follows. ${n}_{offset}^{RPFS} = {N}_{sc}^{RB} {m}_{SRS , {B}_{SRS}} \left(\left({k}_{F}+{k}_{hop}\right) mod {P}_{F}\right) / {P}_{F}$

*k*_{F} ∈ {0,1, ... , *P*_{F} - 1} may be configured as StartRBlndex, which is higher layer signaling, and when not configured, *k*_{F} = 0 may be defined.

*k*ₕₒₚ may be determined through Table 21 below based on values of *k̅*ₕₒₚ and *N*_{*b*ₕₒₚ} values in a case where EnableStartRBHopping, which is higher layer signaling, is configured, and otherwise, *k*ₕₒₚ = 0 may be defined. ${\overline{k}}_{hop} = \left⌊\frac{{n}_{SRS}}{{\prod }_{b ′ = {b}_{hop}}^{{B}_{SRS}} {N}_{b ′}}\right⌋ mod {P}_{F} , {N}_{{b}_{hop}} = 1$

When the SRS transmission is performed based on SRS-PosResource, ${k}_{offset}^{l ′}$ may be defined based on Table 22 below, and otherwise (when the SRS transmission is performed based on SRS-Resource), ${k}_{offset}^{l ′} = 0$ may be defined.

*n*_{shift}, which is an offset value in a frequency domain, is a value that determines a position where the SRS is transmitted, the position being shifted from a reference position in the frequency domain, and this may be configured through freqDomainShift, which is higher layer signaling. *k*_{TC} ∈ {0,1, ... , *K*_{TC} - 1}, which denotes a comb offset value, may be configured through combOffset-n2, combOffset-n4, or combOffset-n8 within transmissionComb, which is higher layer signaling.

As higher layer signaling related to frequency hopping of the SRS, b-hop within freqHoping may be configured, and *b*ₕₒₚ ∈ {0,1,2,3} may be defined.

*n_{b}* is a value representing an index of a frequency position, and may be defined as follows.

When *b*ₕₒₚ ≥ *B*_{SRS}, the frequency hopping of the SRS is not supported, and *n_{b}* representing the index of the frequency position may have a constant value during all ${N}_{symb}^{slot}$ symbols and may be defined as follows. ${n}_{b} = \left⌊4{n}_{RRC}/{m}_{SRS , b}\right⌋ mod {N}_{b}$

Here, *n*_{RRC} is a value configured through freqDomainPosition, which is higher layer signaling, and when not configured, the value may be 0.

When *b*ₕₒₚ < *B*_{SRS}, the frequency hopping of the SRS is supported, and *n_{b}* may be defined as follows.

When *b* ≤ *b*ₕₒₚ, ${n}_{b} = \left⌊4{n}_{RRC}/{m}_{SRS , b}\right⌋ mod {N}_{b}$ may be defined.

Otherwise, ${n}_{b} = {F}_{b} \left({n}_{SRS}\right) + \left⌊4{n}_{RRC}/{m}_{SRS , b}\right⌋ mod {N}_{b}$ may be defined.

In this case, *F_{b}*(*n*_{SRS}) may be defined as ${F}_{b} \left({n}_{SRS}\right) = \left(\frac{{N}_{b}}{2}\right) \left⌊\frac{{n}_{SRS} mod {\prod }_{b ′ = {b}_{hop}}^{b} {N}_{b ′}}{{\prod }_{b ′ = {b}_{hop}}^{b - 1} {N}_{b ′}}\right⌋ + \left⌊\frac{{n}_{SRS} mod {\prod }_{b ′ = {b}_{hop}}^{b} {N}_{b ′}}{2 {\prod }_{b ′ = {b}_{hop}}^{b - 1} {N}_{b ′}}\right⌋$ when *N_{b}* is even, and may be defined as ${F}_{b} \left({n}_{SRS}\right) = \left⌊\frac{{N}_{b}}{2}\right⌋ \left⌊\frac{{n}_{SRS}}{{\prod }_{b ′ = {b}_{hop}}^{b - 1} {N}_{b ′}}\right⌋$ when *N_{b}* is odd. *N*_{*b*ₕₒₚ} may be defined as 1 regardless of a value of *N_{b}.*

*n*_{SRS} may be defined as a parameter that counts the number of SRS transmissions. When the terminal transmits an aperiodic SRS resource, ${n}_{SRS} = \left⌊l′/\left(sR\right)\right⌋$ may be defined within ${N}_{symb}^{slot}$ symbols in a specific slot. Here, s may be defined as s=2 when nrofSRS-Ports-n8, which is higher layer signaling, is configured as ports8tdm, and may be defined as s=1 otherwise. Here, $R \leq {N}_{symb}^{SRS} / 2$ may be a value configured by repetitionFactor, which is higher layer signaling, and when not configured, $R = {N}_{symb}^{SRS}$ may be defined.

When the terminal transmits a periodic or semi-persistent SRS resource, in slots satisfying $\left({N}_{slot}^{frame , μ}{n}_{f}+{n}_{s , f}^{μ}-{T}_{offset}\right) mod {T}_{SRS} = 0$, *n*_{SRS} may be defined as follows. ${n}_{SRS} = \left(\frac{{N}_{slot}^{frame , μ} {n}_{f} + {n}_{s , f}^{μ} - {T}_{offset}}{{T}_{SRS}}\right) \left(\frac{{N}_{symb}^{SRS}}{sR}\right) + \left⌊\frac{l ′}{sR}\right⌋$

Here, *T*_{SRS} and *T*_{offset} may denote a periodicity and a slot offset of the periodic or semi-persistent SRS, respectively.

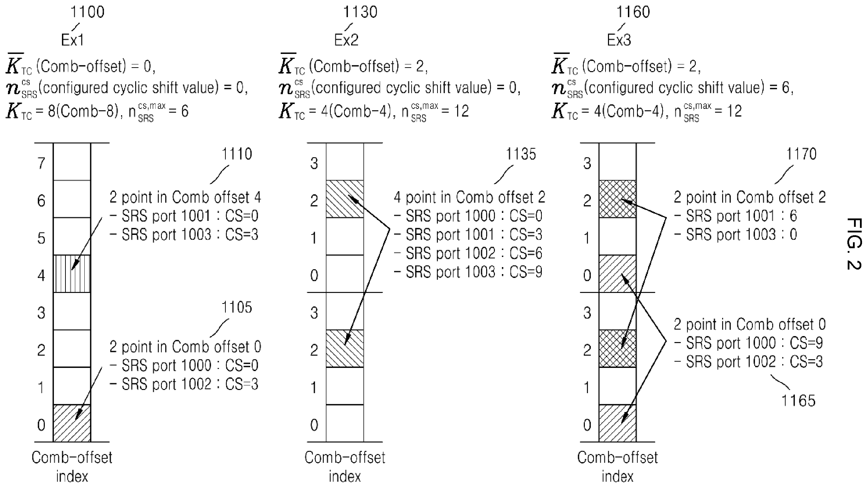

FIG. 2 is a diagram illustrating a method of allocating a comb offset and a cyclic shift during SRS transmission, according to an embodiment of the present disclosure.

In a first example 1100, it may be assumed that the terminal is configured with *k*_{TC} = 0 (comb offset value), ${n}_{SRS}^{cs} = 0$ (cyclic shift value), *K*_{TC} = 8 (comb size value), and ${n}_{SRS}^{cs , max} = 6$ (maximum cyclic shift value) for an SRS resource consisting of four antenna ports. In this case, the terminal may define, as the cyclic shift values allocated for *p̅ᵢ* = = 1000 and 1002, ${n}_{SRS}^{cs , 0} = 0$ and ${n}_{SRS}^{cs , 2} = 3$, respectively, and may define the comb offset value as ${k}_{TC}^{\left({p}_{i}\right)} = 0$ for both *p̅ᵢ* = 1000 and 1002 (1105). In addition, the terminal may define, as the cyclic shift values allocated for *p̅ᵢ* = 1001 and 1003, ${n}_{SRS}^{cs , 1} = 0$ and ${n}_{SRS}^{cs , 3} = 3$, respectively, and may define the comb offset value as ${k}_{TC}^{\left({p}_{i}\right)} = 4$ for both *p̅ᵢ* = 1001 and 1003 (1110). Accordingly, each of two antenna ports from among the four antenna ports are allocated to the same comb offset, and to separate the two antenna ports within the same comb offset, an interval between the cyclic shift values corresponding to the two antenna ports may be determined as $\frac{{n}_{SRS}^{cs , max}}{2} = 3$ such that the interval may be maximized.

In a second example 1130, it may be assumed that the terminal is configured with *k*_{TC} = 2 (comb offset value), ${n}_{SRS}^{cs} = 0$ (cyclic shift value), *K*_{TC} = 4 (comb size value), and ${n}_{SRS}^{cs , max} = 12$ (maximum cyclic shift value) for an SRS resource consisting of four antenna ports. In this case, the terminal may define, as the cyclic shift values allocated for *p̅ᵢ* = 1000, 1001, 1002, and 1003, ${n}_{SRS}^{cs , 0} = 0 , {n}_{SRS}^{cs , 1} = 3 , {n}_{SRS}^{cs , 2} = 6 , {n}_{SRS}^{cs , 3} = 9$ respectively, and may define the comb offset value as ${k}_{TC}^{\left({p}_{i}\right)} = 2$ for all of *p̅ᵢ* = 1000, 1001, 1002, and 1003 (1135). Accordingly, all four antenna ports are allocated to the same comb offset, and to separate the four antenna ports within the same comb offset, an interval between the cyclic shift values corresponding to the four antenna ports may be determined as $\frac{{n}_{SRS}^{cs , max}}{4} = 3$ such that the interval may be maximized.

In a third example 1160, it may be assumed that the terminal is configured with *k̅*_{TC} = 2 (comb offset value), ${n}_{SRS}^{cs} = 6$ (cyclic shift value), *K*_{TC} = 4 (comb size value), and ${n}_{SRS}^{cs , max} = 12$ (maximum cyclic shift value) for an SRS resource consisting of four antenna ports. In this case, the terminal may define the cyclic shift values allocated for *p̅ᵢ* = 1000 and 1002 as ${n}_{SRS}^{cs , 0} = 9$ and ${n}_{SRS}^{cs , 2} = 3$, respectively, and may define the comb offset value for both *pᵢ* = 1000 and 1002 as ${k}_{TC}^{\left({p}_{i}\right)} = 0$ (1165). In addition, the terminal may define the cyclic shift values allocated for *pᵢ* = 1001 and 1003 as ${n}_{SRS}^{cs , 1} = 6$ and ${n}_{SRS}^{cs , 3} = 0$, respectively, and may define the comb offset value for both *p̅ᵢ* = 1001 and 1003 as ${k}_{TC}^{\left({p}_{i}\right)} = 2$ (1170). Accordingly, each of two antenna ports from among the four antenna ports are allocated to the same comb offset, and to separate the two antenna ports within the same comb offset, an interval between the cyclic shift values corresponding to the two antenna ports may be determined as $\frac{{n}_{SRS}^{cs , max}}{2} = 6$ such that the interval may be maximized.

**[Table 16]**

| *C*_{SRS} | *B*_{SRS} = 0 | | *B*_{SRS} = 1 | | *B*_{SRS} = 2 | | *B*_{SRS} = 3 | |
|---|---|---|---|---|---|---|---|---|
| | *m*_{SRS,0} | *N*₀ | *m*_{SRS*,*1} | *N*₁ | *m*_{SRS,2} | *N*₂ | *m*_{SRS,3} | *N*₃ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

**[Table 17]**

| *u* | *φ*(0)*,...,φ*(5) | | | | | |
|---|---|---|---|---|---|---|
| 0 | -3 | -1 | 3 | 3 | -1 | -3 |
| 1 | -3 | 3 | -1 | -1 | 3 | -3 |
| 2 | -3 | -3 | -3 | 3 | 1 | -3 |
| 3 | 1 | 1 | 1 | 3 | -1 | -3 |
| 4 | 1 | 1 | 1 | -3 | -1 | 3 |
| 5 | -3 | 1 | -1 | -3 | -3 | -3 |
| 6 | -3 | 1 | 3 | -3 | -3 | -3 |
| 7 | -3 | -1 | 1 | -3 | 1 | -1 |
| 8 | -3 | -1 | -3 | 1 | -3 | -3 |
| 9 | -3 | -3 | 1 | -3 | 3 | -3 |
| 10 | -3 | 1 | 3 | 1 | -3 | -3 |
| 11 | -3 | -1 | -3 | 1 | 1 | -3 |
| 12 | 1 | 1 | 3 | -1 | -3 | 3 |
| 13 | 1 | 1 | 3 | 3 | -1 | 3 |
| 14 | 1 | 1 | 1 | -3 | 3 | -1 |
| 15 | 1 | 1 | 1 | -1 | 3 | -3 |
| 16 | -3 | -1 | -1 | -1 | 3 | -1 |
| 17 | -3 | -3 | -1 | 1 | -1 | -3 |
| 18 | -3 | -3 | -3 | 1 | -3 | -1 |
| 19 | -3 | 1 | 1 | -3 | -1 | -3 |
| 20 | -3 | 3 | -3 | 1 | 1 | -3 |
| 21 | -3 | 1 | -3 | -3 | -3 | -1 |
| 22 | 1 | 1 | -3 | 3 | 1 | 3 |
| 23 | 1 | 1 | -3 | -3 | 1 | -3 |
| 24 | 1 | 1 | 3 | -1 | 3 | 3 |
| 25 | 1 | 1 | -3 | 1 | 3 | 3 |
| 26 | 1 | 1 | -1 | -1 | 3 | -1 |
| 27 | 1 | 1 | -1 | 3 | -1 | -1 |
| 28 | 1 | 1 | -1 | 3 | -3 | -1 |
| 29 | 1 | 1 | -3 | 1 | -1 | -1 |

**[Table 18]**

| ***u*** | ***φ*(0)**, ..., ***φ*(11)** | | | | | | | | | | | |
|---|---|---|---|---|---|---|---|---|---|---|---|---|
| 0 | -3 | 1 | -3 | -3 | -3 | 3 | -3 | -1 | 1 | 1 | 1 | -3 |
| 1 | -3 | 3 | 1 | -3 | 1 | 3 | -1 | -1 | 1 | 3 | 3 | 3 |
| 2 | -3 | 3 | 3 | 1 | -3 | 3 | -1 | 1 | 3 | -3 | 3 | -3 |
| 3 | -3 | -3 | -1 | 3 | 3 | 3 | -3 | 3 | -3 | 1 | -1 | -3 |
| 4 | -3 | -1 | -1 | 1 | 3 | 1 | 1 | -1 | 1 | -1 | -3 | 1 |
| 5 | -3 | -3 | 3 | 1 | -3 | -3 | -3 | -1 | 3 | -1 | 1 | 3 |
| 6 | 1 | -1 | 3 | -1 | -1 | -1 | -3 | -1 | 1 | 1 | 1 | -3 |
| 7 | -1 | -3 | 3 | -1 | -3 | -3 | -3 | -1 | 1 | -1 | 1 | -3 |
| 8 | -3 | -1 | 3 | 1 | -3 | -1 | -3 | 3 | 1 | 3 | 3 | 1 |
| 9 | -3 | -1 | -1 | -3 | -3 | -1 | -3 | 3 | 1 | 3 | -1 | -3 |
| 10 | -3 | 3 | -3 | 3 | 3 | -3 | -1 | -1 | 3 | 3 | 1 | -3 |
| 11 | -3 | -1 | -3 | -1 | -1 | -3 | 3 | 3 | -1 | -1 | 1 | -3 |
| 12 | -3 | -1 | 3 | -3 | -3 | -1 | -3 | 1 | -1 | -3 | 3 | 3 |
| 13 | -3 | 1 | -1 | -1 | 3 | 3 | -3 | -1 | -1 | -3 | -1 | -3 |
| 14 | 1 | 3 | -3 | 1 | 3 | 3 | 3 | 1 | -1 | 1 | -1 | 3 |
| 15 | -3 | 1 | 3 | -1 | -1 | -3 | -3 | -1 | -1 | 3 | 1 | -3 |
| 16 | -1 | -1 | -1 | -1 | 1 | -3 | -1 | 3 | 3 | -1 | -3 | 1 |
| 17 | -1 | 1 | 1 | -1 | 1 | 3 | 3 | -1 | -1 | -3 | 1 | -3 |
| 18 | -3 | 1 | 3 | 3 | -1 | -1 | -3 | 3 | 3 | -3 | 3 | -3 |
| 19 | -3 | -3 | 3 | -3 | -1 | 3 | 3 | 3 | -1 | -3 | 1 | -3 |
| 20 | 3 | 1 | 3 | 1 | 3 | -3 | -1 | 1 | 3 | 1 | -1 | -3 |
| 21 | -3 | 3 | 1 | 3 | -3 | 1 | 1 | 1 | 1 | 3 | -3 | 3 |
| 22 | -3 | 3 | 3 | 3 | -1 | -3 | -3 | -1 | -3 | 1 | 3 | -3 |
| 23 | 3 | -1 | -3 | 3 | -3 | -1 | 3 | 3 | 3 | -3 | -1 | -3 |
| 24 | -3 | -1 | 1 | -3 | 1 | 3 | 3 | 3 | -1 | -3 | 3 | 3 |
| 25 | -3 | 3 | 1 | -1 | 3 | 3 | -3 | 1 | -1 | 1 | -1 | 1 |
| 26 | -1 | 1 | 3 | -3 | 1 | -1 | 1 | -1 | -1 | -3 | 1 | -1 |
| 27 | -3 | -3 | 3 | 3 | 3 | -3 | -1 | 1 | -3 | 3 | 1 | -3 |
| 28 | 1 | -1 | 3 | 1 | 1 | -1 | -1 | -1 | 1 | 3 | -3 | 1 |
| 29 | -3 | 3 | -3 | 3 | -3 | -3 | 3 | -1 | -1 | 1 | 3 | -3 |

**[Table 19]**

| ***u*** | ***φ*(0), ..., *φ*(17)** | | | | | | | | | | | | | | | | | |
|---|---|---|---|---|---|---|---|---|---|---|---|---|---|---|---|---|---|---|
| 0 | -1 | 3 | -1 | -3 | 3 | 1 | -3 | -1 | 3 | -3 | -1 | -1 | 1 | 1 | 1 | -1 | -1 | -1 |
| 1 | 3 | -3 | 3 | -1 | 1 | 3 | -3 | -1 | -3 | -3 | -1 | -3 | 3 | 1 | -1 | 3 | -3 | 3 |
| 2 | -3 | 3 | 1 | -1 | -1 | 3 | -3 | -1 | 1 | 1 | 1 | 1 | 1 | -1 | 3 | -1 | -3 | -1 |
| 3 | -3 | -3 | 3 | 3 | 3 | 1 | -3 | 1 | 3 | 3 | 1 | -3 | -3 | 3 | -1 | -3 | -1 | 1 |
| 4 | 1 | 1 | -1 | -1 | -3 | -1 | 1 | -3 | -3 | -3 | 1 | -3 | -1 | -1 | 1 | -1 | 3 | 1 |
| 5 | 3 | -3 | 1 | 1 | 3 | -1 | 1 | -1 | -1 | -3 | 1 | 1 | -1 | 3 | 3 | -3 | 3 | -1 |
| 6 | -3 | 3 | -1 | 1 | 3 | 1 | -3 | -1 | 1 | 1 | -3 | 1 | 3 | 3 | -1 | -3 | -3 | -3 |
| 7 | 1 | 1 | -3 | 3 | 3 | 1 | 3 | -3 | 3 | -1 | 1 | 1 | -1 | 1 | -3 | -3 | -1 | 3 |
| 8 | -3 | 1 | -3 | -3 | 1 | -3 | -3 | 3 | 1 | -3 | -1 | -3 | -3 | -3 | -1 | 1 | 1 | 3 |
| 9 | 3 | -1 | 3 | 1 | -3 | -3 | -1 | 1 | -3 | -3 | 3 | 3 | 3 | 1 | 3 | -3 | 3 | -3 |
| 10 | -3 | -3 | -3 | 1 | -3 | 3 | 1 | 1 | 3 | -3 | -3 | 1 | 3 | -1 | 3 | -3 | -3 | 3 |
| 11 | -3 | -3 | 3 | 3 | 3 | -1 | -1 | -3 | -1 | -1 | -1 | 3 | 1 | -3 | -3 | -1 | 3 | -1 |
| 12 | -3 | -1 | -3 | -3 | 1 | 1 | -1 | -3 | -1 | -3 | -1 | -1 | 3 | 3 | -1 | 3 | 1 | 3 |
| 13 | 1 | 1 | -3 | -3 | -3 | -3 | 1 | 3 | -3 | 3 | 3 | 1 | -3 | -1 | 3 | -1 | -3 | 1 |
| 14 | -3 | 3 | -1 | -3 | -1 | -3 | 1 | 1 | -3 | -3 | -1 | -1 | 3 | -3 | 1 | 3 | 1 | 1 |
| 15 | 3 | 1 | -3 | 1 | -3 | 3 | 3 | -1 | -3 | -3 | -1 | -3 | -3 | 3 | -3 | -1 | 1 | 3 |
| 16 | -3 | -1 | -3 | -1 | -3 | 1 | 3 | -3 | -1 | 3 | 3 | 3 | 1 | -1 | -3 | 3 | -1 | -3 |
| 17 | -3 | -1 | 3 | 3 | -1 | 3 | -1 | -3 | -1 | 1 | -1 | -3 | -1 | -1 | -1 | 3 | 3 | 1 |
| 18 | -3 | 1 | -3 | -1 | -1 | 3 | 1 | -3 | -3 | -3 | -1 | -3 | -3 | 1 | 1 | 1 | -1 | -1 |
| 19 | 3 | 3 | 3 | -3 | -1 | -3 | -1 | 3 | -1 | 1 | -1 | -3 | 1 | -3 | -3 | -1 | 3 | 3 |
| 20 | -3 | 1 | 1 | -3 | 1 | 1 | 3 | -3 | -1 | -3 | -1 | 3 | -3 | 3 | -1 | -1 | -1 | -3 |
| 21 | 1 | -3 | -1 | -3 | 3 | 3 | -1 | -3 | 1 | -3 | -3 | -1 | -3 | -1 | 1 | 3 | 3 | 3 |
| 22 | -3 | -3 | 1 | -1 | -1 | 1 | 1 | -3 | -1 | 3 | 3 | 3 | 3 | -1 | 3 | 1 | 3 | 1 |
| 23 | 3 | -1 | -3 | 1 | -3 | -3 | -3 | 3 | 3 | -1 | 1 | -3 | -1 | 3 | 1 | 1 | 3 | 3 |
| 24 | 3 | -1 | -1 | 1 | -3 | -1 | -3 | -1 | -3 | -3 | -1 | -3 | 1 | 1 | 1 | -3 | -3 | 3 |
| 25 | -3 | -3 | 1 | -3 | 3 | 3 | 3 | -1 | 3 | 1 | 1 | -3 | -3 | -3 | 3 | -3 | -1 | -1 |
| 26 | -3 | -1 | -1 | -3 | 1 | -3 | 3 | -1 | -1 | -3 | 3 | 3 | -3 | -1 | 3 | -1 | -1 | -1 |
| 27 | -3 | -3 | 3 | 3 | -3 | 1 | 3 | -1 | -3 | 1 | -1 | -3 | 3 | -3 | -1 | -1 | -1 | 3 |
| 28 | -1 | -3 | 1 | -3 | -3 | -3 | 1 | 1 | 3 | 3 | -3 | 3 | 3 | -3 | -1 | 3 | -3 | 1 |
| 29 | -3 | 3 | 1 | -1 | -1 | -1 | -1 | 1 | -1 | 3 | 3 | -3 | -1 | 1 | 3 | -1 | 3 | -1 |

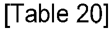

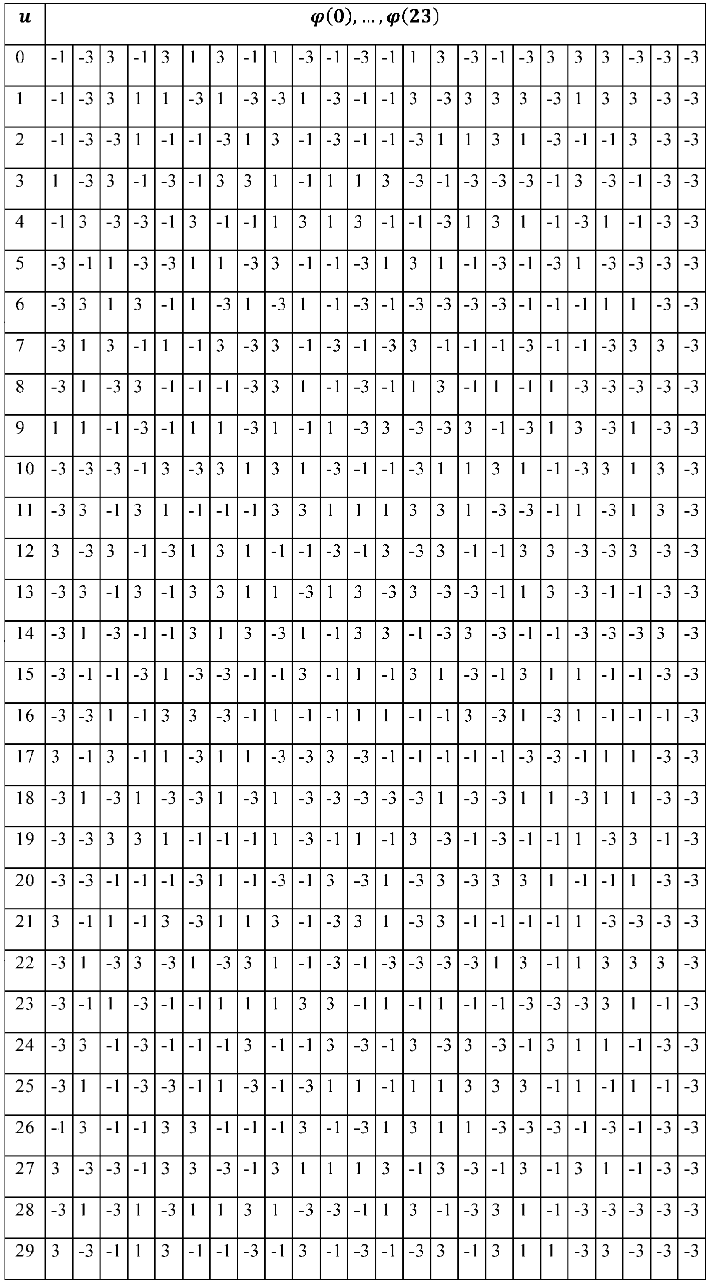

**[Table 21]**

| ***k̅*ₕₒₚ** | ***k*ₕₒₚ** | | |
|---|---|---|---|
| | ***P*_{F} = 1** | ***P*_{F} = 2** | ***P*_{F} = 4** |
| 0 | 0 | 0 | 0 |
| 1 | - | 1 | 2 |
| 2 | - | - | 1 |
| 3 | - | - | 3 |

**[Table 22]**

| ***K* _{TC}** | ${k}_{offset}^{0} , … , {k}_{offset}^{{N}_{symb}^{SRS} - 1}$ | | | | |
|---|---|---|---|---|---|
| | ${N}_{symb}^{SRS} = 1$ | ${N}_{symb}^{SRS} = 2$ | ${N}_{symb}^{SRS} = 4$ | ${N}_{symb}^{SRS} = 8$ | ${N}_{symb}^{SRS} = 12$ |
| 2 | 0 | 0,1 | 0,1,0,1 | - | - |
| 4 | - | 0, 2 | 0, 2, 1, 3 | 0, 2, 1, 3, 0, 2, 1, 3 | 0, 2, 1, 3, 0, 2, 1, 3, 0, 2, 1, 3 |
| 8 | - | - | 0, 4, 2, 6 | 0, 4, 2, 6, 1, 5, 3, 7 | 0, 4, 2, 6, 1, 5, 3, 7, 0, 4, 2, 6 |

### [Regarding Terminal Capability Report]

In LTE and NR, the terminal may perform a procedure of reporting, to the base station, capability supported by the terminal while being connected to a serving base station. This will be referred to as a UE capability report in the description below.

The base station may transmit, to the terminal in a connected state, a UE capability enquiry message requesting a capability report. The message may include a UE capability request for each radio access technology (RAT) type of the base station. The request for each RAT type may include supported frequency band combination information or the like. Also, regarding the UE capability enquiry message, a plurality of UE capabilities for each RAT type may be requested through one RRC message container transmitted by the base station, or the base station may transmit, to the terminal, the UE capability enquiry message including the UE capability request for each RAT type a plurality of times. In other words, the UE capability enquiry may be repeated a plurality of times in one message, and the terminal may configure a corresponding UE capability information message and report the same a plurality of times. In a next-generation mobile communication system, the UE capability may be requested for multi-RAT dual connectivity (MR-DC) as well as NR, LTE, and E-UTRA-NR dual connectivity (EN-DC). The UE capability enquiry message is generally transmitted at an initial stage after the terminal has been connected to the base station, but may be requested in any condition upon necessity by the base station.

Upon receiving a UE capability report request from the base station, the terminal configures UE capability according to band information and RAT type requested by the base station. A method by which the terminal configures the UE capability in an NR system will now be described.
1. When the terminal receives, from the base station, a list of LTE and/or NR bands as the UE capability request, the terminal configures a band combination (BC) regarding EN-DC and NR stand-alone (SA). In other words, the terminal configures a candidate list of BCs regarding the EN-DC and NR SA, based on bands requested from the base station through FreqBandList. Priorities of the bands are in an order stated in FreqBandList.
2. When the base station has requested the UE capability report by setting an "eutra-nr-only" flag or an "eutra" flag, the terminal may completely remove candidates regarding NR SA BC from the configured candidate list of BCs. Such an operation may be performed only when an LTE base station (eNB) requests "eutra" capability.
3. Then, the terminal removes fallback BCs from the configured candidate list of BCs. Here, the fallback BC denotes a BC obtainable by removing a band corresponding to at least one SCell from an arbitrary BC, and this is possible because a BC before removing the band corresponding to the at least one SCell already covers the fallback BC. This operation is also applied to MR-DC, i.e., to LTE bands. The remaining BCs are a final "list of candidate BCs".
4. The terminal selects BCs to be reported by selecting, from the final "list of candidate BCs", the BCs according to a requested RAT type. Here, the terminal configures supportedBandCombinationList in a determined order. In other words, the terminal configures UE capability and BCs to be reported according to an order of pre-set rat-Type. (nr -> eutra-nr -> eutra). Also, featureSetCombination regarding the configured supportedBandCombinationList is configured, and a list of "candidate feature set combinations" is configured from the list of candidate BCs from which a list of fallback BCs (including capability of a same or lower level) has been removed. The "candidate feature set combination" includes all feature set combinations regarding NR and EUTRA-NR BCs, and may be obtained from feature set combinations of UE-NR-Capabilities and UE-MRDC-Capabilities containers.
5. When the requested rat Type is eutra-nr and influential, the featureSetCombinations are included both of the UE-MRDC-Capabilities and UE-NR-Capabilities containers. However, a feature set of NR only includes UE-NR-Capabilities.

After the UE capability is configured, the terminal transmits, to the base station, UE capability information message including the UE capability. Based on the UE capability received from the terminal, the base station performs, on the terminal, appropriate scheduling and transmission/reception management.

### <First embodiment: Method of Supporting SRS for Usage of Codebook for Terminal Supporting Three Transmission Antennas>

In an embodiment of the present disclosure, a method of supporting an SRS for usage of a codebook for a terminal supporting three transmission antennas will be described. The present embodiment may operate in combination with at least one other embodiment described in the present disclosure.

As described above, for codebook-based PUSCH transmission, the terminal may be configured with a codebook for txConfig, which is higher layer signaling. In addition, the terminal may be configured, by the base station, with an SRS resource set in which usage, which is higher layer signaling, is configured as a codebook, and the terminal may be configured with up to two SRS resources within the configured SRS resource set. In this case, the SRS resource that the terminal supporting three transmission antennas may be configured with so as to transmit a codebook-based PUSCH may follow a combination of at least one of methods described below.

### [Method 1-1]

According to an embodiment of the present disclosure, the terminal may be configured with an SRS resource consisting of four antenna ports so as to perform codebook-based PUSCH transmission through three antenna ports. In detail, the terminal may expect that up to two SRS resources consisting of four antenna ports are configured within an SRS resource set in which usage is configured as a codebook. That is, the SRS resource set in which the usage is configured as a codebook may include up to two SRS resources consisting of four antenna ports. Here, the terminal may not perform transmission for one antenna port from among the four antenna ports constituting the SRS resource. In this case, the one antenna port for which the terminal does not perform transmission may be determined to be the last antenna port (for example, an antenna port 1003) from among the four antenna ports constituting (included in) the SRS resource. Alternatively, the one antenna port for which the terminal does not perform transmission may be determined to be the first antenna port (for example, an antenna port 1000) from among the four antenna ports constituting (included in) the SRS resource. Alternatively, the one antenna port for which the terminal does not perform transmission may be determined to be a random antenna port (for example, an antenna port 1002 or any one of the antenna ports 1000 to 1003) that may be defined in the specification from among the four antenna ports constituting (included in) the SRS resource. Alternatively, the one antenna port for which the terminal does not perform transmission may be determined to be an antenna port that is determined according to notification from the base station (a combination of at least one of higher layer signaling, MAC-CE signaling, or L1 signaling) from among the four antenna ports constituting (included in) the SRS resource (for example, the terminal may be configured via higher layer signaling from the base station that the antenna port 1002 is not transmitted).

Hereinafter, in the present disclosure, the terminal not performing transmission for a specific antenna port associated with an SRS resource may indicate that the terminal does not perform SRS transmission on the specific antenna port. In addition, in the present disclosure, the specific antenna port associated with the SRS resource not being transmitted may indicate that the terminal does not perform SRS transmission on the specific antenna port.

Hereinafter, in the present disclosure, the terminal performing transmission for the specific antenna port associated with the SRS resource may indicate that the terminal performs the SRS transmission on the specific antenna port. In addition, in the present disclosure, the specific antenna port associated with the SRS resource being transmitted may indicate that the terminal performs the SRS transmission on the specific antenna port.

According to an embodiment of the present disclosure, in a case where the terminal does not perform transmission for the last antenna port (for example, the antenna port 1003) for the SRS resource consisting of the four antenna ports, the terminal may transmit an SRS on allocated time and frequency resources (SRS resource) by using only a comb offset and a cyclic shift value allocated to the antenna ports 1000, 1001, and 1002, according to an SRS sequence generated based on the SRS resource. Because it may be assumed by the terminal and the base station that the antenna port associated with the SRS transmitted by the terminal, and a PUSCH antenna port that the may be scheduled by the base station based on the SRS transmitted by the terminal are the same as each other, in a case where there are up to three antenna ports of the PUSCH transmitted from the terminal, such as 1000, 1001, and 1002, in consideration of three transmission antennas, the last antenna port 1003 from among the four antenna ports not being transmitted (the SRS not being transmitted on the last antenna port 1003) for the SRS resource consisting of the four antenna ports may be the simplest method from the perspective of a single terminal and a base station capable of maintaining a connection/association between the SRS antenna port and the PUSCH antenna port. Here, the connection/association between the SRS antenna port and the PUSCH antenna port may indicate an assumption that the antenna port associated with the SRS transmitted by the terminal and the PUSCH antenna port that may be scheduled by the base station based on the SRS transmitted by the terminal are the same as each other. In this case, maintaining the connection/association between the SRS antenna port and the PUSCH antenna port may indicate that port numbers of antenna ports constituting the SRS antenna port and port numbers of antenna ports constituting the PUSCH antenna port are the same. For example, when the port numbers of the antenna ports constituting the SRS antenna port are 1000, 1001, and 1002, the connection/association between the SRS antenna port and the PUSCH antenna port may be maintained in a case where the port numbers of the antenna ports constituting the PUSCH antenna port are also 1000, 1001, and 1002. In another example, in a case where the port numbers of the antenna ports constituting the SRS antenna port are 1001, 1002, and 1003, but the port numbers of the antenna ports constituting the PUSCH antenna port are 1000, 1001, and 1002, the connection/association between the SRS antenna port and the PUSCH antenna port may not be maintained. In some embodiments, the SRS transmission not being regularly performed for the specific antenna port may hinder flexibility from the perspective of scheduling of the base station.

According to an embodiment of the present disclosure, in a case where, for the SRS resource consisting of four antenna ports, an antenna port other than the last antenna port is not transmitted (that is, in a case where the SRS is not transmitted on the antenna port other than the last antenna port from among the four antenna ports constituting the SRS resource), the terminal may re-adjust/re-arrange/re-number the numbers of the remaining antenna ports, excluding the antenna port on which transmission is not performed, to 1000, 1001, and 1002. For example, when the terminal does not transmit the first antenna port (for example, the antenna port 1000), the terminal may re-adjust/re-arrange/re-number the remaining antenna ports 1001, 1002, and 1003 to 1000, 1001, and 1002, respectively, generate an SRS sequence, and transmit the SRS in the allocated time and frequency resources (SRS resource) by using the comb offset and the cyclic shift value. In another example, in a case where the terminal does not perform transmission on the second antenna port (for example, the antenna port 1001), the terminal may re-adjust/re-arrange/re-number, from among the remaining antenna ports 1000, 1002, and 1003, 1002 to 1001 and 1003 to 1002. In another example, in a case where the terminal does not perform transmission on the third antenna port (for example, the antenna port 1002), the terminal may re-adjust/re-arrange/re-number, from among the remaining antenna ports 1000, 1001, and 1003, 1003 to 1002. In another example, in a case where the terminal does not perform transmission on the fourth antenna port (for example, the antenna port 1003), because the remaining antenna ports are 1000, 1001, and 1002, the terminal may not perform re-adjustment/rearrangement/re-numbering. Re-adjusting an antenna port number may be a method capable of maintaining the connection/association between the SRS and PUSCH antenna ports, but from the perspective of the base station allocating resources to a plurality of terminals, the same effect as the above-described method of not performing transmission on the last antenna port may be obtained, and thus, scheduling flexibility of the base station may be impaired, similarly to the above-described method.

According to an embodiment of the present disclosure, in a case where, for the SRS resource consisting of the four antenna ports, the antenna port other than the last antenna port is not transmitted, the terminal may not re-adjust/re-arrange/re-number the numbers of the remaining antenna ports, excluding the antenna port that is not transmitted, to 1000, 1001, and 1002. For example, when the terminal does not transmit the first antenna port (for example, the antenna port 1000), the terminal may generate the SRS sequence assuming that the SRS is transmitted on the remaining antenna ports 1001, 1002, and 1003, and may perform transmission on the allocated time and frequency resources (SRS resource) by using the comb offset and the cyclic shift value. In this case, the PUSCH antenna ports are 1000, 1001, and 1002, whereas the SRS antenna ports are 1001, 1002, and 1003, and thus, the assumption between the base station and the terminal that the PUSCH antenna ports and the SRS antenna ports are the same is broken, and accordingly, a definition of a connection/association between the PUSCH antenna ports and the SRS antenna ports may be additionally required. For example, a connection may be defined in which the PUSCH antenna ports and the SRS antenna ports are associated one-to-one in ascending order starting from the lowest antenna port number. In other words, according to the additional connection, when an individual connection between ports is represented as (PUSCH antenna port ↔ SRS antenna port), the overall additional connection may include individual connections between ports such as (1000 ↔ 1001), (1001 ↔ 1002), and (1002 ↔ 1003). According to the present embodiment, from the perspective of the base station allocating resources to a plurality of terminals, it may be possible to flexibly allocate the antenna ports of another terminal according to a scheduling situation.

The [Method 1-1] above may be applied not only to a terminal including three transmission antennas, but may also be similarly applied to a case where a terminal including 5, 6, and 7 transmission antennas defines an SRS resource to perform codebook-based PUSCH transmission. For example, in a case where the terminal includes 5, 6, and 7 transmission antennas, the terminal may not perform transmission on 3, 2, and 1 antenna ports, respectively, in an SRS resource consisting of eight antenna ports, and as to how to select the 3, 2, and 1 antenna ports, respectively, a method of not transmitting one antenna port from among the four antenna ports may be reused.

### [Method 1-2]

According to an embodiment of the present disclosure, in order to perform the codebook-based PUSCH transmission through three antenna ports, the terminal may perform uplink channel estimation for the three antenna ports by using, for each antenna port, an SRS resource consisting of one antenna port and an SRS resource consisting of two antenna ports. That is, the terminal may transmit an SRS to the base station through the three antenna ports by using, for each antenna port, the SRS resource consisting of one antenna port and the SRS resource consisting of two antenna ports, and the base station may perform the uplink channel estimation by using the SRS transmitted through the three antenna ports. The terminal may consider, within an SRS resource set in which usage is configured to codebook, the SRS resource consisting of one antenna port and the SRS resource consisting of two antenna ports as one SRS resource group, and the terminal may expect that up to two SRS resource groups each including the SRS resource consisting of one antenna port and an SRS resource consisting of two antenna ports are configured. For example, in a case where the terminal is configured with first and third SRS resources consisting of one antenna port and second and fourth SRS resources consisting of two antenna ports, the terminal may consider the first and second SRS resources as a first SRS resource group and use the same for channel estimation for the three antenna ports, and may consider the third and fourth SRS resources as a second SRS resource group and likewise use the same for the channel estimation for the three antenna ports.

Instead of indicating the SRS resource to the terminal through an SRI field in DCI, the base station may indicate each of the SRS resource groups to the terminal. For example, as described above, in a case where the terminal is configured with the first to fourth SRS resources, the first and second SRS resources are defined as the first SRS resource group, and the third and fourth SRS resources are defined as the second SRS resource group, the terminal may assume that a first codepoint and a second codepoint of the SRI field indicate the first SRS resource group and the second SRS resource group, respectively.

### [Method 1-3]

According to an embodiment of the present disclosure, in order to perform the codebook-based PUSCH transmission through three antenna ports, the terminal may define an SRS resource consisting of three antenna ports and perform uplink channel estimation for the three antenna ports. In other words, the SRS resource consisting of three antenna ports may be defined/configured, an SRS may be transmitted to the base station through the three antenna ports on one SRS resource consisting of three antenna ports, and the base station may perform the uplink channel estimation by using the SRS transmitted through the three antenna ports on the one SRS resource. At this time, the three antenna ports that may be included in the SRS resource may be 1000, 1001, and 1002, respectively. The terminal may expect that up to two SRS resources consisting of three antenna ports are configured within an SRS resource set in which usage is configured as a codebook. The terminal may be configured with one comb offset and one cyclic shift value, which may be commonly applied to the three antenna ports. For example, when a first SRS resource including three antenna ports and a second SRS resource including three antenna ports are configured, a first comb offset and a first cyclic shift value may be configured for the three antenna ports included in the first SRS resource, and a second comb offset and a second cyclic shift value may be configured for the three antenna ports included in the second SRS resource.

According to an embodiment of the present disclosure, when a comb size is 2 (for example, *K*_{TC} = 2, that is, ${n}_{SRS}^{cs , max} = 8$ according to Table 15 above), the terminal may determine the comb offset and the cyclic shift value of the antenna ports 1000, 1001, and 1002 by using a combination of at least one of following embodiments.

According to an embodiment of the present disclosure, when *p̅ᵢ* ∈ {1000,1001,1002} , the terminal may define ${K}_{TC}^{{p}_{i}} = {k}_{TC}$, and at this time, *k̅*_{TC} ∈ {0,1, ..., *K*_{TC} - 1} may be configured by higher layer signaling. In other words, because the terminal may transmit the three antenna ports 1000, 1001, and 1002 by distinguishing the same with different cyclic shift values at the same RE position, excellent frequency resource allocation efficiency may be ensured. The terminal may define and use the cyclic shift value for *p̅ᵢ* ∈ {1000,1001,1002} as ${n}_{SRS}^{cs , i} = \left({n}_{SRS}^{cs}+\left⌊\frac{{n}_{SRS}^{cs , max} \left({\overline{p}}_{i}-1000\right)}{{\overline{N}}_{ap}^{SRS}}\right⌋\right) mod {n}_{SRS}^{cs , max}$, and at this time, ${n}_{SRS}^{cs} ∈ \left\{0,1,…,{n}_{SRS}^{cs , max}-1\right\}$ may be configured by higher layer signaling. At this time, ${\overline{N}}_{ap}^{SRS}$ is the number of SRS antenna ports (= 3), and ${n}_{SRS}^{cs , max} = 8$, and for example, when ${n}_{SRS}^{cs} = 0$, the cyclic shift values for the antenna ports 1000, 1001, and 1002 may be 0, 2, and 5, respectively. Hereinafter, in calculating a cyclic shift interval between the antenna ports, a property in which a value of the cyclic shift returns to 0 may be used when the value of the cyclic shift reaches the maximum value. In detail, when the maximum value of the cyclic shift is 8, the value of the cyclic shift may return to 0 again after 0, 1, 2, 3, 4, 5, 6, and 7. In this case, because the cyclic shift interval between the antenna ports 1000 and 1001 may be 2 (2 - 0 = 2), the cyclic shift interval between 1001 and 1002 may be 3 (5 - 2 = 3), and the cyclic shift interval between 1002 and 1000 may be 3 (8 - 5 = 3) (that is, when calculating the cyclic shift interval between the ports 1002 and 1000, the cyclic shift value of the port 1000, of which a cyclic shift value is 0, is assumed to be 8), an unequal cyclic shift interval may occur, and thus, channel estimation performance between antenna ports may vary. As another method, the terminal may define and use the cyclic shift value for *p̅ᵢ* ∈ {1000,1001,1002} as ${n}_{SRS}^{cs , i} = \left({n}_{SRS}^{cs}+\left⌈\frac{{n}_{SRS}^{cs , max} \left({\overline{p}}_{i}-1000\right)}{{\overline{N}}_{ap}^{SRS}}\right⌉\right) mod {n}_{SRS}^{cs , max}$, and when ${n}_{SRS}^{cs} = 0$, the cyclic shift values for the antenna ports 1000, 1001, and 1002 may be 0, 3, and 6, respectively. Hereinafter, in calculating a cyclic shift interval between the antenna ports, a property in which a value of the cyclic shift returns to 0 may be used when the value of the cyclic shift reaches the maximum value. In detail, when the maximum value of the cyclic shift is 8, the value of the cyclic shift may return to 0 again after 0, 1, 2, 3, 4, 5, 6, and 7. In this case as well, because the cyclic shift interval between the antenna ports 1000 and 1001 may be 3, the cyclic shift interval between 1001 and 1002 may be 3, and the cyclic shift interval between 1002 and 1000 may be 2 (8 - 6 = 2) (that is, when calculating the cyclic shift interval between the ports 1002 and 1000, the cyclic shift value of the port 1000, of which a cyclic shift value is 0, is assumed to be 8), an unequal cyclic shift interval may occur, and thus, channel estimation performance between antenna ports may vary.

According to an embodiment of the present disclosure, when *p̅*ᵢ ∈ {1001}, the terminal may define ${k}_{TC}^{\left({p}_{i}\right)} = \left({\overline{k}}_{TC}+{K}_{TC}/2\right) mod {K}_{TC}$, and when *p̅ᵢ* ∈ {1000, 1002}, the terminal may define ${k}_{TC}^{\left({p}_{i}\right)} = {\overline{k}}_{TC}$. In other words, the terminal transmits the antenna ports 1000 and 1002 by distinguishing the same with different cyclic shift values at the same RE position, and transmits the antenna port 1001 at different RE positions, thereby using twice the frequency resources, but may maximize the cyclic shift interval between two antenna ports allocated within the same RE. The terminal may define and use the cyclic shift value for *p̅*ᵢ ∈ {1000,1001,1002} as ${n}_{SRS}^{cs , i} = \left({n}_{SRS}^{cs}+\frac{{n}_{SRS}^{cs , max} \left⌊\left({\overline{p}}_{i}-1000\right)/2\right⌋}{\left⌈{\overline{N}}_{ap}^{SRS}/2\right⌉}\right) mod {n}_{SRS}^{cs , max}$. For example, when *k̅*_{TC} = 0, ${n}_{SRS}^{cs} = 0$, the cyclic shift values for the antenna ports 1000 and 1002 at a comb offset 0 position may be 0 and 4, respectively, and the cyclic shift value for the antenna port 1001 at a comb offset 1 position may be 0. In this case, the cyclic shift interval between the antenna ports 1000 and 1002 is 4, and because the antenna port 1001 is not allocated with another cyclic shift value when there is no other SRS transmission allocation from the base station, the channel estimation performance between antenna ports may differ. In addition, even when transmission is performed at different comb offset positions, because the interval between comb offsets differs by only one, the fact that the cyclic shift value for the antenna port 1000 at comb offset 0 and the cyclic shift value for the antenna port 1001 at comb offset 1 are both equal to 0 as in the above-described method may be a factor that makes it difficult to distinguish between antenna ports during channel estimation. Accordingly, when the terminal defines and uses the cyclic shift value of *p̅ᵢ* ∈ {1000,1001,1002} as ${n}_{SRS}^{cs , i} = \left({n}_{SRS}^{cs}+\frac{{n}_{SRS}^{cs , max} \left⌈\left({\overline{p}}_{i}-1000\right)/2\right⌉}{\left⌈{\overline{N}}_{ap}^{SRS}/2\right⌉}+{k}_{TC}^{\left({p}_{i}\right)}{n}_{SRS}^{cs , max}/2\right) mod {n}_{SRS}^{cs , max}$, and when *k̅*_{TC} = 0, ${n}_{SRS}^{cs} = 0$, the cyclic shift values for the antenna ports 1000 and 1002 at the comb offset 0 position may be 0 and 4, respectively, and the cyclic shift value for the antenna port 1001 at the comb offset 1 position may be 8. Thus, even when the comb offset differs by 1, the cyclic shift values at each comb offset are allocated so as not to overlap each other, thereby enabling a clear distinction between antenna ports during channel estimation.

When the comb size is 4 (for example, *K_{TC}=*4, that is, ${n}_{SRS}^{cs , max} = 12$ according to Table 15 above), the terminal may determine the comb offset values of the antenna ports 1000, 1001, and 1002 by using a combination of at least one of embodiments below.

According to an embodiment of the present disclosure, when *p̅ᵢ* ∈ {1000,1001,1002}, the terminal may define ${k}_{TC}^{\left({p}_{i}\right)} = {\overline{k}}_{TC}$, and in this case, *k̅*_{TC} ∈ {0,1, ..., *K*_{TC} - 1} may be configured by higher layer signaling. In other words, because the terminal may transmit the three antenna ports 1000, 1001, and 1002 by distinguishing the same with different cyclic shift values at the same RE position, the frequency resource allocation efficiency may be satisfactory. The terminal may define and use the cyclic shift value for *p̅ᵢ* ∈ {1000,1001,1002} as ${n}_{SRS}^{cs , i} = \left({n}_{SRS}^{cs}+\frac{{n}_{SRS}^{cs , max} \left⌈\left({\overline{p}}_{i}-1000\right)/2\right⌉}{\left⌈{\overline{N}}_{ap}^{SRS}/2\right⌉}+{k}_{TC}^{\left({p}_{i}\right)}{n}_{SRS}^{cs , max}/2\right) mod {n}_{SRS}^{cs , max}$, and at this time, ${n}_{SRS}^{cs} ∈ \left\{0,1,…,{n}_{SRS}^{cs , max}-1\right\}$ may be configured by higher layer signaling. For example, when ${n}_{SRS}^{cs} = 0$, the cyclic shift values for the antenna ports 1000, 1001, and 1002 may be 0, 4, and 8, respectively. Hereinafter, in calculating a cyclic shift interval between the antenna ports, a property in which a value of the cyclic shift returns to 0 may be used when the value of the cyclic shift reaches the maximum value. In detail, when the maximum value of the cyclic shift is 12, the cyclic shift value may return to 0 again after 0, 1, 2, 3, 4, 5, 6, 7, 8, 9, 10, and 11. In this case, because the interval between any two antenna ports from among the three antenna ports may all be equally 4 (i.e., when calculating the cyclic shift interval between the ports 1002 and 1000, the cyclic shift value of the port 1000 having a cyclic shift value of 0 is assumed to be 12), the channel estimation performance between the antenna ports may be similar.

According to an embodiment of the present disclosure, the terminal may define ${k}_{TC}^{\left({p}_{i}\right)} = \left({\overline{k}}_{TC}+{K}_{TC}/2\right) mod {K}_{TC}$ when *p̅*ᵢ ∈ {1001}, and may define ${k}_{TC}^{\left({p}_{i}\right)} = {\overline{k}}_{TC}$ when *p̅ᵢ* ∈ {1000, 1002}. In other words, the terminal transmits the antenna ports 1000 and 1002 by distinguishing the same with different cyclic shift values at the same RE position, and transmits the antenna port 1001 at another RE position, thereby using twice the frequency resources, but may maximize the cyclic shift interval between two antenna ports allocated within the same RE. The terminal may define and use the cyclic shift value for *p̅ᵢ* ∈ {1000,1001,1002} as ${n}_{SRS}^{cs , i} = \left({n}_{SRS}^{cs}+\frac{{n}_{SRS}^{cs , max} \left⌊\left({\overline{p}}_{i}-1000\right)/2\right⌋}{\left⌈{\overline{N}}_{ap}^{SRS}/2\right⌉}\right) mod {n}_{SRS}^{cs , max}$. For example, when *k̅*_{TC} = 0, ${n}_{SRS}^{cs} = 0$, the cyclic shift values for the antenna ports 1000 and 1002 at the comb offset 0 position may be 0 and 6, respectively, and the cyclic shift value for the antenna port 1001 at the comb offset 2 position may be 0. In this case, the cyclic shift interval between the antenna ports 1000 and 1002 is 6, and because the antenna port 1001 is not allocated with another cyclic shift value when there is no other SRS transmission allocation from the base station, the channel estimation performance between antenna ports may differ.

According to an embodiment of the present disclosure, the terminal may define ${k}_{TC}^{\left({p}_{i}\right)} = \left({\overline{k}}_{TC}+\left⌊\frac{{K}_{TC}}{3}\right⌋\left({p}_{i}-1000\right)\right) mod {K}_{TC}$ when *p̅ᵢ* ∈ {1000,1001,1002} . In other words, the terminal performs transmission at different comb offset positions for each antenna port to use RE resources, but because there is no other antenna port allocated within the same RE, the base station may appropriately perform cyclic shift allocation for other SRS transmissions to maximize the cyclic shift interval. The terminal may define and use the cyclic shift value for *p̅*ᵢ ∈ {1000,1001,1002} as ${n}_{SRS}^{cs , i} = {n}_{SRS}^{cs}$, For example, when *k̅*_{TC} = 0, ${n}_{SRS}^{cs} = 0$, the cyclic shift values for the antenna ports 1000, 1001, and 1002 at the comb offset 0, 1, and 2 positions may all be 0. In this case, because the antenna ports 1000, 1001, and 1002 are not allocated with different cyclic shift values when there is no other SRS transmission allocation from the base station, when the base station performs other SRS transmission allocation equally for each RE, the channel estimation performance between the antenna ports may be similar. In addition, even when the SRS is transmitted at different comb offset positions, because the interval between the comb offsets differs by only 1, when the cyclic shift values for the antenna ports 1000, 1001, and 1002 at comb offsets 0, 1, and 2 are all equal to 0 as in the method described above, it may be difficult to distinguish between the antenna ports during channel estimation. Accordingly, when the terminal defines and uses the cyclic shift value of *p̅*ᵢ E {1000,1001,1002} as ${n}_{SRS}^{cs , i} = \left({n}_{SRS}^{cs}+\frac{{n}_{SRS}^{cs , max} \left({\overline{p}}_{i}-1000\right)}{{\overline{N}}_{ap}^{SRS}}\right) mod {n}_{SRS}^{cs , max}$, when *k̅*_{TC} = 0, ${n}_{SRS}^{cs} = 0$, the cyclic shift values for the antenna ports 1000, 1001, and 1002 at the comb offset 0, 1, and 2 positions may be 0, 4, and 8, respectively. Thus, even when the comb offset differs by 1, the cyclic shift values at each comb offset are allocated so as not to overlap each other, thereby enabling clear distinction between the antenna ports during channel estimation.

According to an embodiment of the present disclosure, when the comb size is 8 (for example, *K*_{TC} = 8, that is, ${n}_{SRS}^{cs , max} = 6$ according to Table 15 above), the terminal may determine the comb offset values of the antenna ports 1000, 1001, and 1002 by using a combination of at least one of following embodiments.

According to an embodiment of the present disclosure, when *p̅ᵢ* ∈ {1000,1001,1002}, the terminal may define ${k}_{TC}^{\left({p}_{i}\right)} = {\overline{k}}_{TC}$, and in this case, *k̅*_{TC} ∈ {0,1, ..., *K*_{TC} - 1} may be configured by higher layer signaling. In other words, because the terminal may transmit the three antenna ports 1000, 1001, and 1002 by distinguishing the same with different cyclic shift values at the same RE position, excellent frequency resource allocation efficiency may be ensured. The terminal may define and use the cyclic shift value for *p̅ᵢ* ∈ {1000,1001,1002} as ${n}_{SRS}^{cs , i} = \left({n}_{SRS}^{cs}+\frac{{n}_{SRS}^{cs , max} \left({\overline{p}}_{i}-1000\right)}{{\overline{N}}_{ap}^{SRS}}\right) mod {n}_{SRS}^{cs , max}$, and at this time, ${n}_{SRS}^{cs} ∈ \left\{0,1,…,{n}_{SRS}^{cs , max}-1\right\}$, may be configured by higher layer signaling. For example, when ${n}_{SRS}^{cs} = 0$, the cyclic shift values for the antenna ports 1000, 1001, and 1002 may be 0, 2, and 4, respectively. In this case, because the interval between any two antenna ports from among the three antenna ports may all be equally 2, the channel estimation performance between the antenna ports may be similar.

According to an embodiment of the present disclosure, the terminal may define ${k}_{TC}^{\left({p}_{i}\right)} = \left({\overline{k}}_{TC}+{K}_{TC}/2\right) mod {K}_{TC}$ when *p̅ᵢ* ∈ {1001}, and may define ${k}_{TC}^{\left({p}_{i}\right)} = {\overline{k}}_{TC}$ when *p̅ᵢ* ∈ {1000,1002}. In other words, the terminal transmits the antenna ports 1000 and 1002 by distinguishing the same with different cyclic shift values at the same RE position, and transmits the antenna port 1001 at another RE position, thereby using twice the frequency resources, but may maximize the cyclic shift interval between two antenna ports allocated within the same RE. The terminal may define and use the cyclic shift value for *p̅ᵢ* ∈ {1000,1001,1002} as ${n}_{SRS}^{cs , i} = \left({n}_{SRS}^{cs}+\frac{{n}_{SRS}^{cs , max} \left⌊\left({\overline{p}}_{i}-1000\right)/2\right⌋}{\left⌈{\overline{N}}_{ap}^{SRS}/2\right⌉}\right) mod {n}_{SRS}^{cs , max}$. For example, when *k̅*_{TC} = 0, ${n}_{SRS}^{cs} = 0$, the cyclic shift values for the antenna ports 1000 and 1002 at the comb offset 0 position may be 0 and 3, respectively, and the cyclic shift value for the antenna port 1001 at a comb offset 4 position may be 0. In this case, the cyclic shift interval between the antenna ports 1000 and 1002 is 3, and because the antenna port 1001 is not allocated with another cyclic shift value when there is no other SRS transmission allocation from the base station, the channel estimation performance between antenna ports may differ.

According to an embodiment of the present disclosure, the terminal may define ${k}_{TC}^{\left({p}_{i}\right)} = \left({\overline{k}}_{TC}+\left⌊\frac{{K}_{TC}}{3}\right⌋\left({p}_{i}-1000\right)\right) mod {K}_{TC}$ when *p̅*ᵢ ∈ {1000,1001,1002}. That is, although the terminal performs transmission at different comb offset positions for each antenna port, thereby using three times as much RE resources, because there is no other antenna port allocated within the same RE, the base station may appropriately perform cyclic shift allocation for other SRS transmissions to maximize the cyclic shift interval. The terminal may define and use the cyclic shift value for *p̅*ᵢ ∈ {1000,1001,1002} as ${n}_{SRS}^{cs , i} = {n}_{SRS}^{cs}$. For example, when *k̅*_{TC} = 0, ${n}_{SRS}^{cs} = 0$, the cyclic shift values for the antenna ports 1000, 1001, and 1002 at the comb offset positions 0, 2, and 4 may all be 0. In this case, because the antenna ports 1000, 1001, and 1002 are not allocated with different cyclic shift values when there is no other SRS transmission allocation from the base station, when the base station performs other SRS transmission allocation equally for each RE, the channel estimation performance between the antenna ports may be similar. In addition, even when transmission is performed at different comb offset positions, because the interval between the comb offsets differs by only 2, when the cyclic shift values for the antenna port 1000, 1001, and 1002 at comb offsets 0, 1, and 2 are all equal to 0 as in the above-described method, it may be difficult to distinguish between the antenna ports during channel estimation. Accordingly, when the terminal defines and uses the cyclic shift value of *p̅ᵢ* ∈ {1000,1001,1002} as ${n}_{SRS}^{cs , i} = \left({n}_{SRS}^{cs}+\frac{{n}_{SRS}^{cs , max} \left({\overline{p}}_{i}-1000\right)}{{\overline{N}}_{ap}^{SRS}}\right) mod {n}_{SRS}^{cs , max}$, when *k̅*_{TC} = 0, ${n}_{SRS}^{cs} = 0$, the cyclic shift values for the antenna port 1000, 1001, and 1002 at the comb offset 0, 1, and 2 positions may be 0, 2, and 4, respectively. Thus, even when the comb offsets differ by 2, the cyclic shift values at each comb offset are allocated so as not to overlap each other, thereby enabling clear distinction between the antenna ports during channel estimation.

### [Method 1-4]

According to an embodiment of the present disclosure, in order to perform the codebook-based PUSCH transmission through three antenna ports, the terminal may define an SRS resource consisting of three antenna ports and perform uplink channel estimation for the three antenna ports. In other words, the SRS resource consisting of three antenna ports may be defined/configured, an SRS may be transmitted to the base station through the three antenna ports on one SRS resource consisting of three antenna ports, and the base station may perform the uplink channel estimation by using the SRS transmitted through the three antenna ports on the one SRS resource. At this time, the three antenna ports that may be included in the SRS resource may be 1000, 1001, and 1002, respectively. The terminal may expect that up to two SRS resources consisting of three antenna ports are configured within an SRS resource set in which usage is configured as a codebook.

The terminal may be configured with a plurality of comb offsets and cyclic shift values for each of the three antenna ports. When the terminal is configured with two comb offsets and two cyclic shift values, the terminal may apply the comb offset and the cyclic shift value to one of the three antenna ports (for example, the antenna port 1001) by using the first comb offset and the first cyclic shift value by using a method of allocating a comb offset and a cyclic shift for each antenna port in an SRS resource consisting of one antenna port, and may apply the second comb offset and the second cyclic shift value to two of the three antenna ports (for example, the antenna ports 1000 and 1002) by using the second comb offset and the second cyclic shift value by using a method of allocating a comb offset and a cyclic shift for each antenna port in an SRS resource consisting of two antenna ports.

When the terminal is configured with three comb offsets and three cyclic shift values, the terminal may apply the first comb offset and the first cyclic shift value to one of the three antenna ports (for example, the antenna port 1000) by using the first comb offset and the first cyclic shift value by using a method of allocating a comb offset and a cyclic shift for each antenna port in an SRS resource consisting of one antenna port, may apply the second comb offset and the second cyclic shift value to one of the three antenna ports (for example, the antenna port 1001) by using the second comb offset and the second cyclic shift value by using a method of allocating a comb offset and a cyclic shift for each antenna port in an SRS resource consisting of one antenna port, and may apply a third comb offset and a third cyclic shift value to one of the three antenna ports (for example, the antenna port 1002) by using the third comb offset and the third cyclic shift value by using a method of allocating a comb offset and a cyclic shift for each antenna port in an SRS resource consisting of one antenna port.

The terminal may be notified of a combination of at least one of [Method 1-1] to [Method 1-4] from the base station through a combination of at least one of higher layer signaling, MAC-CE signaling, or L1 signaling, or may expect that a combination of at least one of [Method 1-1] to [Method 1-4] is fixedly defined in the specification. In addition, when the terminal is notified of a combination of one or more specific methods from the base station through a combination of at least one of higher layer signaling, MAC-CE signaling, or L1 signaling, the terminal may be unable to support one or more other specific combinations of methods. For example, the terminal may expect that [Method 1-1] is fixedly defined in the specification, and the terminal may assume that [Method 1-1] is used for SRS resource configuration during codebook-based PUSCH transmission through three antenna ports. In another example, the terminal may be notified of [Method 1-4] from the base station through a combination of at least one of higher layer signaling, MAC-CE signaling, or L1 signaling, and in this case, the terminal may consider that it has been notified by the base station that [Method 1-1] is not supported.

The terminal may report to the base station, as UE capability, whether a combination of at least one of [Method 1-1] to [Method 1-4] is supportable. In this case, when the terminal reports to the base station, as UE capability, that a combination of one or more specific methods is supportable, the terminal may be considered to have reported that one or more other specific combinations of methods are not supportable. For example, the terminal may report to the base station whether [Method 1-1] is supportable. In another example, the terminal may report to the base station that [Method 1-4] is supportable, and such a UE capability report may indicate that the terminal is unable to support [Method 1-1].

### <Second Embodiment: Method of Defining Uplink Codebook for Terminal Supporting Three Transmission Antennas>

A method of defining an uplink codebook for the terminal supporting three transmission antennas, according to an embodiment of the present disclosure, will be described. The present embodiment may operate in combination with at least one other embodiment described in the present disclosure.

The transmission antenna supporting three transmission antennas may report to the base station, as UE capability, that codebook-based PUSCH transmission using three antenna ports is possible. At this time, the terminal may report to the base station that only non-coherent transmission is possible. For such a codebook-based PUSCH transmission scheme, the terminal may be indicated, by the base station, a TPMI corresponding to the three antenna ports. When the terminal supports the three transmission antennas, the terminal may support a non-coherent codebook. In this case, non-coherent precoding matrices W for one-layer, two-layer, and three-layer transmissions using the three antenna ports at the terminal may be defined as shown in Table 23, Table 24, and Table 25 below, respectively.

In Table 24 below, the terminal may also be indicated, by the base station, a matrix in which an order of two columns of each of TPMI 0, 1, and 2 is swapped. For example, the terminal may also be indicated, by the base station, a matrix such as $\frac{1}{\sqrt{6}} \left[\begin{matrix}0 & 1 \\ 1 & 0 \\ 0 & 0\end{matrix}\right]$ in which the two columns of TPMI 0 in Table 24 below are swapped. In addition to the matrix in which the order of the two columns of TPMI 0 is swapped, when the matrix in which the order of the two columns of TPMI 1 is swapped and the matrix in which the order of the two columns of TPMI 2 is swapped are included, Table 24 below may include six matrices to which TPMI 0 through 5 are allocated.

Likewise, in Table 25 below, the terminal may also support matrices in which an order of three columns of TPMI 0 is swapped. For example, the terminal may also be indicated, by the base station, a matrix such as $\frac{1}{\sqrt{3}} \left[\begin{matrix}0 & 0 & 1 \\ 1 & 0 & 0 \\ 0 & 1 & 0\end{matrix}\right]$ in which the positions of the three columns of TPMI 0 in Table 25 below are swapped with each other. In this case, because the total number of cases in which three different columns may be arranged in different orders is 6 (3! = 3*2*1 = 6), Table 25, which is a codebook for 3-port 3-layer transmission, may include six matrices to which TPMI 0 through 5 are allocated.

**[Table 23]**

| TPMI index | W | | |
|---|---|---|---|
| | (TPMI indexes are allocated in ascending order from left to right) | | |
| 0-2 | $\frac{1}{\sqrt{3}} \left[\begin{matrix}1 \\ 0 \\ 0\end{matrix}\right]$ | $\frac{1}{\sqrt{3}} \left[\begin{matrix}0 \\ 1 \\ 0\end{matrix}\right]$ | $\frac{1}{\sqrt{3}} \left[\begin{matrix}0 \\ 0 \\ 1\end{matrix}\right]$ |

**[Table 24]**

| TPMI index | W | | |
|---|---|---|---|
| | (TPMI indexes are allocated in ascending order from left to right) | | |
| 0-2 | $\frac{1}{\sqrt{3}} \left[\begin{matrix}1 & 0 \\ 0 & 1 \\ 0 & 0\end{matrix}\right]$ | $\frac{1}{\sqrt{3}} \left[\begin{matrix}1 & 0 \\ 0 & 0 \\ 0 & 1\end{matrix}\right]$ | $\frac{1}{\sqrt{3}} \left[\begin{matrix}0 & 0 \\ 1 & 0 \\ 0 & 1\end{matrix}\right]$ |

**[Table 25]**

| TPMI index | W |
|---|---|
| 0 | $\frac{1}{\sqrt{3}} \left[\begin{matrix}1 & 0 & 0 \\ 0 & 1 & 0 \\ 0 & 0 & 1\end{matrix}\right]$ |

### <Third Embodiment: Method of Supporting SRS for Usage of Non-Codebook Usage for Terminal Supporting Three Transmission Antennas>

In an embodiment of the present disclosure, a method of supporting an SRS for usage of a non-codebook for a terminal supporting three transmission antennas will be described. The present embodiment may operate in combination with at least one other embodiment described in the present disclosure.

According to an embodiment of the present disclosure, the terminal supporting three transmission antennas may be configured with noncodebook for txConfig, which is higher layer signaling, for non-codebook-based PUSCH transmission as described above. In addition, the terminal supporting three transmission antennas may be configured, by the base station, with an SRS resource set in which usage, which is higher layer signaling, is configured to noncodebook, and the terminal may be configured with up to three SRS resources within the configured SRS resource set. Here, each SRS resource within the SRS resource set may consist of (may include) one antenna port.

According to an embodiment of the present disclosure, the terminal may receive an SRI field from the base station, and the received SRI field may include $\left⌈{log}_{2}\left({\sum }_{k = 1}^{min \left\{{L}_{max}, {N}_{SRS}\right\}} \left(\begin{matrix}{N}_{SRS} \\ k\end{matrix}\right)\right)\right⌉$ bits, where *N*_{SRS} may denote the number of SRS resources configured within the SRS resource set, and as described above, there may be up to three SRS resources.

When maxMIMO-Layers within PUSCH-ServingCellConfig, which is higher layer signaling, is configured for the terminal, *L*ₘₐₓ may follow a value configured by maxMIMO-Layers, and otherwise, *L*ₘₐₓ may follow a value of the maximum number of layers applicable during non-codebook usage PUSCH operation reported by the terminal.

The terminal may report the maximum number of layers for uplink transmission to be, in addition to 1, 2, or 4, a combination of at least one of 3, 5, 6, 7, or 8. In this case, the terminal may report the maximum supportable number of layers separately for codebook-based PUSCH transmission and noncodebook-based PUSCH transmission. In other words, information about the maximum supportable number of layers for the codebook-based PUSCH transmission and information about the maximum supportable number of layers for noncodebook-based PUSCH transmission may each be reported.

According to an embodiment of the present disclosure, when the terminal is configured with reportQuantity in CSI-ReportConfig, which is higher layer signaling, as one of cri-RSRP-Index, ssb-Index-RSRP-Index, cri-SINR-Index, and ssb-Index-SINR-Index, the terminal may report capabilitylndex in addition to L1-RSRP or L1-SINR reporting. The capabilitylndex may indicate the maximum number of SRS antenna ports supported by the terminal, and a value of the capabilitylndex may be associated with a specific panel of the terminal (that is, an association may be configured). Through a connection/association between the value of the capabilitylndex reported together with the L1-RSRP or L1-SINR reporting and the specific panel of the terminal, the base station may assume which panel of the terminal, from which a reference signal is received, is used to measure the L1-RSRP or L1-SINR value reported by the terminal. For example, when a specific panel of the terminal supports up to two SRS antenna ports, and the terminal reports L1-RSRP received through the panel supporting up to two SRS antenna ports, in a case where the terminal is configured with reportQuantity as cri-RSRP-Index as described above, the terminal may report 2 as the capabilitylndex value.

According to an embodiment of the present disclosure, the terminal may report, to the base station, UE capability regarding UE capability value reporting. Here, a UE capability report regarding the UE capability value reporting may be a report on candidate values that may be used as a value of capabilitylndex indicating the maximum number of SRS antenna ports supported by the terminal. In other words, in a case where {X, Y} is reported according to the UE capability value reporting, when the terminal reports capabilitylndex, capabilitylndex may be reported as a value of one of X or Y. Here, the terminal may report up to four values to the base station as the UE capability report regarding the UE capability value reporting, and each reported value may be selected as different values from among {1, 2, 4}. For example, the terminal may report three values to the base station, and at this time, the reported values may be 1, 2, and 4. In another example, the terminal may report two values to the base station, and at this time, the reported values may be 2 and 4 (or {1 and 2}, or {1 and 4}). In addition, the UE capability report regarding the UE capability value reporting may be reported for each frequency band. In particular, although the terminal may report up to four values to the base station as the UE capability report regarding the UE capability value reporting, a case where reported values may be selected as different values from among {1, 2, 4} is substantially a case where up to three different values may be reported, and thus may be a case where the UE capability to report up to four values is not maximally utilized.

According to an embodiment of the present disclosure, when the terminal supporting three transmission antennas reports the UE capability regarding the UE capability value reporting to the base station, the terminal may use a combination of at least one method from among embodiments described below.

### [Method 3-1]

According to an embodiment of the present disclosure, when the terminal supporting three transmission antennas reports the UE capability regarding the UE capability value reporting to the base station, the terminal may report up to four values to the base station, and the reported values may be selected as different values from among {1, 2, 3}. For example, the terminal may report three values of 1, 2, and 3 to the base station, and the base station, which has received the three values including 1, 2, and 3 from the terminal, may expect that, when the terminal reports the capabilitylndex, the terminal will report one of the three values by using 2 bits. For example, a 2-bit codepoint "00" may correspond to 1, a codepoint "01" may correspond to 2, a codepoint "10" may correspond to 3, and a codepoint "11" may be reserved. In this case, the value reported by the terminal being 3 may indicate that the maximum number of SRS ports of the terminal is 3, and when 3 is reported as the maximum number of SRS ports, the terminal supporting three transmission antennas may use, for SRS transmission, a method of not transmitting one of antenna ports of an SRS resource consisting of four antenna ports as in [Method 1-1] above, use an SRS resource consisting of one antenna port together with an SRS resource consisting two antenna ports as in [Method 1-2] above, use an SRS resource consisting of three antenna ports as in [Method 1-3] and [Method 1-4] above, or use a method according to a combination of at least one of [Method 1-1] to [Method 1-4] above.

### [Method 3-2]

According to an embodiment of the present disclosure, when the terminal supporting three transmission antennas reports the UE capability regarding the UE capability value reporting to the base station, the terminal may report up to four values to the base station, and the reported values may be selected as different values from among {1, 2, 4}. For example, the terminal may report three values of 1, 2, and 4 to the base station, and the base station may expect the terminal to report, when reporting capabilitylndex, one of the three values by using 2 bits. For example, a 2-bit codepoint "00" may correspond to 1, a codepoint "01" may correspond to 2, a codepoint "10" may correspond to 4, and a codepoint "11" may be reserved. At this time, the value reported by the terminal being 4 may indicate that the maximum number of SRS ports is 3. In other words, even when the terminal has reported 4, for the terminal supporting three transmission antennas, the base station may regard the reported value of 4 as 3. Such an interpretation may be applied, in particular, when the terminal supporting three transmission antennas uses the method of not transmitting one of the antenna ports of the SRS resource consisting of four antenna ports as in [Method 1-1] above.

In addition, when the terminal supporting four transmission antennas reports the UE capability regarding the UE capability value reporting to the base station, the terminal may report up to four values to the base station, and the reported values may be selected as different values from among {1, 2, 3, 4}. For example, the terminal may report three values of 1, 2, 3, and 4 to the base station, and the base station may expect the terminal to report, when reporting capabilitylndex, one of the four values by using 2 bits. For example, a 2-bit codepoint "00" may correspond to 1, a codepoint "01" may correspond to 2, a codepoint "10" may correspond to 3, and a codepoint "11" may correspond to 4. At this time, the value reported by the terminal being 4 may indicate that the maximum number of SRS ports is 4, and the value reported by the terminal being 3 may indicate that the maximum number of SRS ports is 3.

In addition, when the terminal supporting four transmission antennas reports the UE capability regarding the UE capability value reporting to the base station, up to 4 values may be reported to the base station, where the reported values may be selected as different values from among {1, 2, 4}, and in a case of 4, the terminal may report up to two times. For example, the terminal may report three values of 1, 2, 4, and 4 to the base station, and the base station may expect the terminal to report, when reporting capabilitylndex, one of the four values by using 2 bits. For example, a 2-bit codepoint "00" may correspond to 1, a codepoint "01" may correspond to 2, a codepoint "10" may correspond to 4, and a codepoint "11" may also correspond to 4. At this time, when the terminal reports codepoints mapped to 4, from among the codepoints mapped to 4, a value of a codepoint being 4 mapped to a smaller codepoint (i.e., "10") may indicate that the maximum number of SRS ports is 3, and a value of a codepoint being 4 mapped to a larger codepoint may indicate that the maximum number of SRS ports is 4.

In addition, when the terminal supporting four transmission antennas reports the UE capability regarding the UE capability value reporting to the base station, the terminal may report up to four values to the base station, and the reported values may be selected as different values from among {1, 2, 4}. For example, the terminal may report three values of 1, 2, and 4 to the base station, and the base station may expect the terminal to report, when reporting capabilitylndex, one of the three values by using 2 bits. For example, a 2-bit codepoint "00" may correspond to 1, a codepoint "01" may correspond to 2, a codepoint "10" may correspond to 4, and a codepoint "11" may also correspond to 4. At this time, the value reported by the terminal being 4 may indicate that the maximum number of SRS ports is 4. In other words, the terminal supporting four transmission antennas may not support the value of 3 when reporting the UE capability regarding the UE capability value reporting, and not supporting the value of 3 when reporting the UE capability regarding the UE capability value reporting may indicate that the terminal does not perform SRS transmission represented by three antenna ports.

According to an embodiment of the present disclosure, when the terminal includes up to 8 transmission antennas, in addition to the 1, 2, 3, and 4 described above, a combination of at least one of 5, 6, 7, or 8 may also be reported during the UE capability value reporting, and when there are more than 4 candidate values, a capabilityindex value reported by the terminal may be expressed in 3 bits.

According to an embodiment of the present disclosure, the terminal may report a reduced number of MIMO layers preferred by the terminal to the base station through reducedMIMO-LayersFR1-DL, reducedMIMO-LayersFR1-UL, reducedMIMO-LayersFR2-DL, reducedMIMO-LayersFR2-UL, reducedMIMO-LayersFR2-2-DL, or reducedMIMO-LayersFR2-2-UL within UEAssistancelnformation, which is higher layer signaling that the terminal may transmit, so as to solve a heat generation issue or to reduce power consumption of the terminal. When the terminal includes three transmission antennas, the terminal may report one natural number from among 1 to 3 to the base station for reducedMIMO-LayersFR1-UL, reducedMIMO-LayersFR2-UL, or reducedMIMO-LayersFR2-2-UL. When the terminal includes three transmission antennas, the base station may not expect the terminal to report a value of 4 to the base station through reducedMIMO-LayersFR1-UL, reducedMIMO-LayersFR2-UL, or reducedMIMO-LayersFR2-2-UL. When the terminal includes eight transmission antennas, the terminal may report one natural number from among 1 to 8 to the base station for reducedMIMO-LayersFR1-UL, reducedMIMO-LayersFR2-UL, or reducedMIMO-LayersFR2-2-UL.

According to an embodiment of the present disclosure, the terminal may be notified of a combination of at least one of [Method 3-1] or [Method 3-2] from the base station through a combination of at least one of higher layer signaling, MAC-CE signaling, or L1 signaling, or may expect a combination of at least one of [Method 3-1] or [Method 3-2] to be fixedly defined in the specification. In addition, when the terminal is notified of a combination of one or more specific methods from the base station through a combination of at least one of higher layer signaling, MAC-CE signaling, or L1 signaling, the terminal may be unable to support one or more other specific combinations of methods. For example, the terminal may expect [Method 3-1] to be fixedly defined in the specification, and the terminal may assume using [Method 3-1] for UE capability value reporting. In another example, the terminal may be notified of [Method 3-2] from the base station through a combination of at least one of higher layer signaling, MAC-CE signaling, or L1 signaling, and in this case, the terminal may consider that it has been notified by the base station that [Method 3-1] is not supported.

According to an embodiment of the present disclosure, the terminal may report to the base station, as UE capability, whether a combination of at least one of [Method 3-1] or [Method 3-2] is supportable. In this case, when the terminal reports to the base station, as UE capability, that a combination of one or more specific methods is supportable, the terminal may be considered to have reported that one or more other specific combinations of methods are not supportable. For example, the terminal may report to the base station whether [Method 3-1] is supportable. In another example, the terminal may report to the base station that [Method 3-2] is supportable, and such a UE capability report may indicate that the terminal is unable to support [Method 3-1].

### <Fourth Embodiment: Method of Transmitting Phase Tracking Reference Signal for Terminal Supporting Three Transmission Antennas>

Hereinafter, according to an embodiment of the present disclosure, methods by which the terminal capable of transmitting an uplink signal through three transmission antennas transmits a PTRS will be described in detail.

The terminal transmits the uplink signal through the three transmission antennas, and before defining a DCI field for indicating a DMRS associated with a PTRS transmitted together within the uplink signal transmitted by the terminal, a rule for a DMRS port with which each PTRS port may be associated will be first defined. The uplink signal transmitted through the three transmission antennas may be transmitted together with one or two PTRS ports. When codebook-based PUSCH transmission is supported, each PTRS port may pre-define a rule such that any PTRS port may be associated with a layer transmitted through a specific PUSCH antenna port, or a PTRS port may be associated with any layer without a separate rule. For example, when only one PTRS port is configured (as a specific example, in a case where maxNrofPorts within PTRS-UplinkConfig is configured to "n1"), the one PTRS port may be associated with one of any layers, and there is no need to consider a condition as to through which specific PUSCH antenna port the layer is transmitted. When the number of layers of a scheduled (or schedulable) PUSCH is greater than 1, the terminal may transmit the PTRS by associating the PTRS port with a DMRS port (layer) indicated by a specific DCI field (for example, a PTRS-DMRS association field) included in the DCI. When two PTRS ports are configured to be usable (as a specific example, in a case where maxNrofPorts within PTRS-UplinkConfig is configured to "n2"), a DMRS port that may be associated with a PTRS port of a PUSCH transmitted based on a codebook may be determined through a following method.

[Method 1] A layer (DMRS port) transmitted on a specific PUSCH antenna port may be associated with an uplink PTRS port. For example, the PTRS port 0 may be associated with a layer (or a DMRS port) transmitted on the PUSCH antenna port 1000 and/or the PUSCH antenna port 1002, and the PTRS port 1 may be associated with a layer (or a DMRS port) transmitted on the PUSCH antenna port 1001 and/or the PUSCH antenna port 1003. When the terminal supporting three transmission antennas does not support the PUSCH antenna port 1003 (or any one port from among the PUSCH antenna port 1000 to the PUSCH antenna port 1003), the PTRS port 1 may be associated with a layer (or DMRS port) transmitted on the PUSCH antenna port 1001. The specific example for describing [Method 1] is merely an example, and the PTRS port 0 may be associated with the layer (or the DMRS port) transmitted on the PUSCH antenna port 1001, and the PTRS port 1 may be associated with the layer (or the DMRS port) transmitted on the PUSCH antenna port 1000 and/or the PUSCH antenna port 1002. Alternatively, the PUSCH and the PTRS may be transmitted by defining an association between a PTRS port and a layer transmitted on a PUSCH antenna port in a different combination.

[Method 2] An uplink PTRS port may be associated with a layer (or a DMRS port) transmitted on any PUSCH antenna port. In [Method 2], a PTRS port may be associated with any layer (or any DMRS port) without any restriction, and the terminal may determine a DMRS port associated with a PTRS port transmitted together with a scheduled PUSCH according to a PTRS-DMRS association field indicated by scheduling DCI. Alternatively, in a case of a configured grant PUSCH, a PTRS-DMRS association indicated according to a determined rule may be determined (for example, when a configured grant type 1 PUSCH is scheduled, the terminal determines a DMRS port associated with a transmitted PTRS port by regarding the PTRS-DMRS association field as "0" or "00".

The terminal may determine a DMRS port associated with a PTRS port transmitted together with a scheduled codebook-based PUSCH, based on one of [Method 1] or [Method 2]. In following embodiments, for convenience of description, it is assumed that a DMRS port associated with a PTRS port transmitted together when transmitting a codebook-based PUSCH is determined according to [Method 1].

When the terminal supporting three transmission antennas supports non-codebook-based PUSCH transmission, ptrs-Portindex may be configured to n0 or n1 in a higher layer configuration of an SRS resource within an SRS resource set of which usage is "nonCodebook". When only one uplink PTRS port is supported, the higher layer parameter ptrs-Portindex may be configured to n0 (or n1). When two uplink PTRS ports are supported, the higher layer parameter ptrs-Portindex may be configured to n0 or n1.

A method of determining a layer (or a DMRS port) associated with a PTRS port from among up to three layers (or DMRS ports) according to the number of supported uplink PTRS ports, in a case where the terminal supporting three transmission antennas supports one or two uplink PTRS ports, will now be described in detail.

When two uplink PTRS ports are supported by the terminal supporting three transmission antennas, the number of bits required for each number of PUSCH layers to determine a layer (or a DMRS port) associated with a PTRS port is as follows.

When the number of layers of a scheduled codebook-based PUSCH is 1: The terminal transmits a PTRS port associated with one PUSCH layer, in association with the corresponding one layer. For example, when one PUSCH layer is transmitted on the PUSCH antenna port 1000 and/or the PUSCH antenna port 1002, the PTRS port 0 may be transmitted in association with the corresponding PUSCH layer (or the DMRS port for the corresponding PUSCH transmission). At this time, an index ${k}_{ref}^{RE}$ of a subcarrier on which the PTRS port is transmitted within a resource block (RB) is determined according to a port index of the DMRS port indicated for the corresponding PUSCH layer and an RRC parameter (e.g., resourceElementOffset) configured in a higher layer. When one PUSCH layer is transmitted on the PUSCH antenna port 1001, the PTRS port 1 may be transmitted in association with the corresponding PUSCH layer (or the DMRS port for the corresponding PUSCH transmission). At this time, the index ${k}_{ref}^{RE}$ of the subcarrier on which the PTRS port is transmitted within the RB is determined according to the port index of the DMRS port indicated for the corresponding PUSCH layer and the RRC parameter (e.g., resourceElementOffset) configured in the higher layer.

When the number of layers of a scheduled non-codebook-based PUSCH is 1: The terminal transmits a PTRS port associated with one PUSCH layer, in association with the corresponding one layer. For example, when one PUSCH layer is transmitted based on an SRS resource in which the higher layer parameter ptrs-Portlndex is configured to n0 (i.e., when the PUSCH is scheduled by indicating the SRS resource via the SRI field in the DCI or the higher layer parameter srs-Resourcelndicator), the PTRS port 0 may be transmitted in association with the corresponding PUSCH layer (or the DMRS port for the corresponding PUSCH transmission). At this time, the index ${k}_{ref}^{RE}$ of the subcarrier on which the PTRS port is transmitted within the RB is determined according to the port index of the DMRS port indicated for the corresponding PUSCH layer and the RRC parameter (e.g., resourceElementOffset) configured in the higher layer. When one PUSCH layer is transmitted based on the SRS resource in which the higher layer parameter ptrs-Portindex is configured to n1 (i.e., when the PUSCH is scheduled by indicating the SRS resource via the SRI field in the DCI or the higher layer parameter srs-Resourcelndicator), the PTRS port 1 may be transmitted in association with the corresponding PUSCH layer (or the DMRS port for the corresponding PUSCH transmission). At this time, the index ${k}_{ref}^{RE}$ of the subcarrier on which the PTRS port is transmitted within the RB is determined according to the port index of the DMRS port indicated for the corresponding PUSCH layer and the RRC parameter (e.g., resourceElementOffset) configured in the higher layer.

When the number of layers of the scheduled codebook-based PUSCH is 2: The terminal determines a PTRS port associated with the two layers according to the number of actual PTRS ports corresponding to a TPMI (or a precoder configured by the higher layer parameter precodingAndNumberOfLayers) to be applied to the scheduled PUSCH, and transmits one PTRS port in association with one of the two layers (when the number of actual PTRS ports is 1) or transmits two PTRS ports in association with respective layers (when the number of actual PTRS ports is 2). As a specific example, when the precoder indicates that the PUSCH of all two layers is to be transmitted on the PUSCH antenna port 1000 or the PUSCH antenna port 1002, the terminal determines the number of actual PTRS ports to be 1 and transmits only the PTRS port 0 together with the scheduled PUSCH. At this time, to determine the layer (or the DMRS port) associated with PTRS port 0 from among the two scheduled layers, an MSB 1 bit of the PTRS-DMRS association field included in the DCI scheduling the PUSCH may be referenced, or in a case of a configured grant-based PUSCH, the PTRS-DMRS association field may be regarded as "00". At this time, the terminal may ignore an LSB 1 bit of the PTRS-DMRS association field included in the DCI scheduling the PUSCH. As another specific example, when the precoder indicates that the PUSCH of all two layers is to be transmitted on the PUSCH antenna port 1003, the terminal determines the number of actual PTRS ports to be 1 and transmits only the PTRS port 1 together with the scheduled PUSCH. At this time, to determine the layer (or the DMRS port) associated with PTRS port 1 from among the two scheduled layers, the LSB 1 bit of the PTRS-DMRS association field included in the DCI scheduling the PUSCH may be referenced, or in a case of the configured grant-based PUSCH, the PTRS-DMRS association field may be regarded as "00". At this time, the terminal may ignore the MSB 1 bit of the PTRS-DMRS association field included in the DCI scheduling the PUSCH. As another specific example, when the precoder indicates that one layer is to be transmitted on the PUSCH antenna port 1000 and/or the PUSCH antenna port 1002 and the other layer is to be transmitted on the PUSCH antenna port 1001, the terminal determines the number of actual PTRS ports to be 2, transmits the PTRS port 0 in association with the layer (or the DMRS port) transmitted on the PUSCH antenna port 1000 and/or the PUSCH antenna port 1002, and transmits the PTRS port 1 in association with the layer (or the DMRS port) transmitted on the PUSCH antenna port 1001. At this time, the terminal may ignore both 2 bits of the PTRS-DMRS association field included in the DCI scheduling the PUSCH, or the terminal may expect that the base station sets the PTRS-DMRS association field to "00".

When the number of layers of the scheduled non-codebook-based PUSCH is 2: The terminal determines a PTRS port associated with the two layers according to the number of actual PTRS ports corresponding to an SRI (or the higher layer parameter srs-ResourceIndicator) to be applied to the scheduled PUSCH, and transmits one PTRS port in association with one of the two layers (when the number of actual PTRS ports is 1) or transmits two PTRS ports in association with respective layers (when the number of actual PTRS ports is 2). As a specific example, when the SRI indicates that the PUSCH of the two layers is to be transmitted on two SRS resources of which the higher layer parameters ptrs-Portindex are both configured to n0, the terminal determines the number of actual PTRS ports to be 1 and transmits only the PTRS port 0 together with the scheduled PUSCH. At this time, to determine the layer (or the DMRS port) associated with PTRS port 0 from among the two scheduled layers, the MSB 1 bit of the PTRS-DMRS association field included in the DCI scheduling the PUSCH may be referenced, or in a case of the configured grant-based PUSCH, the PTRS-DMRS association field may be regarded as "00". At this time, the terminal may ignore the LSB 1 bit of the PTRS-DMRS association field included in the DCI scheduling the PUSCH. As another specific example, when the SRI indicates that the PUSCH of the two layers is to be transmitted on the two SRS resources of which the higher layer parameters ptrs-Portindex are both configured to n1, the terminal determines the number of actual PTRS ports to be 1 and transmits only the PTRS port 1 together with the scheduled PUSCH. At this time, to determine the layer (or the DMRS port) associated with PTRS port 1 from among the two scheduled layers, the LSB 1 bit of the PTRS-DMRS association field included in the DCI scheduling the PUSCH may be referenced, or in a case of the configured grant-based PUSCH, the PTRS-DMRS association field may be regarded as "00". At this time, the terminal may ignore the MSB 1 bit of the PTRS-DMRS association field included in the DCI scheduling the PUSCH. As another specific example, when the SRI indicates one SRS resource of which the higher layer parameter ptrs-Portindex is configured to n0 and one SRS resource of which the higher layer parameter ptrs-Portindex is configured to n1, the terminal determines the number of actual PTRS ports to be 2, transmits the PTRS port 0 in association with the layer transmitted according to the SRS resource of which ptrs-Portindex is configured to n0, and transmits the PTRS port 1 in association with the layer transmitted according to the SRS resource of which ptrs-Portindex is configured to n1. At this time, the terminal may ignore both 2 bits of the PTRS-DMRS association field included in the DCI scheduling the PUSCH, or the terminal may expect that the base station sets the PTRS-DMRS association field to "00".

When the number of layers of a scheduled codebook-based PUSCH is 3: The terminal may determine the number of actual PTRS ports to be 2 according to the TPMI (or the precoder configured by the higher layer parameter precodingAndNumberOfLayers) to be applied to the scheduled PUSCH, and may recognize that one PTRS port of the two PTRS ports may be associated with two layers and the remaining one PTRS port may be associated with one layer. Also, to determine a layer (or a DMRS port) associated with the PTRS port that may be associated with two layers, the terminal may refer to the PTRS-DMRS association field included in the scheduling DCI, or in the case of the configured grant-based PUSCH, the PTRS-DMRS association field may be regarded as "00". As a specific example, when the precoder indicates that two layers are transmitted on the PUSCH antenna port 1000 or the PUSCH antenna port 1002 and one layer is transmitted on the PUSCH antenna port 1001, the terminal may determine the number of actual PTRS ports to be 2, transmit the PTRS port 0 in association with one of the two layers transmitted on the PUSCH antenna port 1000 or the PUSCH antenna port 1002, and transmit the PTRS port 1 in association with the one layer transmitted on the PUSCH antenna port 1001. At this time, to determine a layer (or a DMRS port) associated with PTRS port 0 from among the two layers, the MSB 1 bit of the PTRS-DMRS association field included in the DCI scheduling the PUSCH may be referenced, or in a case of the configured grant-based PUSCH, the PTRS-DMRS association field may be regarded as "00". At this time, the terminal may ignore the LSB 1 bit of the PTRS-DMRS association field included in the DCI scheduling the PUSCH. As another specific example, when the precoder indicates that one layer is transmitted on the PUSCH antenna port 1000 or the PUSCH antenna port 1002 and two layers are transmitted on the PUSCH antenna port 1001, the terminal may determine the number of actual PTRS ports to be 2, transmit the PTRS port 0 in association with the one layer transmitted on the PUSCH antenna port 1000 or PUSCH antenna port 1002, and transmit the PTRS port 1 in association with one of the two layers transmitted on the PUSCH antenna port 1001. At this time, to determine a layer (or a DMRS port) associated with PTRS port 1 from among the two layers, the LSB 1 bit of the PTRS-DMRS association field included in the DCI scheduling the PUSCH may be referenced, or in a case of the configured grant-based PUSCH, the PTRS-DMRS association field may be regarded as "00". At this time, the terminal may ignore the MSB 1 bit of the PTRS-DMRS association field included in the DCI scheduling the PUSCH.

When the number of layers of a scheduled non-codebook-based PUSCH is 3: The terminal may determine the number of actual PTRS ports to be 2 according to the SRI to be applied to the scheduled PUSCH, and may identify that one PTRS port of the two PTRS ports may be associated with two layers and the remaining one PTRS port may be associated with one layer. Also, to determine a layer (or a DMRS port) associated with the PTRS port that may be associated with two layers, the terminal may refer to the PTRS-DMRS association field included in the scheduling DCI, or in the case of the configured grant-based PUSCH, the PTRS-DMRS association field may be regarded as "00". As a specific example, when the SRI indicates that two layers are transmitted on two SRS resources of which the higher layer parameter ptrs-Portlndex is configured to n0 and one layer is transmitted on one SRS resource of which the higher layer parameter ptrs-Portindex is configured to n1, the terminal may determine the number of actual PTRS ports to be 2, transmit the PTRS port 0 in association with one of the two layers transmitted on the two SRS resources of which ptrs-Portindex is configured to n0, and transmit the PTRS port 1 in association with the one layer transmitted on the one SRS resource of which ptrs-Portindex is configured to n1. At this time, to determine a layer (or a DMRS port) associated with PTRS port 0 from among the two layers, the MSB 1 bit of the PTRS-DMRS association field included in the DCI scheduling the PUSCH may be referenced, or in a case of the configured grant-based PUSCH, the PTRS-DMRS association field may be regarded as "00". At this time, the terminal may ignore the LSB 1 bit of the PTRS-DMRS association field included in the DCI scheduling the PUSCH. As another specific example, when the SRI indicates that one layer is transmitted on one SRS resource of which the higher layer parameter ptrs-Portindex is configured to n0 and two layers are transmitted on two SRS resources of which the higher layer parameter ptrs-Portindex is configured to n1, the terminal may determine the number of actual PTRS ports to be 2, transmit the PTRS port 0 in association with the one layer transmitted on the one SRS resource of which ptrs-Portindex is configured to n0, and transmit the PTRS port 1 in association with one of the two layers transmitted on the two SRS resources of which ptrs-Portindex is configured to n1. At this time, to determine a layer (or a DMRS port) associated with PTRS port 1 from among the two layers, the LSB 1 bit of the PTRS-DMRS association field included in the DCI scheduling the PUSCH may be referenced, or in a case of the configured grant-based PUSCH, the PTRS-DMRS association field may be regarded as "00". At this time, the terminal may ignore the MSB 1 bit of the PTRS-DMRS association field included in the DCI scheduling the PUSCH.

With respect to the above-described six cases, it may be determined that only at most one DCI bit is required to determine a layer (or a DMRS port) associated with an uplink PTRS. In other words, when two uplink PTRS ports are supported for the terminal supporting three transmission antennas, it may be determined that remaining ignored bits, except for one bit required for the terminal to determine a DMRS port associated with a PTRS port, may be omitted.

Even when one uplink PTRS port is supported by the terminal supporting three transmission antennas, when the DMRS port associated with the PTRS may be indicated by the PTRS-DMRS association field configured with 1 bit, the base station and the terminal may configure the PTRS-DMRS association field in the DCI with 1 bit for a case where three terminal transmission antennas are supported. In other words, when a higher layer parameter for supporting three terminal transmission antennas is configured, a bit size of the PTRS-DMRS association field in the DCI may be configured as 1. A method of determining one layer associated with a PTRS port from among a plurality of layers (or DMRS ports), when one uplink PTRS port is supported by the terminal supporting three transmission antennas, so to use the PTRS-DMRS association field configured with 1 bit as described above will be described in detail below.

When a separate additional method of determining a DMRS associated with a PTRS is not considered and one uplink PTRS port is supported by the terminal supporting three transmission antennas, the number of bits required for each number of PUSCH layers to determine the layer (or the DMRS port) associated with the PTRS port is as follows.

When the number of layers of the scheduled PUSCH is 1: The terminal transmits one uplink PTRS port in association with one PUSCH layer (or one DMRS port), regardless of whether the PTRS-DMRS association field is indicated. At this time, the terminal may ignore the 2-bit PTRS-DMRS association field.

When the number of layers of the scheduled PUSCH is 2: The terminal transmits one PTRS port in association with one of two layers by referring to the PTRS-DMRS association field. At this time, to select one of the two layers, two codepoints from among four codepoints that may be indicated by the PTRS-DMRS association field configured with 2 bits may be used. In other words, the remaining two codepoints may be reserved, which may be interpreted as requiring only 1 bit among the 2-bit PTRS-DMRS association field.

When the number of layers of the scheduled PUSCH is 3: The terminal transmits one PTRS port in association with one of three layers by referring to the PTRS-DMRS association field. At this time, to select one of the three layers, three codepoints from among four codepoints that may be indicated by the PTRS-DMRS association field configured with 2 bits may be used. In other words, only the remaining one codepoint may be reserved, which may be interpreted as requiring all 2 bits of the PTRS-DMRS association field.

In other words, as described in the above examples, when no separate additional method of determining a DMRS associated with a PTRS is considered, a 2-bit indication field is required to select one layer to be associated with one uplink PTRS port for the terminal supporting three transmission antennas, considering all schedulable numbers of layers. In other words, as described above, unlike a case where only 1 bit is required to determine the DMRS port associated with the PTRS port when the terminal supporting three transmission antennas supports two uplink PTRS ports, 2 bits may be required to determine the DMRS port associated with the PTRS port when the terminal supporting three transmission antennas supports one uplink PTRS port. When the DMRS port associated with the PTRS port may be indicated using only 1 bit or less in a case where the terminal supporting three transmission antennas supports one uplink PTRS port, the number of bits of the PTRS-DMRS association field included in the DCI scheduling the PUSCH may be reduced from 2 bits to 1 bit. Alternatively, when configuring 2 bits for the PTRS-DMRS association field, 1 bit may be configured in the PTRS-DMRS association field and the remaining 1 bit may be configured using a reserved bit of another field in the DCI, for a total of 2 bits.

Based on the above features, a following DCI field may be considered as another field that may include a reserved bit in the DCI that may be used to reduce the number of bits of the PTRS-DMRS association field.

An "Antenna ports" field (indicates a field included in a DCI format 0_1 or a DCI format 0_2) is a field for indicating a DMRS port of a scheduled PUSCH. A bit size of the Antenna ports field may be determined through the type of DMRS (configured by the higher layer parameter dmrs-Type), a symbol length of the DMRS (configured by the higher layer parameter maxLength), and whether an enhanced DMRS type is configured (configured by a higher layer parameter enhanced-dmrs-Type). When a transform precoder is not configured, a PUSCH of rank 1 to maxRank (in a case of supporting codebook-based PUSCH transmission) or rank 1 to maxMIMO-Layer (in a case of supporting non-codebook-based PUSCH transmission) may be scheduled depending on the capability of the terminal, and the terminal may receive DMRS port information indicated by the Antenna port field by referring to a table according to the rank (or layer) of the scheduled PUSCH and the above-described DMRS configuration (DMRS type, DMRS symbol length, and the like). In this case, because the number of bits of the Antenna port field is determined by considering the number of all layers to which the terminal may be scheduled, only some bits (or codepoints) may be used in the Antenna port field for indicating the DMRS port for the PUSCH scheduled with a specific layer, and the remaining bits (or codepoints) may be reserved. For example, when the transform precoder is not available (disabled), dmrs-Type is configured to 1, enhanced-dmrs-Type is not configured, and maxLength is configured to 1, the number of bits of the Antenna ports field in the DCI format 0_1 (or 0_2, for convenience of description, the description is based on the DCI format 0_1, but the same may be equally applied to the PUSCH scheduled by the DCI format 0_2) of the corresponding terminal may be determined to be 3. When the DCI format 0_1 received by the terminal schedules a rank 1 (or layer 1) PUSCH, 6 codepoints from among the 3-bit Antenna ports field may be used to indicate the DMRS port, and 2 codepoints may be reserved. Alternatively, when the DCI format 0_1 received by the terminal schedules a rank 2 (or layer 2) PUSCH, 4 codepoints from among the 3-bit Antenna ports field may be used to indicate the DMRS port, and 4 codepoints may be reserved. Alternatively, when the DCI format 0_1 received by the terminal schedules a rank 3 (or layer 3) PUSCH, 1 codepoint from among the 3-bit Antenna ports field may be used to indicate the DMRS port, and 7 codepoints may be reserved. As determined from the examples of the PUSCH scheduled with the three different ranks above, for the Antenna ports field having the same number of bits, the number of reserved codepoints may vary depending on the number of ranks of the scheduled PUSCH.

As described above, following options may be used to support one uplink PTRS port for the terminal supporting three transmission antennas, and to use the reserved bits or codepoints among the Antenna ports field to indicate the DMRS port associated with one uplink PTRS port.

[Option 1] A DMRS port associated with one PTRS port may be determined by combining a PTRS-DMRS association field consisting of 1 bit and a new codepoint indicated by an Antenna ports field.

The DMRS port of a scheduled PUSCH may be indicated through the Antenna ports field, and additionally, a candidate layer to which the PTRS-DMRS association field is to be applied may be indicated. For example, a plurality of codepoints may be configured such that the Antenna ports field for indicating a DMRS port of a PUSCH scheduled with a certain rank may identically indicate a certain DMRS CDM group, a certain DMRS port, and a certain number of front-load symbols. When one codepoint from among the plurality of codepoints for indicating the same DMRS port is indicated through the Antenna ports field, the terminal may identify candidates of the DMRS port to which the PTRS port may be associated as some DMRS ports from among all DMRS ports (for example, one DMRS port or two DMRS ports from among the total of three DMRS ports). Then, the terminal may determine one DMRS port from among the identified candidates of some DMRS ports (for example, two DMRS ports) by referring to the PTRS-DMRS association field consisting of a certain number of bits (for example, 1 bit that is less than 2 bits), and associate the same with the PTRS port.

For example, a table defining a DMRS port indicated through the Antenna ports field may be configured as follows. Table 26 represents a table for determining a DMRS port when a rank of a PUSCH scheduled by the same DCI including an Antenna ports field is 3, in a case where a transform precoder is configured to disable, dmrs-Type is configured to 1, enhanced-dmrs-Type is not configured, and maxLength is configured to 2 such that the Antenna ports field consisting of 4 bits is indicated by the DCI.

**[Table 26]**

| Value | Number of DMRS CDM group(s) without data | DMRS port(s) | Number of front-load symbols | PUSCH antenna port group associated with PTRS |
|---|---|---|---|---|
| 0 | 2 | 0-2 | 1 | 1 |
| 1 | 2 | 0, 1, 4 | 2 | 1 |
| 2 | 2 | 2, 3, 6 | 2 | 1 |
| 3 | 2 | 0-2 | 1 | 2 |
| 4 | 2 | 0, 1, 4 | 2 | 2 |
| 5 | 2 | 2, 3, 6 | 2 | 2 |
| 6-15 | Reserved | Reserved | Reserved | Reserved |

Codepoints capable of indicating DMRS CDM groups without data as 2, DMRS ports 0 to 2, and the number of front-load symbols as 1 may be defined as 0 and 3. In other words, when the Antenna ports field indicates the codepoint 0 or the codepoint 3, the terminal may configure the DMRS ports 0 to 2 as a front-load DMRS of 1 symbol according to the two DMRS CDM groups for the DMRS port of the PUSCH scheduled by the DCI including the Antenna ports field. In this case, when the Antenna ports field indicates the codepoint 0, and the terminal transmits a codebook-based PUSCH and supports one uplink PTRS port, it may be understood that the terminal may transmits one uplink PTRS port in association with a DMRS port (or a layer) transmitted on the PUSCH antenna port 1000 and/or the PUSCH antenna port 1002. When codebook-based PUSCH transmission is supported, a PUSCH antenna port group 1 associated with PTRS in Table 26 may be defined as a PUSCH antenna port group including the PUSCH antenna port 1000 and/or the PUSCH antenna port 1002. Alternatively, a separate PUSCH antenna port group may not be defined in a table, but may be implicitly determined by the base station and the terminal according to a predefined rule. When the two layers of the scheduled PUSCH are transmitted on the PUSCH antenna port 1000 and/or the PUSCH antenna port 1002, the terminal may select one DMRS port by referring to the 1-bit PTRS-DMRS association field. When the Antenna ports field indicates codepoint 3, and the terminal transmits the codebook-based PUSCH and supports one uplink PTRS port, it may be understood that the terminal transmits one uplink PTRS port in association with a DMRS port (or a layer) transmitted on the PUSCH antenna port 1001. A PUSCH antenna port group 2 associated with PTRS in Table 26 may be defined as the PUSCH antenna port 1001. Alternatively, a separate PUSCH antenna port group may not be defined in a table, but may be implicitly determined by the base station and the terminal according to a predefined rule. When the scheduled PUSCH is transmitted on the PUSCH antenna port 1001, the terminal may select one DMRS port by referring to or ignoring the 1-bit PTRS-DMRS association field.

When non-codebook-based PUSCH transmission is supported, the PUSCH antenna port group 1 associated with PTRS in Table 26 may be defined as a layer (or a DMRS port) transmitted according to an SRS resource of which a value of a new parameter (for example, PUSCHPortGroup or any parameter performing the same function) in the higher layer parameter SRS-Resource is configured to "1". Alternatively, a separate PUSCH antenna port group may not be defined by the new parameter (for example, PUSCHPortGroup), but may be implicitly determined by the base station and the terminal according to a predefined rule (for example, DMRS ports transmitted according to first N SRS resources from among a plurality of SRS resources configured in an SRS resource set). Similarly, when non-codebook-based PUSCH transmission is supported, the PUSCH antenna port group 2 associated with PTRS in Table 26 may be defined as a layer (or a DMRS port) transmitted according to an SRS resource of which a value of a new parameter (for example, PUSCHPortGroup or any parameter performing the same function) in the higher layer parameter SRS-Resource is configured to "2". Alternatively, a separate PUSCH antenna port group may not be defined by the new parameter (for example, PUSCHPortGroup), but may be implicitly determined by the base station and the terminal according to a predefined rule (for example, DMRS ports transmitted according to last N SRS resources, or (N+1) to M (where M is the total number of SRS resources in an SRS resource set of which usage is configured to "nonCodebook") SRS resources from among the plurality of SRS resources configured in the SRS resource set).

Table 26 is merely one example of the higher layer parameter described above, and for other higher layer parameter configurations, codepoints that similarly indicate the same DMRS port but indicate a different PUSCH antenna port group with which the PTRS is associated may be configured. In an embodiment, a table for determining a DMRS port associated with a PTRS port may be newly defined by combining a PTRS-DMRS association field consisting of1 bit and a new codepoint indicated by an Antenna ports field. For example, a new table according to a DMRS configuration and the number of PUSCH layers may be defined by using the method of Option 1. A DMRS port associated with a PTRS port may be determined according to the defined table.

When a codepoint for this purpose are insufficient, only codepoints for indicating some of the DMRS ports may be defined as a plurality of codepoints for indicating different PUSCH antenna port groups. Based on the example of Table 26, the number of DMRS CDM groups without data is 2 and only the DMRS ports 0 to 2, of which the number of front-load symbols is 1, may be indicated by two different codepoint 0 and codepoint 3, while other DMRS ports (for example, DMRS ports indicated by codepoint 1 and codepoint 2) may be indicated by only one codepoint.

[Option 2] A DMRS port associated with one PTRS port may be determined using only an Antenna ports field without a PTRS-DMRS association field. The DMRS port associated with the PTRS port may be determined by referring only to a codepoint indicated by the Antenna ports field.

A DMRS port of a scheduled PUSCH may be indicated through the Antenna ports field, and additionally, a DMRS port associated with the PTRS may be indicated together. For example, a plurality of codepoints may be configured such that the Antenna ports field for indicating a DMRS port of a PUSCH scheduled with a certain rank may identically indicate a certain DMRS CDM group, a certain DMRS port, and a certain number of front-load symbols. When one codepoint from among the plurality of codepoints for indicating the same DMRS port is indicated through the Antenna ports field, the terminal may identify candidates of the DMRS port to which the PTRS port may be associated as one DMRS port from among all DMRS ports (for example, one DMRS port from among the total of three DMRS ports). Then, the terminal may associate one DMRS port with the PTRS port without receiving a separate PTRS-DMRS association field.

For example, a table defining a DMRS port indicated through the Antenna ports field may be configured as follows. Table 27 represents a table for determining a DMRS port when a rank of a PUSCH scheduled by the same DCI including an Antenna ports field is 3, in a case where a transform precoder is configured to disable, dmrs-Type is configured to 2, enhanced-dmrs-Type is not configured, and maxLength is configured to 2 such that the Antenna ports field consisting of 5 bits is indicated by the DCI.

**[Table 27]**

| Value | Number of DMRS CDM group(s) without data | DMRS port(s) | Number of front-load symbols | DMRS port associated with PTRS |
|---|---|---|---|---|
| 0 | 2 | 0-2 | 1 | 1st |
| 1 | 3 | 0-2 | 1 | 1st |
| 2 | 3 | 3-5 | 1 | 1st |
| 3 | 3 | 0, 1, 6 | 2 | 1st |
| 4 | 3 | 2, 3, 8 | 2 | 1st |
| 5 | 3 | 4, 5, 10 | 2 | 1st |
| 6 | 2 | 0-2 | 1 | 2nd |
| 7 | 3 | 0-2 | 1 | 2nd |
| 8 | 3 | 3-5 | 1 | 2nd |
| 9 | 3 | 0, 1, 6 | 2 | 2nd |
| 10 | 3 | 2, 3, 8 | 2 | 2nd |
| 11 | 3 | 4, 5, 10 | 2 | 2nd |
| 12 | 2 | 0-2 | 1 | 3rd |
| 13 | 3 | 0-2 | 1 | 3rd |
| 14 | 3 | 3-5 | 1 | 3rd |
| 15 | 3 | 0, 1, 6 | 2 | 3rd |
| 16 | 3 | 2, 3, 8 | 2 | 3rd |
| 17 | 3 | 4, 5, 10 | 2 | 3rd |
| 18-31 | Reserved | Reserved | Reserved | Reserved |

Codepoints that may indicate DMRS CDM groups without data as 3, DMRS port as 4, 5, and 10, and the number of front-load symbols as 2 may be defined as 5, 11, and 17. In other words, when the Antenna ports field indicates the codepoint 5 or the codepoint 11 or the codepoint 17, the terminal may configure the DMRS port 4, the DMRS port 5 and the DMRS port 10 as a front-load DMRS of 2 symbols according to the three DMRS CDM groups for the DMRS port of the PUSCH scheduled by the DCI including the Antenna ports field. At this time, when the Antenna ports field indicates the codepoint 5, the terminal may transmit one uplink PTRS port in association with the first DMRS port 4. Alternatively, when the Antenna ports field indicates the codepoint 5, the terminal may transmit one uplink PTRS port in association with the DMRS port (or the layer) transmitted on the PUSCH antenna port 1000. When the Antenna ports field indicates the codepoint 11, the terminal may transmit one uplink PTRS port in association with the second DMRS port 5. Alternatively, when the Antenna ports field indicates the codepoint 11, the terminal may transmit one uplink PTRS port in association with the DMRS port (or the layer) transmitted on the PUSCH antenna port 1001. When the Antenna ports field indicates the codepoint 17, the terminal may transmit one uplink PTRS port in association with the third DMRS port 10. Alternatively, when the Antenna ports field indicates the codepoint 17, the terminal may transmit one uplink PTRS port in association with the DMRS port (or the layer) transmitted on the PUSCH antenna port 1002. Table 27 is merely one example of the higher layer parameter described above, and for other higher layer parameter configurations, codepoints that similarly indicate the same DMRS port but indicate a different PUSCH antenna port group with which the PTRS is associated may be configured. When a codepoint for this purpose are insufficient, only codepoints for indicating some of the DMRS ports may be defined as a plurality of codepoints for indicating different PUSCH antenna port groups.

In an embodiment, a new table defining a DMRS port indicated through the Antenna ports field may be configured as follows. For example, a new table according to a DMRS configuration and the number of scheduled PUSCH layers may be defined by using the method of Option 2. A DMRS port associated with a PTRS port may be determined according to the newly defined table.

Option 2 may be used to determine a DMRS port associated with one PTRS port that may be associated with a plurality of DMRS ports, not only in a case of supporting one PTRS port but also in a case of supporting two PTRS ports.

The terminal may determine that one of the two PTRS ports may be associated with two layers, and the other PTRS port may be associated with one layer. Also, to determine a layer (or a DMRS port) associated with the PTRS port that may be associated with two layers, a table for DMRS port indication that may be configured as in Option 2 may be referenced.

As a specific example, it is assumed that a DMRS port is determined according to Table 27 as described above, and when a precoder applied to scheduled codebookbased PUSCH is indicated as $\frac{1}{\sqrt{3}} \left[\begin{matrix}1 & 0 & 0 \\ 0 & 1 & 0 \\ 0 & 0 & 1\end{matrix}\right]$ as defined in Table 25, a first layer and a third layer may be associated with the PTRS port 0 according to [Method 1] for a PTRS port that may be associated according to a PUSCH antenna port described above, and a second layer may be associated with the PTRS port 1 according to [Method 1]. Here, because the PTRS port 1 only needs to be transmitted in association with the second layer, there is no need to indicate a separate PTRS-DMRS association. However, because the PTRS port 0 needs to be transmitted in association with one of the first layer or the third layer, Table 27 may be referenced to indicate the association. For example, when the Antenna ports field in the same DCI scheduling the corresponding PUSCH indicates the codepoint 3, the DMRS CDM groups without data may be indicated as 3, and the DMRS port 0, the DMRS port 1, and the DMRS port 6 may be indicated, and the number of front-load symbols may be indicated as 2, and the PTRS port 0 may be transmitted in association with the first layer from among the first layer and the third layer. This is because the PTRS port 0 is the first of the two layers with which it may be associated. When the Antenna ports field in the same DCI scheduling the corresponding PUSCH indicates the codepoint 9, the DMRS CDM groups without data may be indicated as 3, and the DMRS port 0, the DMRS port 1, and the DMRS port 6 may be indicated, and the number of front-load symbols may be indicated as 2, and the PTRS port 0 may be transmitted in association with the third layer from among the first layer and the third layer. This is because the PTRS port 0 is the second of the two layers with which it may be associated. As such, when two PTRS ports are supported for the corresponding terminal and a DMRS port is indicated based on Table 27, codepoints 12 through 17 may be reserved without being used. Alternatively, in a case where two PTRS ports are supported for the terminal as follows, when the transform precoder is configured to be disabled, dmrs-Type is configured to 2, enhanced-dmrs-Type is not configured, and maxLength is configured to 2 such that the Antenna ports field consisting of 5 bits is indicated by DCI as in Table 43, a table for determining a DMRS port in a case where a rank of a PUSCH scheduled by the same DCI including the Antenna ports field is 3 may be defined.

**[Table 43]**

| Value | Number of DMRS CDM group(s) without data | DMRS port(s) | Number of front-load symbols | DMRS port associated with PTRS |
|---|---|---|---|---|
| 0 | 2 | 0-2 | 1 | 1st |
| 1 | 3 | 0-2 | 1 | 1st |
| 2 | 3 | 3-5 | 1 | 1st |
| 3 | 3 | 0, 1, 6 | 2 | 1st |
| 4 | 3 | 2, 3, 8 | 2 | 1st |
| 5 | 3 | 4, 5, 10 | 2 | 1st |
| 6 | 2 | 0-2 | 1 | 2nd |
| 7 | 3 | 0-2 | 1 | 2nd |
| 8 | 3 | 3-5 | 1 | 2nd |
| 9 | 3 | 0, 1, 6 | 2 | 2nd |
| 10 | 3 | 2, 3, 8 | 2 | 2nd |
| 11 | 3 | 4, 5, 10 | 2 | 2nd |
| 12-31 | Reserved | Reserved | Reserved | Reserved |

Alternatively, a DMRS port is indicated using Table 27 in the same manner as in a case where the number of supported PTRS ports is 1, and when the Antenna ports field in the same DCI scheduling the corresponding PUSCH indicates codepoint 15, the DMRS CDM groups without data may be indicated as 3, and the DMRS port 0, the DMRS port 1, and the DMRS port 6 may be indicated, and the number of front-load symbols may be indicated as 2, and the PTRS port 0 may be transmitted in association with the third layer from among the first layer and the third layer. As such, when the DMRS port associated with the PTRS port 0 is determined in this manner, codepoints 6 through 11 may be reserved without being used.

In an embodiment, in a case where two PTRS ports are supported, a new table for determining a DMRS port associated with one PTRS port that may be associated with a plurality of DMRS ports may be configured. For example, a new table according to a DMRS configuration and the number of scheduled PUSCH layers may be defined by using the method of Option 2. According to the newly defined table, a DMRS port associated with one PTRS port that may be associated with a plurality of DMRS ports may be determined.

[Option 3] The terminal may determine a DMRS port associated with a PTRS by using a reserved bit of the Antenna ports field as the PTRS-DMRS association field, or by using the reserved bit of the Antenna ports field together with the PTRS-DMRS association field.

Depending on layers of a scheduled PUSCH, some of codepoints indicated by the Antenna ports field may be reserved rather than indicating a DMRS port. For example, in a case where the transform precoder is configured to disable, dmrs-Type is configured to 2, enhanced-dmrs-Type is not configured, and maxLength is configured to 2 such that an Antenna ports field consists 5 bits is indicated by DCI, when a rank of a PUSCH scheduled by the same DCI including the Antenna ports field is 3, codepoint 0 through codepoint 5 are used to indicate the DMRS port and codepoint 6 through codepoint 31 are reserved. That is, it may be determined that in this case, only 3 bits from among the 5 bits are used to indicate the DMRS port of the 3-layer PUSCH, and 2 bits may be reserved. In this manner, the bits that may be reserved may be used for the PTRS-DMRS association field, and only the remaining Antenna ports field may be used to indicate the DMRS port. Obviously, when the number of layers of the scheduled PUSCH is not 3, the number of bits of the Antenna ports field to be used is defined according to the number of corresponding scheduled layers, and only the remaining reserved bits are used for the PTRS-DMRS association. For example, when higher layer parameters are configured in the same manner as in the above example (the transform precoder is configured to disable, dmrs-Type is configured to 2, enhanced-dmrs-Type is not configured, and maxLength is configured to 2) and the number of layers of the scheduled PUSCH is 1, all 5 bits of the Antenna ports field are used to indicate the DMRS port, and no bits may be allocated for the PTRS-DMRS association. When a reserved bit from among the bits of the Antenna ports field is unable to be secured in a specific scheduling situation, the reserved bit may be secured by not using a codepoint for indicating some DMRS ports.

### <Fifth Embodiment: Method of Transmitting PTRS when Terminal Supporting Three Transmission Antennas Performs Configured Grant-Based PUSCH Transmission>

Hereinafter, according to an embodiment of the present disclosure, methods of transmitting a PTRS during configured grant-based PUSCH (hereinafter, CG PUSCH) transmission when the terminal is capable of uplink transmission using three transmission antennas will be described in detail.

When three transmission antenna-based uplink signal transmission is supported for the terminal supporting three transmission antennas (for example, the base station configures the terminal with a new RRC parameter for 3Tx UL transmission), and RRC configuration-based CG PUSCH is supported, the terminal may interpret a PTRS-DMRS association value for the corresponding CG PUSCH as "0". At this time, the terminal may refer to antennaPort configured in rrc-ConfiguredUplinkGrant within ConfiguredGrantConfig to determine a DMRS port of the CG PUSCH. By combining the DMRS port of the CG PUSCH with the PTRS-DMRS association determined as "0", the terminal may determine the DMRS port associated with the PTRS port. At this time, as described in Fourth Embodiment above, the DMRS port may be determined by referring to a new table for additionally indicating a DMRS port with which a PTRS port may be associated. It is assumed that the terminal transmits CG PUSCH of rank 3 and supports one PTRS port. At this time, when the higher layer parameter antennaPort is configured as 2, and the DMRS port and the PUSCH antenna port group associated with the PTRS are determined by referring to the newly defined Table 26, the terminal may determine the DMRS ports 2 and 3 and 6, of which the DMRS CDM groups without data of the corresponding CG PUSCH is 2, as the DMRS ports, and may determine the number of front-load symbols as 2. In addition, one PTRS port may be associated with one DMRS port included in a first PUSCH antenna port group, and because the PTRS-DMRS association value is considered as "0", the terminal may determine that the DMRS port 2, which is the first DMRS port from among the DMRS port 2 or the DMRS port 6, included in the first PUSCH antenna port group, is associated with the PTRS port.

As another example, the DMRS port associated with the PTRS port may be determined by referring to a configured antennaPort value and a newly defined table for determining a DMRS port, without considering a separate PTRS-DMRS association value for determining a DMRS port with which a PTRS is associated. As in the previous example, it is assumed that the terminal transmits the CG PUSCH of rank 3 and supports one PTRS port. At this time, when the higher layer parameter antennaPort is configured as 13, and the DMRS port and the DMRS port associated with the PTRS port are determined by referring to the newly defined Table 27, the terminal may determine the DMRS ports 0 and 1 and 2, of which the DMRS CDM groups without data of the corresponding CG PUSCH is 3, as the DMRS ports, and may determine the number of front-load symbols as 1. In addition, because one PTRS port is indicated to be associated with the third DMRS port, the PTRS port may be transmitted in association with the DMRS port 2.

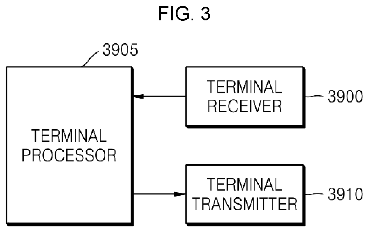

FIG. 3 is a diagram illustrating a structure of a terminal in a wireless communication system, according to an embodiment of the present disclosure.

Referring to FIG. 3, the terminal may include a transceiver referring to a terminal receiver 3900 and a terminal transmitter 3910, memory (not shown), and a terminal processor 3905 (or a terminal controller or processor). According to the above-described communication method of the terminal, the transceiver (the terminal receiver 1300 and the terminal transmitter 1310), the memory, and the terminal of the terminal may operate. However, the components of the terminal are not limited thereto. For example, the terminal may include more or fewer components than those described above. In addition, the transceiver, the memory, and the processor may be implemented as a single chip.

The transceiver may transmit or receive a signal to or from a base station. Here, the signal may include control information and data. In this regard, the transceiver may include an RF transmitter for up-converting and amplifying a frequency of a transmitted signal, and a RF receiver for amplifying low-noise and down-converting a frequency of a received signal. However, this is only an example of the transceiver and components of the transceiver are not limited to the RF transmitter and the RF receiver.

Also, the transceiver may receive and output, to the processor, a signal through a radio channel, and transmit a signal output from the processor through the radio channel.

The memory may store a program and data required for operations of the terminal. Also, the memory may store the control information or data included in the signal transmitted and received by the terminal. The memory may be a storage medium, such as read-only memory (ROM), random access memory (RAM), a hard disk, a CD-ROM, and a DVD, or a combination of storage media. Also, there may be a plurality of the memories.

The processor may control a series of processes such that the terminal operates according to the embodiment described above. For example, the processor may control the components of the terminal to receive a plurality of PDSCHs simultaneously by receiving DCI including two layers. There may be a plurality of processors, and the processor may perform operations of controlling the component(s) of the terminal by executing a program stored in the memory.

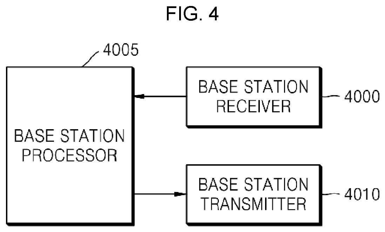

FIG. 4 is a diagram illustrating a structure of a base station in a wireless communication system, according to an embodiment of the present disclosure.

Referring to FIG. 4, the base station may include a transceiver referring to a base station receiver 4000 and a base station transmitter 4010, a memory (not shown), and a base station processor 4005 (or a base station controller or a processor). According to the above-described communication method of the base station, the transceiver (the base station receiver 1400 and the base station transmitter 1410), the memory, and the base station processor 1405 of the base station may operate. However, the components of the base station are not limited thereto. For example, the base station may include more or fewer components than those described above. In addition, the transceiver, the memory, and the processor may be implemented as a single chip.

The transceiver may transmit or receive a signal to or from a terminal. Here, the signal may include control information and data. In this regard, the transceiver may include an RF transmitter for up-converting and amplifying a frequency of a transmitted signal, and a RF receiver for amplifying low-noise and down-converting a frequency of a received signal. However, this is only an example of the transceiver and components of the transceiver are not limited to the RF transmitter and the RF receiver.

Also, the transceiver may receive and output, to the processor, a signal through a radio channel, and transmit a signal output from the processor through the radio channel.

The memory may store a program and data required for operations of the base station. Also, the memory may store the control information or data included in the signal transmitted and received by the base station. The memory may be a storage medium, such as read-only memory (ROM), random access memory (RAM), a hard disk, a CD-ROM, and a DVD, or a combination of storage media. Also, there may be a plurality of the memories.

The processor may control a series of processes such that the base station operates according to the embodiment of the present disclosure described above. For example, the processor may control each component of the base station to configure and transmit two layers of DCI including assignment information for a plurality of PDSCHs. There may be a plurality of processors, and the processor may perform operations of controlling the component(s) of the base station by executing a program stored in the memory.

The methods according to the embodiments described in the claims or the detailed description of the present disclosure may be implemented in hardware, software, or a combination of hardware and software.

When implemented in software, a computer-readable storage medium storing one or more programs (e.g., software modules) may be provided. The one or more programs stored in the computer-readable storage medium are configured for execution by one or more processors in an electronic device. The one or more programs include instructions causing the electronic device to execute the methods according to the embodiments described in the claims and the specification of the present disclosure.

The programs (e.g., software modules or software) may be stored in random access memory (RAM), non-volatile memory including flash memory, read-only memory (ROM), electrically erasable programmable read-only memory (EEPROM), a magnetic disc storage device, a compact disc-ROM (CD-ROM), a digital versatile disc (DVD), another optical storage device, or a magnetic cassette. Alternatively, the programs may be stored in memory including a combination of some or all of the above-mentioned storage media. A plurality of such memories may be included.

In addition, the programs may be stored in an attachable storage device accessible through any or a combination of communication networks such as the Internet, an intranet, a local area network (LAN), a wide LAN (WLAN), and a storage area network (SAN). Such a storage device may access an apparatus that performs an embodiment of the present disclosure via an external port. Furthermore, an additional storage device on the communication network may access an apparatus that performs an embodiment of the present disclosure.

In specific embodiments of the present disclosure described above, components included in the present disclosure are expressed in a singular or plural form according to the specific embodiments. However, the singular or plural form is appropriately selected for convenience of explanation and the present disclosure is not limited thereto. As such, a component expressed in a plural form may also be configured as a single component, and a component expressed in a singular form may also be configured as plural components.

The embodiments of the present disclosure described with reference to the present specification and the drawings are merely illustrative of specific examples to easily facilitate description and understanding of the present disclosure, and are not intended to limit the scope of the present disclosure. That is, it will be obvious to one of ordinary skill in the art that different modifications may be achieved based on the technical scope of the present disclosure. Also, the embodiments may be combined with each other as required. For example, a portion of one embodiment of the present disclosure and a portion of another embodiment of the present disclosure may be combined with each other to enable a base station and a terminal to operate. For example, portions of a first embodiment of the present disclosure and a second embodiment of the present disclosure may be combined with each other to enable a base station and a terminal to operate. Also, the embodiments are proposed based on a FDD LTE system, but other modifications based on the technical scope of the embodiments may be implemented on other systems, such as a TDD LTE system, a 5G or NR system, and the like.

In a drawing for describing a method of the present disclosure, an order of the description does not necessarily correspond to an order of execution, and the order may be changed or executed in parallel.

Alternatively, in the drawing for describing the method of the present disclosure, some components may be omitted and only some components may be included within a range that does not depart from the essence of the present disclosure.

Further, the method of the present disclosure may be performed in a combination of some or all of content included in each embodiment within a range that does not depart from the essence of the present disclosure.

According to an embodiment of the present disclosure, provided is a method performed by a terminal in a wireless communication system. The method may include receiving, from a base station, a first radio resource control (RRC) message including information related to a number of phase tracking reference signal (PTRS) ports and a second RRC message including configuration information for supporting three transmission antennas. The method may include receiving, from the base station, a downlink control information (DCI) message including information related to an association between the PTRS ports and demodulation reference signal (DMRS) ports. The method may include transmitting, to the base station, a PTRS through a DMRS port corresponding to a PTRS port that is determined based on the number of PTRS ports and the information about the associations between the PTRS ports and the DMRS ports.

In an embodiment, the information related to the number of PTRS ports may include a maximum number of PTRS ports, and the maximum number of PTRS ports may include a value of 1 or 2.

In an embodiment, the information related to the association between the PTRS ports and the DMRS ports may include indication information consisting of 1 bit or 2 bits.

In an embodiment, the method may further include, in case that the maximum number of PTRS ports is 1, determining the DMRS port corresponding to the PTRS port, based on the indication information consisting of 2 bits, included in the information related to the association between the PTRS ports and the DMRS ports. The method may further include, in case that the maximum number of PTRS ports is 2, determining the DMRS port corresponding to the PTRS port, based on the indication information consisting of 1 bit, included in the information related to the association between the PTRS ports and the DMRS ports.

In an embodiment, the configuration information for supporting the three transmission antennas may include sounding reference signal (SRS) resource configuration information consisting of four transmission antennas and a parameter for deactivating a specific antenna port.

According to an embodiment of the present disclosure, provided is a terminal for performing communication in a wireless communication system, the terminal including a transceiver and at least one processor coupled to the transceiver. The at least one processor may be configured to transmit, to the terminal, a first radio resource control (RRC) message including information related to a number of phase tracking reference signal (PTRS) ports and a second RRC message including configuration information for supporting three transmission antennas. The at least one processor may be configured to transmit, to the terminal, a downlink control information (DCI) message including information related to an association between the PTRS ports and demodulation reference signal (DMRS) ports. The at least one processor may be configured to receive, from the terminal, a PTRS through a DMRS port corresponding to a PTRS port that is determined based on the number of PTRS ports and the information related to the associations between the PTRS ports and the DMRS ports.

Various embodiments of the present disclosure have been described above. The description of the present disclosure above is only for illustrative purposes and embodiments of the present disclosure are not limited to the above-described embodiments. It will be understood by one of ordinary skill in the art that various changes in form and details may be readily made therein without departing from essential features and the scope of the present disclosure as defined by the following claims. The scope of the present disclosure is defined by the appended claims rather than the detailed description, and all changes or modifications within the scope of the appended claims and their equivalents will be construed as being included in the scope of the present disclosure.

A computer-readable storage medium may be provided in the form of a non-transitory storage medium. Here, the term "non-transitory storage medium" only denotes a tangible device and does not contain a signal (e.g., electromagnetic waves), and this term does not distinguish between a case where data is semi-permanently stored in the storage medium and a case where data is temporarily stored in the storage medium. For example, the "non-transitory storage medium" may include a buffer in which data is temporarily stored.

According to an embodiment, a method according to various embodiments disclosed in the present specification may be provided by being included in a computer program product. The computer program product may be traded between a seller and a buyer as a commodity. The computer program product may be distributed in the form of a machine-readable storage medium (e.g., compact disc read only memory (CD-ROM)), or may be distributed (e.g., downloadable or uploadable) online via an application store or between two user devices (e.g., smart phones) directly. When distributed online, at least part of the computer program product (e.g., a downloadable application) may be at least temporarily stored or temporarily generated in the machine-readable storage medium, such as a memory of the manufacturer's server, a server of the application store, or a relay server.

## Claims

1. A method performed by a terminal in a wireless communication system, the method comprising:
receiving, from a base station, a first radio resource control (RRC) message including information related to a number of phase tracking reference signal (PTRS) ports and a second RRC message including configuration information for supporting three transmission antennas;
receiving, from the base station, a downlink control information (DCI) message including information related to an association between the PTRS ports and demodulation reference signal (DMRS) ports; and
transmitting, to the base station, a PTRS through a DMRS port corresponding to a PTRS port that is determined based on the number of PTRS ports and the information related to the association between the PTRS ports and the DMRS ports.

2. The method of claim 1, wherein
the information related to the number of PTRS ports includes a maximum number of PTRS ports, and
the maximum number of PTRS ports includes a value of 1 or 2.

3. The method of claim 1, wherein
the information related to the association between the PTRS ports and the DMRS ports includes indication information consisting of 1 bit or 2 bits.

4. The method of claim 2, further comprising:
in case that the maximum number of PTRS ports is 1, determining the DMRS port corresponding to the PTRS port, based on the indication information consisting of 2 bits, included in the information related to the association between the PTRS ports and the DMRS ports; and
in case that the maximum number of PTRS ports is 2, determining the DMRS port corresponding to the PTRS port, based on the indication information consisting of 1 bit, included in the information related to the association between the PTRS ports and the DMRS ports.

5. The method of claim 1, wherein
the configuration information for supporting the three transmission antennas comprises
sounding reference signal (SRS) resource configuration information consisting of four transmission antennas and a parameter for deactivating a specific antenna port.

6. A method performed by a base station in a wireless communication
system, the method comprising:
transmitting, to a terminal, a first radio resource control (RRC) message including information related to a number of phase tracking reference signal (PTRS) ports and a second RRC message including configuration information for supporting three transmission antennas;
transmitting, to the terminal, a downlink control information (DCI) message including information related to an association between the PTRS ports and demodulation reference signal (DMRS) ports; and
receiving, from the terminal, a PTRS through a DMRS port corresponding to a PTRS port that is determined based on the number of PTRS ports and the information related to the association between the PTRS ports and the DMRS ports.

7. The method of claim 6, wherein
the information related to the number of PTRS ports includes a maximum number of PTRS ports, and
the maximum number of PTRS ports includes a value of 1 or 2.

8. The method of claim 6, wherein
the information related to the association between the PTRS ports and the DMRS ports includes indication information consisting of 1 bit or 2 bits.

9. The method of claim 7, further comprising:
in case that the maximum number of PTRS ports is 1, determining the DMRS port corresponding to the PTRS port, based on the indication information consisting of 2 bits, included in the information related to the association between the PTRS ports and the DMRS ports; and
in case that the maximum number of PTRS ports is 2, determining the DMRS port corresponding to the PTRS port, based on the indication information consisting of 1 bit, included in the information related to the association between the PTRS ports and the DMRS ports.

10. The method of claim 6, wherein
the configuration information for supporting the three transmission antennas comprises
sounding reference signal (SRS) resource configuration information consisting of four transmission antennas and a parameter for deactivating a specific antenna port.

11. A terminal for performing communication in a wireless communication system, the terminal comprising:
a transceiver; and
at least one processor coupled to the transceiver, wherein the at least one processor is configured to:
receive, from a base station, a first radio resource control (RRC) message including information related to a number of phase tracking reference signal (PTRS) ports and a second RRC message including configuration information for supporting three transmission antennas;
receive, from the base station, a downlink control information (DCI) message including information related to an association between the PTRS ports and demodulation reference signal (DMRS) ports; and transmit, to the base station, a PTRS through a DMRS port corresponding to a PTRS port that is determined based on the number of PTRS ports and the information related to the association between the PTRS ports and the DMRS ports.

12. The terminal of claim 11, wherein
the information related to the number of PTRS ports includes a maximum number of PTRS ports, and
the maximum number of PTRS ports includes a value of 1 or 2.

13. The terminal of claim 11, wherein
the information related to the association between the PTRS ports and the DMRS ports includes indication information consisting of 1 bit or 2 bits.

14. The terminal of claim 12, wherein
the at least one processor is further configured to:
in case that the maximum number of PTRS ports is 1, determine the DMRS port corresponding to the PTRS port, based on the indication information consisting of 2 bits, included in the information related to the association between the PTRS ports and the DMRS ports; and
in case that the maximum number of PTRS ports is 2, determine the DMRS port corresponding to the PTRS port, based on the indication information consisting of 1 bit, included in the information related to the association between the PTRS ports and the DMRS ports.

15. The terminal of claim 11, wherein
the configuration information for supporting the three transmission antennas comprises
sounding reference signal (SRS) resource configuration information consisting of four transmission antennas and a parameter for deactivating a specific antenna port.
